(19) Europäisches Patentamt
European Patent Office
Office européen des brevets

(11) **EP 3 708 625 A1**

(12) **EUROPEAN PATENT APPLICATION**

(43) Date of publication:
**16.09.2020 Bulletin 2020/38**

(21) Application number: **20164425.9**

(22) Date of filing: **08.08.2017**

(51) Int Cl.:
*C09D 201/00* (2006.01)     *C08F 2/22* (2006.01)
*C09D 5/02* (2006.01)     *C09D 133/00* (2006.01)
*C09D 157/04* (2006.01)     *C09D 157/06* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.08.2016 JP 2016155812
12.12.2016 JP 2016240189**

(62) Document number(s) of the earlier application(s) in
accordance with Art. 76 EPC:
**17839511.7 / 3 498 794**

(71) Applicant: **Asahi Kasei Kabushiki Kaisha
Tokyo 1000006 (JP)**

(72) Inventors:
• **YAMAUCHI, Toyoaki**
**Tokyo 101-8101 (JP)**
• **SASAKI, Megumi**
**Tokyo 101-8101 (JP)**
• **YOSHINUMA, Tomoharu**
**Tokyo 101-8101 (JP)**

(74) Representative: **Strehl Schübel-Hopf & Partner
Maximilianstrasse 54
80538 München (DE)**

Remarks:
This application was filed on 20-03-2020 as a
divisional application to the application mentioned
under INID code 62.

(54) **PROCESS FOR PRODUCING AQUEOUS COMPOSITE-PARTICLE DISPERSION**

(57) A method for producing an aqueous dispersion of composite particles, comprising a step of forming a polymer layer (B) on at least a part of a surface of a particle (A),
wherein
the aqueous dispersion of composite particles comprises composite particles where a polymer layer (B) is formed on at least a part of a surface of a particle (A),
the particle (A) is an inorganic particle or a polymer particle,
the polymer layer (B) comprises a polymer (B-3) having 0.01 to 5.0% by mass of an ethylenically unsaturated monomer unit having at least one acidic group, and
the step of forming a polymer layer (B) comprises
a step of forming the polymer (B-3) by emulsion polymerization in a state where an ethylenically unsaturated monomer having an acidic group is at least partially neutralized, in a dispersion liquid of the particle (A) whose pH is adjusted to 6 or more, and
a step of, thereafter, forming a polymer (B-4) comprising 50 to 100% by mass of a nonionic ethylenically unsaturated monomer unit and 5.0% by mass or less of an ethylenically unsaturated monomer unit having an acidic group or a polymer (B-5) including a basic non-polymerizable monomer unit containing a non-polymerizable monomer having a nitrogen functional group, by emulsion polymerization in an aqueous medium.

EP 3 708 625 A1

**Description**

Technical Field

The present invention relates to a coating composition dispersion, and an aqueous dispersion of composite particles and a method for producing the same.

Background Art

In recent years, a waterborne paint material obtained from an aqueous dispersion of composite particles, namely, latex has received attention as a material for shift of an organic solventborne system to waterborne system in the coating field.

A waterborne coating material obtained from an aqueous dispersion of composite particles, however, has the problem of still not exhibiting any sufficient physical properties in terms of pigment dispersibility, water resistance, contamination resistance, hardness, and the like, when compared with an organic solvent-based paint material.

The aqueous dispersion of composite particles here refers to a liquid in which a polymer is dissolved and/or dispersed in water.

Conventionally, for the purpose of enhancements in the functions of a polymer particle and an inorganic particle in water, there have been developed techniques for introduction of various functional groups into the surface of such a particle in the field of the aqueous dispersion of composite particles.

For example, a method has been proposed in which emulsion polymerization of a monomer compound including an ethylenically unsaturated monomer having a phosphoric acid group, into an aqueous dispersion of particles, is performed under an acidic condition. It is believed with respect to the method that a phosphoric acid group of the particle in the aqueous dispersion of particles can adsorb specifically to an inorganic substance and thus a part of a hydrophilic group such as a weak acid group in the aqueous dispersion of particles can be replaced with a phosphoric acid group to thereby allow for achievement of specific adsorption to an inorganic pigment and an enhancement in dispersing stability (see, for example, Patent Literature 1).

For the purpose of control of specific adsorption to an inorganic pigment, there has also been proposed a method in which multi-stage emulsion polymerization is performed under an acidic condition in order to allow a copolymer of a monomer compound including p-styrenesulfonic acid or methacrylic acid, in addition to a copolymer where the amount of an ethylenically unsaturated monomer having a phosphoric acid group is limited to be 1 to 4%, to co-exist in a particle in an aqueous dispersion particles (see, for example, Patent Literature 2).

Furthermore, there has been proposed a method for emulsion polymerization into an aqueous dispersion of particles, which includes 1st. stage emulsion polymerization of a monomer compound including an ethylenically unsaturated monomer having a carboxyl group, under an acidic condition, neutralization of the resultant with a basic compound, and thereafter 2nd. stage emulsion polymerization of a monomer compound including an ethylenically unsaturated monomer having a nitrogen functional group, under a basic condition (see, for example, Patent Literature 3).

If, however, the above method is performed with a usual nonionic ethylenically unsaturated monomer compound, water resistance of a coating film obtained from latex is deteriorated, and therefore a problem of the method is that an ethylenically unsaturated monomer having a cycloalkyl group and an ethylenically unsaturated monomer having a glycidyl group are forced to be essentially used as nonionic ethylenically unsaturated monomers for copolymerization. In addition, Patent Literature 3 discloses that, in the case of emulsion polymerization of an ethylenically unsaturated monomer having a nitrogen functional group and an ethylenically unsaturated monomer having an acidic group together with a usual nonionic ethylenically unsaturated monomer compound under a basic condition, water resistance of the resulting coating film is remarkably deteriorated.

Moreover, Patent Literature 4 below discloses, as a method for producing latex, a method which includes emulsion polymerization of a monomer compound including an ethylenically unsaturated monomer having a carboxyl group, under an acidic condition, and thereafter emulsion polymerization of an ethylenically unsaturated monomer compound including a monomer having a basic functional group, in the 2nd. stage emulsion polymerization without use of any ethylenically unsaturated monomer having a carboxyl group under a basic condition.

Furthermore, Patent Literature 5 below proposes a method which includes performing multi-stage emulsion polymerization where copolymerization of an ethylenically unsaturated monomer having a phosphoric acid group is performed at a low pH meaning acidity and any polymerization at other stage is performed at a pH around the neutral, in order that not only a copolymer where the amount of the ethylenically unsaturated monomer having a phosphoric acid group is limited to be 1 to 4%, but also a copolymer of a monomer compound including p-styrenesulfonic acid or methacrylic acid and an ethylenically unsaturated monomer compound including a monomer having a basic functional group as an aldehyde-reactive group-containing monomer is allowed to co-exist in a particle in aqueous particle latex, for the purpose of control of specific adsorption to an inorganic pigment.

Moreover, there has been disclosed a method in which a specified silane coupling agent is utilized in order to improve water resistance of a coating film in emulsion polymerization of an ethylenically unsaturated monomer having a nitrogen functional group compound, into an aqueous dispersion of particle (see, for example, Patent Literature 6).

The method, however, has the problems of causing dispersing stability easily impaired in the emulsion polymerization and causing the limitation on the amount of the silane coupling agent used.

Furthermore, there has been proposed a method of preparing a particle, including copolymerizing an ethylenically unsaturated monomer having a nitrogen functional group, as a part of a component of a core particle, by emulsion polymerization into an aqueous dispersion of particles, and thereafter forming a shell polymer without use of any ethylenically unsaturated monomer having a weak acid group (see, for example, Patent Literature 7).

The method, however, has the problem of imparting dispersing stability not sufficient for practical use.

In addition, there has been proposed a composition which is a formulation of an acrylic emulsion obtained by emulsion polymerization of a monomer compound including an ethylenically unsaturated monomer having a nitrogen functional group, into an aqueous dispersion of particles, and an inorganic particle (see, for example, Patent Literature 8).

A problem, however, is that dispersing stability of such a mixed formulation is very inferior to result in coagulation during storage.

Citation List

Patent Literatures

Patent Literature 1: Japanese Patent No. 4792052
Patent Literature 2: Japanese Patent No. 5837961
Patent Literature 3: Japanese Patent No. 3215329
Patent Literature 4: Japanese Patent No. 5919131
Patent Literature 5: Japanese Patent No. 5837961
Patent Literature 6: Japanese Patent Laid-Open No. 2007-246800
Patent Literature 7: National Publication of International Patent Application No. 2003-506545
Patent Literature 8: Japanese Patent No. 2998604

Summary of Invention

Technical Problem

While there have been conventionally proposed techniques for providing an aqueous dispersion of composite particles by formation of a polymer having various functional groups in an aqueous dispersion of particles by polymerization, no sufficient characteristics have still been achieved.

For example, a problem is that water resistance of a coating film obtained is deteriorated, in the case where emulsion polymerization into an aqueous dispersion of particles is made by 1st. stage emulsion polymerization of a monomer compound including an ethylenically unsaturated monomer having a weakly acidic group such as a carboxyl group, under an acidic condition, neutralization of the resultant with a basic compound, and thereafter 2nd. stage emulsion polymerization of the monomer compound including an ethylenically unsaturated monomer having a weakly acidic group such as a carboxyl group, under a basic condition.

Moreover, a problem is that water resistance of a coating film obtained is remarkably deteriorated, in the case where emulsion polymerization into an aqueous dispersion of particles is performed by 1st. stage emulsion polymerization of a monomer compound including an ethylenically unsaturated monomer having a weakly acidic group such as a carboxyl group, under an acidic condition, neutralization of the resultant with a basic compound, and thereafter 2nd. stage emulsion polymerization of the monomer compound including an ethylenically unsaturated monomer having a weakly acidic group such as a carboxyl group and an ethylenically unsaturated monomer having a nitrogen functional group.

Furthermore, a problem is that dispersing stability in production of a dispersion particle cannot be ensured, in the case where emulsion polymerization of a monomer compound including an ethylenically unsaturated monomer having a weakly acidic group such as a carboxyl group and an ethylenically unsaturated monomer having a nitrogen functional group is performed under an acidic condition.

Therefore, in order to provide latex prepared by copolymerization of an ethylenically unsaturated monomer having a basic functional group, it is necessary to perform 1st. stage emulsion polymerization under an acidic condition by use of a monomer compound including an ethylenically unsaturated monomer having a carboxyl group as an ethylenically unsaturated monomer having an acidic group, neutralize the resultant with a basic compound, and thereafter perform 2nd. stage emulsion polymerization by use of a monomer compound including an ethylenically unsaturated monomer having a basic functional group, under a basic condition. A problem, however, is that the "ethylenically unsaturated monomer having a carboxyl group" is needed in a large amount in order to ensure dispersing stability during emulsion polymerization and therefore sufficient water resistance is not obtained in a coating film using the latex.

Furthermore, another problem is that cyclohexyl methacrylate and butyl methacrylate are essentially used in the 1st. stage and/or 2nd. stage emulsion polymerization in order to solve the problem about water resistance.

In addition, a problem is that composite particles obtained by 1st. stage emulsion polymerization with a particle which is an inorganic particle as a core particle, or which is, as a core particle, a particle coated with silica, including a core particle and a silica layer with which at least a part of a surface of the core particle is coated, the particle being basic composite particles stabilized by a sodium ion or a potassium ion, and 2nd. stage emulsion polymerization of a monomer compound including an ethylenically unsaturated monomer having a weakly acidic group with basicity being maintained exhibits a zeta potential lower value than a usual minus value and thus causes coagulation with an inorganic pigment particle usually having a minus zeta potential value, due to a minus potential difference (hetero-coagulation due to the same sign), resulting in a remarkable deterioration in admixture stability.

An object of the present invention is then to provide an aqueous dispersion of composite particles which is favorable in dispersing stability in production of the aqueous dispersion of composite particles, which is excellent in admixture stability with an inorganic pigment particle in formation of a paint material, and which is excellent in water resistance and weather resistance of a coating film, and a coating composition dispersion containing the aqueous dispersion of composite particles.

Solution to Problem

The present inventors have made intensive studies in order to solve the above conventional problems, and as a result, have found that the above conventional problems can be solved by an aqueous dispersion of composite particles including an aqueous medium and composite particles dispersed in the aqueous medium, in which the composite particles have an inorganic particle or a polymer particle as a core particle (particle (A)), and has a polymer layer (B) with which at least a part of a surface of the particle (A) is encapsulated, and contains a phosphorus atom at a predetermined mass rate based on the total mass of the composite particles, and the zeta potential in the aqueous dispersion of composite particles at 60°C in the pH range of 7 to 11 is specified within a predetermined numerical value range, and a coating composition dispersion containing the aqueous dispersion of composite particles, thereby leading to completion of the present invention.

That is, the present invention is as follows.

[1] A coating composition dispersion comprising:

at least one of an aqueous dispersion of composite particles (C) comprising

an aqueous medium containing water, and
composite particles dispersed in the aqueous medium, in which the composite particles have a particle (A) and a polymer layer (B) with which at least a part of a surface of the particle (A) is coated, and comprises 0.12% by mass or less of a phosphorus atom based on a total mass of the composite particles; and

an another aqueous dispersion of polymer particles (D) ;
wherein
a weather resistance modification value represented by the following formula $|\Delta b_0 - \Delta b| / (\Delta b_0 + \Delta b)$ is 0.15 or more, the formula being represented by a color difference $\Delta b$ value of a coating film of a coating composition dispersion having from 100/0 to 1/99 of a solid content mass ratio of the aqueous dispersion of composite particles (C) and the another aqueous dispersion of polymer particles (D), (solid content mass of component (C)/solid content mass of component (D)), and a color difference $\Delta b_0$ value of a coating film of the another aqueous dispersion of polymer particles (D).

[2] An aqueous dispersion of composite particles (C) comprising:

an aqueous medium containing water; and
composite particles dispersed in the aqueous medium;
wherein
the composite particles have a particle (A) and a polymer layer (B) with which at least a part of a surface of the particle (A) is coated, and comprises 0.001 to 0.12% by mass of a phosphorus atom based on a total mass of the composite particles;

the particle (A) is an inorganic particle or a polymer particle; and

a zeta potential of the composite particles in the aqueous dispersion of composite particles at 60°C is -10 mV to -69 mV at any one of pH in the range of 7 to 11 of the aqueous dispersion of composite particles.

[3] The coating composition dispersion according to the above [1], wherein

the aqueous dispersion of composite particles (C) comprises an aqueous medium containing water, and composite particles dispersed in the aqueous medium;

the composite particles have a particle (A) and a polymer layer (B) with which at least a part of a surface of the particle (A) is coated, and comprises 0.001 to 0.12% by mass of a phosphorus atom based on a total mass of the composite particles;

the particle (A) is an inorganic particle or a polymer particle; and

a zeta potential of the composite particles in the aqueous dispersion composite particles at 60°C is -10 mV to -69 mV at any one of pH in the range of 7 to 11 of the aqueous dispersion of composite particles.

[4] The aqueous dispersion of composite particles (C) according to the above [2], wherein

a zeta potential of the composite particles in the aqueous dispersion of composite particles (C) at 25°C after dialysis is -5 mV to -59 mV at any one of pH in the range of 7 to 11.

[5] The coating composition dispersion according to the above [1] or [3], wherein

a zeta potential of the composite particles in the aqueous dispersion of composite particles (C) at 25°C after dialysis is -5 mV to -59 mV at any one of pH in the range of 7 to 11.

[6] The aqueous dispersion of composite particles (C) according to the above [2] or [4], wherein

the polymer layer (B) comprises a polymer having an ethylenically unsaturated monomer unit having an acidic group; and

the polymer layer (B) comprises a polymer (B-3) having 0.01 to 5.0% by mass of an ethylenically unsaturated monomer unit having an acidic group based on an amount of the entire monomer in a step of forming the polymer having an ethylenically unsaturated monomer unit having an acidic group, as the polymer having an ethylenically unsaturated monomer unit having an acidic group.

[7] The aqueous dispersion of composite particles (C) according to any one of the above [2], [4] and [6], wherein

the polymer layer (B) comprises a polymer (B-1) having a weakly acidic monomer unit derived from an ethylenically unsaturated monomer having a phosphoric acid group; and

the polymer layer (B) comprises a polymer having 0.1 to 5.0% by mass of a weakly acidic monomer unit derived from an ethylenically unsaturated monomer having a phosphoric acid group based on an amount of the entire monomer in a step of forming the polymer (B-1) having a weakly acidic monomer unit derived from an ethylenically unsaturated monomer having a phosphoric acid group, as the polymer (B-1) having a weakly acidic monomer unit derived from an ethylenically unsaturated monomer having a phosphoric acid group.

[8] The coating composition dispersion according to any one of the above [1], [3] and [5], wherein

the polymer layer (B) comprises a polymer having an ethylenically unsaturated monomer unit having an acidic group; and

the polymer layer (B) comprises a polymer (B-3) having 0.01 to 5.0% by mass of an ethylenically unsaturated monomer unit having an acidic group based on an amount of the entire monomer in a step of forming the polymer having an ethylenically unsaturated monomer unit having an acidic group, as the polymer having an ethylenically unsaturated monomer unit having an acidic group.

[9] The coating composition dispersion according to any one of the above [1], [3], [5] and [8], wherein

the polymer layer (B) comprises a polymer (B-1) having a weakly acidic monomer unit derived from an ethylenically unsaturated monomer having a phosphoric acid group; and

the polymer layer (B) comprises a polymer having 0.1 to 5.0% by mass of a weakly acidic monomer unit derived from an ethylenically unsaturated monomer having a phosphoric acid group based on an amount of the entire monomer in a step of forming the polymer (B-1) having a weakly acidic monomer unit derived from an ethylenically unsaturated monomer having a phosphoric acid group, as the polymer (B-1) having a weakly acidic monomer unit derived from an ethylenically unsaturated monomer unit having a phosphoric acid group.

[10] The aqueous dispersion of composite particles (C) according to any one of the above [2], [4], [6] and [7], wherein

the polymer layer (B) comprises a polymer (B-2) having a basic monomer unit derived from an ethylenically unsaturated monomer having a nitrogen functional group; and

the polymer layer (B) comprises a polymer having 0.05 to 50% by mass of a basic monomer unit derived from an ethylenically unsaturated monomer having a nitrogen functional group based on an amount of the entire monomer in a step of forming the polymer (B-2) having a basic monomer unit derived from an ethylenically unsaturated monomer having a nitrogen functional group, as the polymer (B-2) having a basic monomer unit derived from an ethylenically unsaturated monomer having a nitrogen functional group.

[11] The aqueous dispersion of composite particles (C) according to any one of claims [2], [4], [6] and [7], wherein the polymer layer (B) comprises a polymer (B-5) comprising a basic non-polymerizable monomer unit containing a non-polymerizable monomer having a nitrogen functional group; and

the polymer layer (B) comprises a polymer comprising a nitrogen functional group-containing non-polymerizable monomer unit having 0.05 to 50% by mass of a basic non-polymerizable monomer unit based on an amount of the entire monomer in a step of forming the polymer (B-5) comprising a basic non-polymerizable monomer unit containing a non-polymerizable monomer having a nitrogen functional group, as the polymer (B-5) comprising a basic non-polymerizable monomer unit containing a non-polymerizable monomer having a nitrogen functional group.

[12] The aqueous dispersion of composite particles (C) according to the above [11], wherein

the polymer layer (B) comprises a polymer (B-2) having a basic monomer unit derived from an ethylenically unsaturated monomer having a nitrogen functional group and a polymer (B-5) comprising a basic non-polymerizable monomer unit containing a non-polymerizable monomer having a nitrogen functional group,

a step of forming the polymer (B-2) having a basic monomer unit derived from an ethylenically unsaturated monomer having a nitrogen functional group and a step of forming the polymer (B-5) comprising a basic non-polymerizable monomer unit containing a non-polymerizable monomer having a nitrogen functional group are performed at the same time or at different stages, and

a polymer comprising a nitrogen functional group-containing non-polymerizable monomer unit having 0.02 to 30% by mass of a basic monomer unit derived from an ethylenically unsaturated monomer having a nitrogen functional group and 0.02 to 30% by mass of a basic non-polymerizable monomer unit based on an amount of the entire monomer in the step of forming the polymer (B-2) and the step of forming the polymer (B-5) is comprised as the polymer (B-2) and the polymer (B-5).

[13] The coating composition dispersion according to any one of the above [1], [3], [5], [8] and [9], wherein

the polymer layer (B) comprises a polymer (B-2) having a basic monomer unit derived from an ethylenically unsaturated monomer having a nitrogen functional group; and

the polymer layer (B) comprises a polymer having 0.05 to 50% by mass of a basic monomer unit derived from an ethylenically unsaturated monomer having a nitrogen functional group based on an amount of the entire monomer in a step of forming the polymer (B-2) having a basic monomer unit derived from an ethylenically unsaturated monomer having a nitrogen functional group, as the polymer (B-2) having a basic monomer unit derived from an ethylenically unsaturated monomer having a nitrogen functional group.

[14] The coating composition dispersion according to any one of the above [1], [3], [5], [8] and [9], wherein

the polymer layer (B) comprises a polymer (B-5) comprising a basic non-polymerizable monomer unit containing a non-polymerizable monomer having a nitrogen functional group; and

the polymer layer (B) comprises a polymer comprising a nitrogen functional group-containing non-polymerizable monomer unit having 0.05 to 50% by mass of a basic non-polymerizable monomer unit based on an amount of the entire monomer in a step of forming the polymer (B-5) comprising a basic non-polymerizable monomer unit containing a non-polymerizable monomer having a nitrogen functional group, as the polymer (B-5) comprising a basic non-polymerizable monomer unit containing a non-polymerizable monomer having a nitrogen functional group.

[15] The coating composition dispersion according to the above [14], wherein

the polymer layer (B) comprises a polymer (B-2) having a basic monomer unit derived from an ethylenically unsaturated monomer having a nitrogen functional group and a polymer (B-5) comprising a basic non-polymerizable monomer unit containing a non-polymerizable monomer having a nitrogen functional group,

a step of forming the polymer (B-2) having a basic monomer unit derived from an ethylenically unsaturated monomer having a nitrogen functional group and a step of forming the polymer (B-5) comprising a basic non-polymerizable monomer unit containing a non-polymerizable monomer having a nitrogen functional group are performed at the same time or at different stages, and

a polymer comprising a nitrogen functional group-containing non-polymerizable monomer unit having 0.02 to 30% by mass of a basic monomer unit derived from an ethylenically unsaturated monomer having a nitrogen functional group and 0.02 to 30% by mass of a basic non-polymerizable monomer unit based on an amount of the entire monomer in the step of forming the polymer (B-2) and the step of forming the polymer (B-5) is comprised as the polymer (B-2) and the polymer (B-5).

[16] The aqueous dispersion of composite particles (C) according to any one of the above [10] to [12], wherein a mass ratio of the polymer (B-2)/the polymer (B-1) is 0.01 to 50.

[17] The coating composition dispersion according to any one of the above [13] to [15], wherein a mass ratio of the polymer (B-2)/the polymer (B-1) is 0.01 to 50.

[18] The aqueous dispersion of composite particles (C) according to any one of the above [2], [4], [6], [7], [10], [11], [12] and [16], wherein a mass ratio of the polymer layer (B)/the particle (A) is 0.01 to 100.

[19] The coating composition dispersion according to any one of the above [1], [3], [5], [8], [9], [13], [14], [15] and [17], wherein a mass ratio of the polymer layer (B)/the particle (A) is 0.01 to 100.

[20] The aqueous dispersion of composite particles (C) according to any one of the above [2], [4], [6], [7], [10], [11], [12], [16] and [18], wherein

the zeta potential of the composite particles in the aqueous dispersion of composite particles at 60°C is a zeta potential calculated according to a method using the Smoluchowski equation, from an electrical mobility of a measurement dispersion obtained by dilution of an aqueous dispersion of composite particles having a pH of 7 to 11 so that a KCl concentration is 10 mM, and

when the aqueous dispersion of composite particles has a pH of less than 7, the measurement dispersion is prepared by adjustment of the pH within the range of 7 to 11 due to addition of an aqueous NaOH solution, and thereafter dilution of the aqueous dispersion of composite particles with the aqueous KCl solution.

[21] The coating composition dispersion according to any one of the above [3], [5], [8], [9], [13], [14], [15], [17] and [19], wherein

the zeta potential of the composite particles in the aqueous dispersion of composite particles at 60°C is a zeta potential calculated according to a method using the Smoluchowski equation, from an electrical mobility of a measurement dispersion obtained by dilution of an aqueous dispersion of composite particles having a pH of 7 to 11 so that a KCl concentration is 10 mM, and

when the aqueous dispersion of composite particles has a pH of less than 7, the measurement dispersion is prepared by adjustment of the pH within the range of 7 to 11 due to addition of an aqueous NaOH solution, and thereafter dilution of the aqueous dispersion of composite particles with the aqueous KCl solution.

[22] The aqueous dispersion of composite particles (C) according to any one of the above [4], [6], [7], [10], [11], [12], [16], [18] and [20], wherein

the zeta potential of the composite particles in the aqueous dispersion of composite particles at 25°C after dialysis is a zeta potential calculated according to a method using the Smoluchowski equation, from an electrical mobility of a measurement dispersion obtained by dialysis of an aqueous dispersion of composite particles diluted with an aqueous 1 mM NaOH solution and dilution of the aqueous dispersion of composite particles having a pH of 7 to 11, after dialysis, so that a KCl concentration is 10 mM, and

when the aqueous dispersion of composite particles after dialysis has a pH of less than 7, the measurement dispersion is prepared by adjustment of the pH within the range of 7 to 11 due to addition of an aqueous NaOH solution, and thereafter dilution of the aqueous dispersion of composite particles with an aqueous KCl solution.

[23] The coating composition dispersion according to any one of the above [5], [8], [9], [13], [14], [15], [17], [19] and [21], wherein

the zeta potential of the composite particles in the aqueous dispersion of composite particles at 25°C after dialysis is a zeta potential calculated according to a method using the Smoluchowski equation, from an electrical mobility of a measurement dispersion obtained by dialysis of an aqueous dispersion of composite particles diluted with an aqueous 1 mM NaOH solution and dilution of the aqueous dispersion of composite particles having a pH of 7 to 11, after dialysis, so that a KCl concentration is 10 mM, and

when the aqueous dispersion of composite particles after dialysis has a pH of less than 7, the measurement dispersion is prepared by adjustment of the pH within the range of 7 to 11 due to addition of an aqueous NaOH solution, and thereafter dilution of the aqueous dispersion of composite particles with an aqueous KCl solution.

[24] A method for producing an aqueous dispersion of composite particles, comprising a step of forming a polymer layer (B) on at least a part of a surface of a particle (A),

wherein

the aqueous dispersion of composite particles comprises composite particles where a polymer layer (B) is formed on at least a part of a surface of a particle (A),

the particle (A) is an inorganic particle or a polymer particle,

the polymer layer (B) comprises a polymer (B-3) having 0.01 to 5.0% by mass of an ethylenically unsaturated monomer unit having at least one acidic group, and

the step of forming a polymer layer (B) comprises

a step of forming the polymer (B-3) by emulsion polymerization in a state where an ethylenically unsaturated monomer having an acidic group is at least partially neutralized, in a dispersion liquid of the particles (A) whose pH is adjusted to 6 or more, and

a step of, thereafter, forming a polymer (B-4) comprising 50 to 100% by mass of a nonionic ethylenically unsaturated monomer unit and 5.0% by mass or less of an ethylenically unsaturated monomer unit having an acidic group, by emulsion polymerization in an aqueous medium.

[25] The method for producing an aqueous dispersion of composite particles according to the above [24], wherein the step of forming a polymer layer (B)p comprises

a step of forming, as the polymer (B-4), a polymer comprising 50 to 99.95% by mass of a nonionic ethylenically unsaturated monomer unit, 5.0% by mass or less of an ethylenically unsaturated monomer unit having an acidic group and 0.05 to 50% by mass of an ethylenically unsaturated monomer unit having a nitrogen functional group, by emulsion polymerization.

[26] The method for producing an aqueous dispersion of composite particles according to the above [24] or [25], wherein

the polymer layer (B) comprises, as the polymer (B-3), a polymer obtained by emulsion polymerization of a monomer component having 2.0% by mass or less of an ethylenically unsaturated monomer having a hydrolyzable silane group and/or a monomer having a hydrolyzable silane group and a mercapto group, and

a constituent component of the monomer of the polymer (B-3) is different from a constituent component of the monomer of the polymer (B-4).

[27] The method for producing an aqueous dispersion of composite particles according to any one of the above [24] to [26], wherein the polymer layer (B) comprises

a polymer comprising 0.005 to 4.0% by mass of at least one ethylenically unsaturated monomer unit having an acidic group selected from the group consisting of an ethylenically unsaturated monomer having a carboxyl group, an ethylenically unsaturated monomer having a phosphoric acid group, and an ethylenically unsaturated monomer having a sulfonic acid group, based on a total mass of the composite particles.

[28] The method for producing an aqueous dispersion of composite particles according to any one of the above [24] to [27], wherein

the method comprises a step of forming a polymer layer (B) on at least a part of a surface of the particle (A), and the step of forming a polymer layer (B) comprises

a step of performing emulsion polymerization by use of a monomer having a phosphoric acid group in a state where the phosphoric acid group is at least partially neutralized, in the presence of the particle (A), in a dispersion liquid of the particles (A) whose pH is adjusted to 6 or more.

[29] The method for producing an aqueous dispersion of composite particles according to any one of the above [24] to [28], wherein the polymer layer (B) comprises

a polymer comprising 0.001 to less than 1.0% by mass of the ethylenically unsaturated monomer unit having an acidic group comprising an ethylenically unsaturated monomer having a phosphoric acid group, based on a total mass of the composite particles.

[30] The method for producing an aqueous dispersion of composite particles according to any one of the above [24] to [29], wherein a mass ratio of the polymer (B-4)/the polymer (B-3) is 0.01 to 50.

[31] The method for producing an aqueous dispersion of composite particles according to any one of the above [24] to [30], wherein a mass ratio of the polymer layer (B)/the particle (A) is 0.01 to 100.

Advantageous Effects of Invention

According to the present invention, there are obtained an aqueous dispersion of composite particles which enables a coating film excellent in water resistance to be formed, which is obtained as an aqueous dispersion composite particles excellent in admixture stability with an inorganic pigment particle, and furthermore, which can impart weather resistance to a coating film by copolymerization of an ethylenically unsaturated monomer having a nitrogen functional group, and a coating composition dispersion containing the aqueous dispersion of composite particles.

Mode for Carrying Out the Invention

Hereinafter, an embodiment for carrying out the present invention (hereinafter, referred to as the "present embodiment".) will be described in detail.

The following present embodiment is illustrative for the description of the present invention, and the present invention is not intended to be limited to the following embodiment. The present invention can be variously modified and carried out within the gist thereof.

[Coating composition dispersion]

A coating composition dispersion of the present embodiment includes:

at least one aqueous dispersion of composite particles (C) including

an aqueous medium containing water, and
composite particles dispersed in the aqueous medium, in which the composite particles have a particle (A) and a polymer layer (B) with which at least a part of the surface of the particle (A) is coated, and contains 0.12% by mass or less of a phosphorus atom based on the total mass of the composite particles; and

an another aqueous dispersion of polymer particles (D),
wherein
a weather resistance modification value represented by the following formula $|\Delta b_0 - \Delta b|/(\Delta b_0 + \Delta b)$ is 0.15 or more, the formula being represented by a color difference $\Delta b$ value of a coating film of a coating composition dispersion having from 100/0 to 1/99 of a solid content mass ratio of the aqueous dispersion of composite particles (C) and the another aqueous dispersion of polymer particles (D), (solid content mass of component (C)/solid content mass of component (D)), and a color difference $\Delta b_0$ value of a coating film of the another aqueous dispersion of polymer particles (D).

The aqueous dispersion of composite particles (C) will be described below.

The another aqueous dispersion of polymer particles (D) is a polymer dispersion different from the aqueous dispersion of composite particles (C), and examples thereof include, but not limited to, those including a polymer selected from the group consisting of a vinyl-based polymer, a vinyl acetate-based polymer, polyether, polyester, polycarbonate, polyamide, polyurethane, a diene-based polymer, a melamine/benzoguanamine-based polymer, an aromatic polymer, polyimide, polycarbonate, polyurethane, polycaprolactone, a sulfur-based polymer and a natural polymer.

The another aqueous dispersion of polymer particles (D) is preferably a resin dispersion including a particle including at least one polymer selected from an acrylic polymer including (meth)acrylate as a monomer unit, a styrene-acrylic polymer including styrene and (meth)acrylate as monomer units, a styrene-butadiene polymer including styrene and butadiene as monomer units, a silicone-modified polymer, and a fluoropolymer.

The ratio of the solid content mass of the aqueous dispersion of composite particles (C) described below and the solid content mass of the another aqueous dispersion of polymer particles (D) (solid content mass of component (C)/solid content mass of component (D)) is 100/0 to 1/99, preferably 100/0 to 5/95, more preferably 95/5 to 5/95, further preferably 90/10 to 10/90 from the viewpoint of exhibition of weather resistance.

The solid content mass ratio of the component (C) and the component (D) is preferably modulated depending on a desired weather resistance modification value.

When the solid content mass of the component (C)/the solid content mass of the component (D) is 100/0, $\Delta b_0$ is 0.

In the coating composition dispersion of the present embodiment, the weather resistance modification value represented by the following formula $|\Delta b_0 - \Delta b|/(\Delta b_0 + \Delta b)$, the formula being represented by the color difference $\Delta b$ value of the coating film obtained from the coating composition dispersion and the color difference $\Delta b_0$ value of the coating film of the another aqueous dispersion of polymer particles (D), is 0.15 or more, preferably 0.20 or more, more preferably 0.29 or more.

When the weather resistance modification value represented by the above formula is 0.15 or more, weather resistance of a coating film obtained from the coating composition dispersion of the present embodiment is sufficiently improved.

The color difference $\Delta b$ value of the coating film of the coating composition dispersion is obtained by using a white paint material prepared by mixing the aqueous dispersion of composite particles (C) and the another aqueous dispersion of polymer particles (D) at a desired ratio and mixing titanium dioxide therewith, to form a coating test piece, subjecting the coating test piece to a predetermined weather resistance test to measure the b value after exposure for 1000 hours, and calculating the difference between the resulting b value and the b value before the exposure. These b values can be measured by a color difference meter. In measurement of the b values, not only such a method using the white paint material mixed with titanium dioxide, but also a method using, as a coating test piece, one where a clear film of the component (C) and/or the component (D) not compounded with titanium dioxide is formed on the coating film of the white paint material, previously formed, may be applied.

The color difference $\Delta b_0$ value of the another aqueous dispersion of polymer particles (D) is obtained by using a paint material prepared by mixing the another aqueous dispersion of polymer particles (D) and titanium oxide, to form a coating test piece, subjecting the coating test piece to a predetermined weather resistance test to measure the b value after exposure for 1000 hours, and calculating the difference between the resulting b value and the b value before the exposure. Also in this case, these b values can also be measured by a color difference meter.

The weather resistance modification value is usually represented by $|\Delta b_0 - \Delta b|/(\Delta b_0 + \Delta b)$. When $\Delta b_0 \leq 30$ is satisfied, the effect of improving weather resistance is obtained. It is preferable that $\Delta b_0 \leq 20$ be satisfied, and it is further preferable that $\Delta b_0 \leq 10$ be satisfied. If the $\Delta b_0$ does not fall within the range, the effect of improving weather resistance is hardly obtained.

The value (weather resistance modification value: $|\Delta b_0 - \Delta b|/(\Delta b_0 + \Delta b)$) can be controlled within the above range by allowing for the presence of a light stabilizer component and/or an ultraviolet absorber component homogeneously dispersed and coordinated in the coating film, and adjusting the amount(s) of such component(s).

In a preferable aspect, the coating composition of the present embodiment includes the aqueous dispersion of composite particles (C) which is an aqueous dispersion of composite particles (C) including an aqueous medium containing water and composite particles dispersed in the aqueous medium, wherein

the composite particles have a particle (A) and a polymer layer (B) with which at least a part of the surface of the particle (A) is coated, and contains 0.001 to 0.12% by mass of a phosphorus atom based on the total mass of the composite particles;

the particle (A) is an inorganic particle or a polymer particle; and

the zeta potential of the composite particles in the aqueous dispersion of composite particles at 60°C is -10 mV to -69 mV at any one of pH in the range of 7 to 11 of the aqueous dispersion of composite particles.

[Aqueous dispersion of composite particles (C)]

An aqueous dispersion of composite particles of the present embodiment includes:

an aqueous medium containing water; and
the composite particles dispersed in the aqueous medium,
wherein
the composite particles have a particle (A) and a polymer layer (B) with which at least a part of the surface of the particle (A) is coated, and contains 0.001 to 0.12% by mass of a phosphorus atom based on the total mass of the composite particles,
the particle (A) is an inorganic particle or a polymer particle; and
the zeta potential of the composite particles in the aqueous dispersion of composite particles at 60°C is -10 mV to -69 mV at any one of pH in the range of 7 to 11 of the aqueous dispersion of composite particles.

(Aqueous medium)

The aqueous medium can also contain, in addition to water, a hydrophilic solvent, for example, an alcohol such as ethanol and isopropyl alcohol; a ketone such as acetone; and an ether such as tetrahydrofuran and dioxane.

(Composite particles)

The composite particles included in the aqueous dispersion of composite particles (C) of the present embodiment includes a particle (A), and a polymer layer (B) with which at least a part of the surface of the particle (A) is coated.

The particle (A) is an inorganic particle or a polymer particle (A).

The composite particles can have various structures. For example, the particle (A) forming the composite particles may be at least one fine inorganic particle, or may be a core/shell type particle coated with silica, having a core particle and a silica layer with which at least a part of the surface of the core particle is coated.

The particle (A) may be fully or partially coated with the polymer layer (B).

The aqueous dispersion of composite particles (C) of the present embodiment may include not only the particle (A) coated with the polymer layer (B), but also the particle (A) disposed on the surface of a polymer particle forming the polymer layer (B). That is, a mode may be taken where the particle (A) is numerously disposed on the surface of a polymer particle forming the polymer layer (B) and being a composite, and the particle (A) numerously disposed is dispersed and stabilized, to allow the polymer particle forming the polymer layer (B) to be present at the center portion.

The particle (A) may be mostly disposed on the surface of the polymer particle forming the polymer layer (B).

Furthermore, slightly partial coagulation of the composite particles may also be generated depending on the solid substance concentration of the composite particles dispersed in the aqueous medium.

The aqueous dispersion of composite particles (C) of the present embodiment may include not only the composite particles where the particle (A) is dispersed in the state of being individually coated with the polymer layer (B), but also a particle (A) not coated with the polymer layer (B). In this case, the zeta potential of the composite particles in the aqueous dispersion of composite particles (C) of the present embodiment can be easily exhibited at a low value.

The particle (A) is preferably fully coated with the polymer layer (B), and the particle (A) is further preferably fully coated individually with the polymer layer (B).

The shape of the composite particles where the particle (A) is fully coated with the polymer layer (B) can be presumed from no observation of any counter ion condensation phenomenon unique for a silanol group on the surface of the particle by electrical conductivity titration after dialysis-ion exchange of a dispersion liquid. It can also be confirmed from particle size measurement that each particle is individually coated.

<Phosphorus atom contained in composite particles>

The composite particles included in the aqueous dispersion of composite particles (C) of the present embodiment preferably contain a phosphorus atom.

The phosphorus atom, as described below, means a phosphorus atom immobilized in the composite particles and/or on the surface of the composite particles in copolymerization of an ethylenically unsaturated monomer having a phosphoric acid group with other monomer compound in formation of the polymer layer (B), and also a phosphorus atom derived from any phosphorus component of the dispersion of aqueous composite particles (C), except for an aqueous phase component of the dispersion and an adsorption component of the dispersion.

The composite particle has, as described above, the particle (A), and the polymer layer (B) with which at least a part of the surface of the particle (A) is coated, and includes 0.12% by mass or less of the phosphorus atom, preferably 0.001 to 0.12% by mass, more preferably 0.001 to 0.08% by mass, further preferably 0.002 to 0.07% by mass, still more preferably 0.002 to 0.06% by mass, still further preferably, 0.002 to 0.03% by mass, based on the total mass of the composite particles.

When the phosphorus atom content is within the numerical value range, dispersing stability with an inorganic pigment particle tends to be excellent to allow a coating film to achieve excellent water resistance.

When the content exceeds the range, an additional particle tends to be caused in a production process, causing formation of the polymer layer (B) relative to the particle (A) to be insufficient.

The phosphorus atom content can be controlled by, as described below, appropriately adjusting the copolymerization condition using an ethylenically unsaturated monomer having a phosphoric acid group in formation of the polymer layer (B).

In particular, when the component of the polymer layer (B) includes an ethylenically unsaturated monomer having a nitrogen functional group, the effect of exhibiting water resistance of a coating film is highly exerted.

<Particle (A)>

The particle (A) is an inorganic particle or a polymer particle.

The particle size (average particle size) of the particle (A) is preferably 1 nm to 5 $\mu$m, more preferably 1 nm to 500 nm, further preferably 3 nm to 250 nm from the viewpoint of transparency of a coating film formed from the composite particles.

The average particle size of the particle (A) can be determined based on cumulant method analysis according to a dynamic light scattering method with ELSZ-1000ZS manufactured by Otsuka Electronics Co., Ltd.

[Inorganic particle]

Examples of the inorganic particle that can be used as the particle (A) include, but not limited to, a metal particle, and respective particles of a metal compound, a semimetal compound, and a non-metallic inorganic compound.

Examples of the metal compound include metal oxide and a metal salt.

The inorganic particle may be a particle formed from a single phase including an inorganic substance.

Examples of the metal particle include, but not limited to, noble metal colloid, for example, colloid of palladium, silver, ruthenium, platinum, gold, rhodium, or an alloy containing such a metal.

Examples of the metal oxide include any metal oxide selected from titanium dioxide (titania, for example, manufactured by Ishihara Sangyo Kaisha, Ltd.), zirconium oxide (zirconia), tin oxide (for example, manufactured by Nissan Chemical Corporation), aluminum oxide (for example, manufactured by Nissan Chemical Corporation), barium oxide, magnesium oxide, various iron oxides (for example, wustite, hematite and magnetite), chromium oxide, antimony oxide, bismuth oxide, zinc oxide, nickel oxide, cobalt oxide, copper oxide, yttrium oxide, and cerium oxide.

The metal oxide may be amorphous, or may be in any form of various crystal modifications.

The metal oxide particle may include any metal hydroxy oxide, for example, a metal compound selected from hydroxy titanium oxide, hydroxy zirconium oxide, hydroxy aluminum oxide and hydroxy iron oxide, and these may be amorphous or may be in any form of various crystal modifications.

Specifically, particles of the following metal salts present in any form of an amorphous structure and/or various crystal structures can be each used as the inorganic particle serving as the particle (A):

sulfides such as iron sulfide, iron disulfide, tin sulfide, mercury sulfide, cadmium sulfide, zinc sulfide, copper sulfide, silver sulfide, nickel sulfide, cobalt sulfide, manganese sulfide, chromium sulfide, titanium sulfide, titanium sulfide, zirconium sulfide, antimony sulfide, and bismuth sulfide;
hydroxides such as tin hydroxide, aluminum hydroxide, magnesium hydroxide, calcium hydroxide, barium hydroxide, zinc hydroxide, and iron hydroxide;

sulfates such as calcium sulfate, strontium sulfate, barium sulfate, and lead sulfate;

carbonates such as lithium carbonate, magnesium carbonate, calcium carbonate, zinc carbonate, and zirconium carbonate;

iron carbonate;

orthophosphates such as lithium orthophosphate, calcium orthophosphate, zinc orthophosphate, magnesium orthophosphate, aluminum orthophosphate, tin orthophosphate, and iron orthophosphate;

metaphosphates such as lithium metaphosphate, calcium metaphosphate, and aluminum metaphosphate;

pyrophosphates such as magnesium pyrophosphate, calcium pyrophosphate, zinc pyrophosphate, iron pyrophosphate, and tin pyrophosphate;

ammonium phosphates such as magnesium ammonium phosphate and zinc ammonium phosphate;

hydroxyl apatite;

orthosilicates such as lithium orthosilicate, calcium/magnesium orthosilicate, aluminum orthosilicate, iron orthosilicate, magnesium orthosilicate, zinc orthosilicate, and zirconium orthosilicate;

metasilicates such as lithium metasilicate, calcium/magnesium metasilicate, calcium metasilicate, magnesium metasilicate, and zinc metasilicate;

layered silicates such as aluminum sodium silicate and sodium magnesium silicate, in particular, forms spontaneously released, for example, Oprigel (registered trademark) (manufactured by Rockwood Lithium), Saponite (registered trademark), Hektorite (registered trademark) (manufactured by Hoechst), and Laponite (registered trademark) (manufactured by Rockwood Lithium);

aluminates such as lithium aluminate, calcium aluminate, and zinc aluminate;

borates such as magnesium metaborate and magnesium orthoborate;

oxalates such as calcium oxalate, zirconium oxalate, zinc oxalate, and aluminum oxalate;

tartrates such as calcium tartrate,

acetylacetonates such as aluminum acetylacetonate and iron acetylacetonate;

salicylates such as aluminum salicylate;

citrates such as calcium citrate, iron citrate, and zinc citrate;

palmitates such as aluminum palmitate, calcium palmitate, and magnesium palmitate;

stearates such as aluminum stearate, calcium stearate, magnesium stearate, and zinc stearate;

laurates such as calcium laurate;

linoleates such as calcium linoleate; and

oleates such as iron oleate and zinc oleate.

Examples of the semimetal compound particle that can be used as the inorganic particle serving as the particle (A) include a silicon dioxide (silica) particle present in any form of an amorphous structure and/or various crystal structures.

A suitable silicon dioxide (silica) particle is commercially available, and examples thereof include, but not limited to, Aerosil (registered trademark) (manufactured by Degussa AG), Levasil (registered trademark) (manufactured by Bayer AG), Ludox (registered trademark) (manufactured by DuPont), Nyacol (registered trademark) (manufactured by Nyacol Nano Technologies, Inc.), Bindzil (registered trademark) (manufactured by Akzo Nobel), Snowtex (registered trademark) (trademark of Nissan Chemical Corporation), Adelite (registered trademark) (manufactured by Adeka Corporation), and Cataloid (registered trademark) (trademark of JGC C&C).

Examples of a suitable mon-metal compound particle include graphite and diamond present in the form of colloid.

The inorganic particle as the particle (A) preferably includes at least one inorganic compound selected from silicon dioxide, aluminum oxide, tin oxide, yttrium oxide, cerium oxide, hydroxyaluminum oxide, calcium carbonate, magnesium carbonate, calcium orthophosphate, magnesium orthophosphate, calcium metaphosphate, magnesium metaphosphate, calcium pyrophosphate, magnesium pyrophosphate, iron oxide, titanium dioxide, hydroxyl apatite, zinc oxide and zinc sulfide. A colloidal silica exhibiting a zeta potential having a negative sign is further preferable.

[polymer particle]

Examples of the polymer particle that can be used as the particle (A) can include, but not limited to, those including a polymer selected from the group consisting of a vinyl-based polymer, a vinyl acetate-based polymer, polyether, polyester, polycarbonate, polyamide, polyurethane, a diene-based polymer, a melamine/benzoguanamine-based polymer, an aromatic polymer, polyimide, polycarbonate, polyurethane, polycaprolactone, a sulfur-based polymer and a natural polymer.

The polymer particle is preferably a particle including at least one polymer selected from an acrylic polymer including (meth)acrylate as a monomer unit, a styrene-acrylic polymer including styrene and (meth)acrylate as monomer units, a styrene-butadiene polymer including styrene and butadiene as monomer units, a silicone-modified polymer, and a fluoropolymer.

[Particle coated with silica]

The particle (A) may include a particle coated with silica.

The particle coated with silica has a core particle, and a silica layer including silicon dioxide (silica), with which the surface of the core particle is partially or fully coated.

The particle coated with silica can be obtained by, for example, a method where at least one silane compound is subjected to hydrolysis and a condensation reaction in the presence of the core particle dispersed in an aqueous medium or an organic solvent, and a surfactant can be appropriately used, if necessary.

The particle coated with silica can have a surface that is substantially the same as the surface of a silica particle. The silica layer may be fully coated with the polymer layer (B).

The core particle forming the particle coated with silica may be a predetermined inorganic particle or polymer particle. The inorganic particle and the polymer particle that can be applied are the same as in various particles described above.

A particle having the inorganic particle as the core particle, and the silica layer, by itself, can correspond to an inorganic particle, but is classified to the particle coated with silica in the present specification.

The silane compound for use in formation of the silica layer forming the particle coated with silica preferably includes at least one selected from compounds represented by the following formula (a).

$$(R_1)_n\text{-Si-}(R_2)_{4-n} \qquad (a)$$

In the formula (a), n represents an integer of 0 to 3.

In addition, $R_1$ represents a hydrogen atom, an aliphatic hydrocarbon group having 1 to 16 carbon atoms, an aryl group having 5 to 10 carbon atoms, a cycloalkyl group having 5 to 6 carbon atoms, a vinyl group, an alkyl acrylate group having 1 to 10 carbon atoms, or an alkyl methacrylate group having 1 to 10 carbon atoms.

A number n of $R_1$ may be the same or different.

$R_2$ represents an alkoxy group having 1 to 8 carbon atoms, an acetoxy group, or a hydroxyl group.

A number 4-n of $R_2$ may be the same or different.

The silane compound for use in formation of the silica layer preferably includes at least one of a silane compound (I) where n in the formula (a) represents 0 or a silane compound (II) where n in the formula (a) represents 1, further preferably a silane compound (I) where n represents 0 in order to obtain favorable polymerization stability of an aqueous dispersion and a favorable crosslinking effect.

Each $R_2$ in the silane compound (I) preferably independently represents a methoxy group, an ethoxy group, a propoxy group, a butoxy group, a methoxy ethoxy group or a hydroxyl group. Preferable specific examples of the silane compound (I) include tetramethoxysilane and tetraethoxysilane.

$R_1$ in the silane compound (II) preferably represents a methyl group, a phenyl group, a cyclohexyl group, a vinyl group, or a γ-(meth)acryloxypropyl group.

Each $R_2$ in the silane compound (II) preferably independently represents a methoxy group, an ethoxy group, a propoxy group, a butoxy group, a methoxy ethoxy group or a hydroxyl group.

Preferable specific examples of the silane compound (II) include methyltrimethoxysilane, phenyltrimethoxysilane, methyltriethoxysilane, phenyltriethoxysilane, cyclohexyltrimethoxysilane, and isobutyltrimethoxysilane.

Examples of the silane compound (II) having a radical polymerizable double bond include vinylethoxysilane, γ-acryloxypropyltrimethoxysilane, γ-acryloxypropyltriethoxysilane, γ-methacryloxypropyltrimethoxysilane, and γ-methacryloxypropyltriethoxysilane.

The silane compound for formation of the silica layer may be used singly or in combinations of two or more. Preferably, a hydrolyzable silane compound having a radical polymerizable double bond and a silane compound having no radical polymerizable double bond are used in combination. Any oligomer of such a silane compound can also be used.

The proportion of the silica layer in the particle coated with silica, as the particle (A), is preferably, for example, 0.1 to 100% by mass based on the mass of the particle coated with silica.

<Polymer layer (B)>

The composite particles included in the aqueous dispersion of composite particles of the present embodiment has, as described above, the particle (A) and the polymer layer (B) with which at least a part of the surface of the particle (A) is coated.

The polymer layer (B) can be formed by polymerization in the presence of the particle (A) and a predetermined monomer.

In the course of polymerization for formation of the polymer layer (B), an ethylenically unsaturated monomer having an acidic group, preferably having a weakly acidic group is used as a monomer. That is, the polymer layer (B) preferably has a weakly acidic monomer unit derived from an ethylenically unsaturated monomer having a weakly acidic group.

An ethylenically unsaturated monomer having a weakly acidic group, for example, at least one group selected from the group consisting of a carboxylic acid group and a phosphoric acid group, is used as the monomer, and the ethylenically unsaturated monomer having a weakly acidic group is preferably an ethylenically unsaturated monomer having a phosphoric acid group.

The composite particles included in the aqueous dispersion of composite particles (C) of the present embodiment includes 0.12% by mass or less, preferably 0.001 to 0.12% by mass of a phosphorus atom, based on the total mass of the composite particles, and therefore the monomer in formation of the polymer layer (B) is preferably one including an ethylenically unsaturated monomer having a phosphoric acid group.

Examples of an ionic ethylenically unsaturated monomer having a carboxylic acid group include, but not limited to, itaconic acid, fumaric acid, maleic acid, maleic anhydride, maleic acid and monoesters thereof, and acrylic acid, methacrylic acid and crotonic acid.

Examples of the ethylenically unsaturated monomer having a phosphoric acid group include the following.

The phosphoric acid group (phosphonic acid group) here mentioned encompasses a phosphoric acid ester group (phosphate group).

Examples thereof include dihydrogen phosphate esters of alcohols including a polymerizable vinyl group or an olefin group (e.g., allyl phosphate, and mono- or diphosphate of bis(hydroxymethyl)fumarate or itaconate), and (meth)acrylate derivatives (phosphate of hydroxyalkyl (meth)acrylate, phosphate monoester of 2-hydroxyethyl (meth)acrylate, phosphate monoester of 2-hydroxypropyl (meth)acrylate, and phosphate monoester of 3-hydroxypropyl (meth)acrylate).

The ethylenically unsaturated monomer having a phosphoric acid group is present in the form of an acid or as a salt of an acid group of phosphorus, and examples thereof include the following.

The phosphoric acid group (phosphonic acid group) here mentioned encompasses a phosphorus acid group, and further encompasses a phosphoric acid ester group (phosphate group) and a phosphorous acid ester group (phosphonate group).

Examples thereof include dihydrogen phosphate esters of alcohols including a polymerizable vinyl group or an olefin group (allyl phosphate, and mono- or diphosphate of bis(hydroxymethyl)fumarate or itaconate), (meth)acrylate derivatives phosphate of hydroxyalkyl (meth)acrylate, phosphate monoester of 2-hydroxyethyl (meth)acrylate, phosphate monoester of 2-hydroxypropyl (meth)acrylate, phosphate monoester of 3-hydroxypropyl (meth)acrylate, phosphate diester of 2-hydroxyethyl (meth)acrylate, phosphate diester of 2-hydroxypropyl (meth)acrylate, phosphate diester of 3-hydroxypropyl (meth)acrylate, (meth)acryloyloxyalkyl monophosphate, (meth)acryloyloxy polyoxyethylene glycol acid phosphate, and (meth)acryloyloxy polyoxypropylene glycol acid phosphate.

These may be used singly or in combinations of two or more.

A commercially available ethylenically unsaturated monomer having a phosphoric acid group is not particularly limited, and examples thereof include Light Acrylate (registered trademark) P-1A(N), Light Ester (registered trademark) P-1M and Light Ester (registered trademark) P-2M that are available from Kyoeisha Chemical Co., Ltd., PPME, PMR12 and PPM-5P that are available from TOHO Chemical Industry Co., Ltd., SIPOMER (registered trademark) PAM-100, SIPOMER (registered trademark) PAM-200, SIPOMER (registered trademark) PAM-300 and SIPOMER (registered trademark) PAM-400 that are available from Rhodia, Inc., Phosmer (registered trademark) M, Phosmer (registered trademark) PE and Phosmer (registered trademark) PP that are available from Uni-Chemical Co., Ltd., and MR-200 and MR-260 that are available from Daihachi Chemical Industry Co., Ltd.

Examples of other monomer having a phosphorous acid group include, but not limited to, vinylphosphonic acid, allylphosphonic acid, 2-acrylamide-2-methylpropanephosphonic acid, $\alpha$-phosphonostyrene, 2-methylacrylamide-2-methylpropanephosphonic acid, and Phosmer CL that is available from Uni-Chemical Co., Ltd., and examples of a monomer having a phosphorus acid group include 2-phosphoethyl (meth)acrylate, 2-phosphopropyl (meth)acrylate and 3-phosphopropyl (meth)acrylate.

With respect to the amount of the ethylenically unsaturated monomer having a weakly acidic group, to be used, in the course of formation of the polymer layer (B), the amount of at least one ethylenically unsaturated monomer unit having a weakly acidic group, selected from the group consisting of an ethylenically unsaturated monomer having a carboxyl group and an ethylenically unsaturated monomer having a phosphoric acid group, to be used, is preferably 0.05 to 4.0% by mass, more preferably 0.001 to less than 1.0% by mass, further preferably 0.05 to less than 0.5% by mass, based on the total mass (solid content mass of component (C)) of composite particles finally obtained.

In the course of formation of the polymer layer (B), the amount of the ethylenically unsaturated monomer having a phosphoric acid group, to be used, is as small as 0.001 to less than 1.0% by mass, preferably 0.05 to less than 0.5% by mass based on the total mass (solid content mass of component (C)) of composite particles finally obtained, thereby resulting in a tendency to impart excellent dispersing stability with an inorganic pigment particle, to allow a coating film to achieve excellent water resistance.

In the course of formation of the polymer layer (B), the amount of the ethylenically unsaturated monomer having a phosphoric acid group, to be used, is preferably 0.001 to 5.0% by mass, more preferably 0.01 to 1.0% by mass, further preferably 0.01 to 0.5% by mass, still more preferably 0.01 to less than 0.5% by mass, still further preferably 0.05 to 0.4% by mass based on the total amount of the polymerizable monomer forming the polymer layer (B). The amount is allowed to be such a small amount, thereby resulting in a tendency to impart excellent dispersing stability with an inorganic pigment particle, to allow a coating film to achieve excellent water resistance.

With respect to the amount of the ethylenically unsaturated monomer having a weakly acidic group, to be used, in the course of formation of the polymer layer (B), the amount of at least one ethylenically unsaturated monomer unit having a weakly acidic group, selected from the group consisting of an ethylenically unsaturated monomer having a carboxyl group and an ethylenically unsaturated monomer having a phosphoric acid group, to be used, is, when the particle (A) is a polymer, preferably 0.31 to 5.0% by mass, more preferably 0.31 to 2.0% by mass, further preferably 0.31 to 1.0% by mass based on the total mass of the polymer of the particle (A) and the entire monomer for use in formation of the polymer layer (B), namely, the total mass (solid mass content of the component (C)) of composite particles finally obtained.

Thus, the effect of water dispersing stability is obtained.

In the course of formation of the polymer layer (B), the amount of the ethylenically unsaturated monomer having a phosphoric acid group, to be used, is, when the particle (A) is a polymer, preferably 0.001 to less than 1.0% by mass, more preferably 0.05 to less than 0.5% by mass based on the total mass of the polymer of the particle (A) and the entire monomer for use in formation of the polymer layer (B), namely, the total mass (solid mass content of the component (C)) of composite particles finally obtained.

Thus, the effect of adsorption to an inorganic oxide is obtained.

The monomer for use in formation of the polymer layer (B) may include, not only the above weakly acidic, ethylenical monomer, but also a monomer different therefrom, for example, an ionic ethylenically unsaturated monomer having at least one sulfonic acid group (sulfonate group) or sulfuric acid ester group (sulfate group), an ethylenically unsaturated monomer having a nitrogen functional group, and/or a nonionic ethylenically unsaturated monomer.

Examples of the ionic ethylenically unsaturated monomer having at least one sulfonic acid group include, but not limited to, $\alpha$-olefin sulfonic acid including allylsulfonic acid, p-styrenesulfonic acid, 2-acrylamide-2-methylpropanesulfonic acid, and 3-allyloxy-2-hydroxy-1-propanesulfonic acid.

Salts of such acids (for example, an alkali metal salt and an ammonium salt) can also be included in the "ionic ethylenically unsaturated monomer having at least one sulfonic acid group".

Examples of the alkali metal salt or the ammonium salt include, but not limited to, a lithium salt, a sodium salt, a potassium salt, an ammonium salt, an alkanol ammonium salt, and an ammonium salt of basic amino acid.

An ethylenically unsaturated monomer having a nitrogen functional group can be further used in the monomer in the polymerization step for formation of the polymer layer (B).

Examples of the nitrogen functional group include, but not limited to, an amino group, a monoalkylamino group, a dialkylamino group, and a quaternized amino group.

As the ethylenically unsaturated monomer having a nitrogen functional group, specifically, aminoalkyl (meth)acrylate, or a compound having a 5- or 6-membered heterocyclic ring with nitrogen as a hetero atom can be applied.

The ethylenically unsaturated monomer having a nitrogen functional group is preferably (meth)acrylic-N,N-dialkyl (1 to 6 carbon atoms) aminoalkyl (2 to 3 carbon atoms) ester. Examples thereof include, but not limited to, (meth)acrylic acid diethylaminoethyl ester, (meth)acrylic acid dimethylaminoethyl ester, (meth)acrylic acid diethylaminopropyl ester, (meth)acrylic acid dimethylaminopropyl ester, (meth)acrylic acid dimethylamino-t-butyl ester, and (meth)acrylic acid diethylamino-t-butyl ester. Other examples include (meth)acrylic acid triethanolamine, vinylamine, and vinylpyridine.

Further examples include ultraviolet-absorbable, ethylenically unsaturated monomers such as 4-(meth)acryloyloxy-2,2,6,6-tetramethylpiperidine, 4-(meth)acryloyloxy-1,2,2,6,6-pentamethylpiperidine, 2,4-dihydroxybenzophenone, 2,2'-dihydroxy-4-[3-(meth)acryloxy-2-hydroxypropoxy]benzophenone, 2-[2'-hydroxy-5'-(methacryloyloxymethyl)phenyl]-2H-benzotriazole, 2-[2'-hydroxy-5'-(methacryloyloxyethyl)phenyl]-2H-benzotriazole, 2-[2'-hydroxy-5'-(methacryloyloxypropyl)phenyl]-2H-benzotriazole, 2-[2'-hydroxy-5'-(methacryloyloxyhexyl)phenyl]-2H-benzotriazole, 2-[2'-hydroxy-3'-tert-butyl-5'-(methacryloyloxyethyl)phenyl]-2H-benzotriazole, 2-[2'-hydroxy-5'-tert-butyl-3'-(methacryloyloxyethyl)phenyl]-2H-benzotriazole, 2-[2'-hydroxy-5'-(methacryloyloxyethyl)phenyl]-5-chloro-2H-benzotriazole, 2-[2'-hydroxy-5'-(methacryloyloxyethyl)phenyl]-5-methoxy-2H-benzotriazole, 2-[2'-hydroxy-5'-(methacryloyloxyethyl)phenyl]-5-cyano-2H-benzotriazole, 2-[2'-hydroxy-5'-(methacryloyloxyethyl)phenyl]-5-tert-butyl-2H-benzotriazole, 2-[2'-hydroxy-5'-(methacryloyloxyethyl)phenyl]-5-nitro-2H-benzotriazole, 2-[2'-hydroxy-5'-($\beta$-methacryloyloxyethoxy)-3'-tert-butylphenyl]-4-tert-butyl-2H-benzotriazole (product name: RUVA-93 manufactured by Otsuka Chemical Co., Ltd.), and 3-methacryloyl-2-hydroxypropyl-3-[3-(2-benzotriazolyl)-4-hydroxy-5-tert-butyl]phenylpropionate (product name: CGL-104 manufactured by BASF Japan Ltd.); and light-stable, ethylenically unsaturated monomers such as 4-(meth)acryloyloxy-2,2,6,6-tetramethylpiperidine [for example, (product name: ADK STAB LA87 manufactured by Adeka Corporation): 2,2,6,6-tetramethyl-4-piperidyl methacrylate], 4-(meth)acryloyloxy-1,2,2,6,6-pentamethylpiperidine [for example, (product name: ADK STAB LA82 manufactured by Adeka Corporation): 1,2,2,6,6-pentamethyl-4-piperidyl methacrylate], 2,2,6,6-tetramethyl-4-piperidyl acrylate, 1,2,2,6,6-pentamethyl-4-iminopiperidyl methacrylate, 2,2,6,6-tetramethyl-4-iminopiperidyl methacrylate, 4-cyano-2,2,6,6-tetramethyl-4-piperidyl methacrylate, 4-cyano-1,2,2,6,6-pentamethyl-4-piperidyl methacrylate, 4-(meth)acryloylamino-2,2,6,6-tetramethylpiperidine, 4-(meth)acryloylamino-1,2,2,6,6-pentamethylpiperidine, 4-cyano-4-(meth)acryloylamino-2,2,6,6-tetramethylpiperidine, 1-(meth)acryloyl-4-(meth)acrylamino-2,2,6,6-tetramethylpiperidine, 1-(meth)acryloyl-4-cyano-4-(meth)acrylamino-2,2,6,6-tetramethylpiperidine, 4-crotonoyloxy-2,2,6,6-tetramethylpiperidine, 4-crotonoylamino-2,2,6,6-tetramethylpiperidine, and 1-crotonoyl-4-crotonoyloxy-2,2,6,6-tetramethylpiperidine.

The aqueous dispersion of composite particles (C) of the present embodiment can further include a non-copolymerizable ultraviolet absorber and/or a non-copolymerizable light stabilizer in the polymer layer (B), and thus high weather resistance can be imparted.

The non-copolymerizable ultraviolet absorber and/or the non-copolymerizable light stabilizer, relative to the ultraviolet absorbable, ethylenically unsaturated monomer and/or the light-stable, ethylenically unsaturated monomer, are/is not immobilized to a polymer particle, and therefore can be dispersed in a coating film to allow weather resistance to be effectively exerted when mixed and used with the another aqueous dispersion of polymer particles (D).

The method for allowing the non-copolymerizable ultraviolet absorber and/or non-polymerizable light stabilizer to be contained in an emulsion may be a method including mixing the ultraviolet absorber and/or light stabilizer with a film formation aid or the like and then adding the mixture, and is preferably a method including allowing the ultraviolet absorber and/or light stabilizer to be present during emulsion polymerization.

The ultraviolet absorber and/or light stabilizer are/is preferably used in an amount of 0.01% by mass to 20% by mass, more preferably 0.05% by mass to 10% by mass, further preferably 0.1% by mass to 5% by mass based on the total mass (namely, solid content mass of component (C)) of composite particles finally obtained, and are particularly preferably used in an amount of 0.01% by mass to 20% by mass, more preferably 0.05% by mass to 10% by mass, further preferably 0.1% by mass to 5% by mass based on the total mass of a radical polymerizable monomer.

Combination use of the ultraviolet absorber and the light stabilizer is preferable because a coating film formed by use of the aqueous dispersion of composite particles (C) of the present embodiment is particularly excellent in weather resistance.

Examples of the non-polymerizable ultraviolet absorber include a benzotriazole-based ultraviolet absorber and a triazine-based ultraviolet absorber.

Examples of the benzotriazole-based ultraviolet absorber include, but not limited to, 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2-hydroxy-5-tert-octylphenyl)benzotriazole, 2-(2-hydroxy-3,5-di-tert-octylphenyl)benzotriazole, 2-[2'-hydroxy-3',5'-bis($\alpha$,$\alpha$'-dimethylbenzyl)phenyl]benzotriazole), a condensate of methyl-3-[3-tert-butyl-5-(2H-benzotriazole-2-yl)-4-hydroxyphenyl]propionate and polyethylene glycol (molecular weight: 300) (product name: TINUVIN 1130 manufactured by BASF Japan Ltd.), isooctyl-3-[3-(2H-benzotriazole-2-yl)-5-tert-butyl-4-hydroxyphenyl]propionate (product name: TINUVIN 384 manufactured by BASF Japan Ltd.), 2-(3-dodecyl-5-methyl-2-hydroxyphenyl)benzotriazole (product name: TINUVIN 571 manufactured by BASF Japan Ltd.), 2-(2'-hydroxy-3'-tert-butyl-5'-methylphenyl)-5-chlorobenzotriazole, 2-(2'-hydroxy-3',5'-di-tert-amylphenyl)benzotriazole, 2-(2'-hydroxy-4'-octoxyphenyl)benzotriazole, 2-[2'-hydroxy-3'-(3",4",5",6"-tetrahydrophthalimidemethyl)-5'-methylphenyl]benzotriazole, 2,2-methylenebis[4-(1,1,3,3-tetramethylbutyl)-6-(2H-benzotriazole-2-yl)phenol], and 2-(2H-benzotriazole-2-yl)-4,6-bis(1-methyl-1-phenylethyl)phenol (product name: TINUVIN 900 manufactured by BASF Japan Ltd.).

Examples of the triazine-based ultraviolet absorber include, but not limited to, TINUVIN400 (product name, manufactured by BASF Japan Ltd.).

As a light-polymerizable light stabilizer, a hindered amine-based light stabilizer can be used.

Examples of the hindered amine-based light stabilizer include, but not limited to, bis(2,2,6,6-tetramethyl-4-piperidyl)succinate, bis(2,2,6,6-tetramethyl-4-piperidyl)sebacate, bis(1,2,2,6,6-pentamethyl-4-piperidyl)2-(3,5-di-tert-butyl-4-hydroxybenzyl)-2-butylmalonate, 1-[2-[3-(3,5-di-tert-butyl-4-hydroxyphenyl)propynyloxy]ethyl]-4-[3-(3,5-di-tert-butyl-4-hydroxyphenyl)propynyloxy]-2,2,6,6-tetramethylpiperidine, a mixture of bis(1,2,2,6,6-pentamethyl-4-piperidyl)sebacate and methyl-1,2,2,6,6-pentamethyl-4-piperidyl-sebacate (product name: TINUVIN 292 manufactured by BASF Japan Ltd.), bis(1-octoxy-2,2,6,6-tetramethyl-4-piperidyl)sebacate, TINUVIN 123 (product name, manufactured by BASF Japan Ltd.), tetrakis(1,2,2,6,6-pentamethyl-4-piperidyl)-1,2,3,4-butane tetracarboxylate, tetrakis(2,2,6,6-tetramethyl-4-piperidyl)-1,2,3,4-butane tetracarboxylate, a mixed esterified product of 1,2,3,4-butanetetracarboxylic acid with 1,2,2,6,6-pentamethyl-4-piperidinol and 3,9-bis(2-hydroxy-1,1-dimethylethyl)-2,4,8,10-tetraoxaspiro[5.5]undecane, decanedioic acid bis(2,2,6,6-tetramethyl-4-piperidyl)sebacate, bis(1-undecaneoxy-2,2,6,6-tetramethylpiperidine-4-yl)carbonate, 2,2,6,6,-tetramethyl-4-piperidyl methacrylate, 4-benzoyloxy-2,2,6,6-tetramethylpiperidine, decanedioic acid bis(2,2,6,6-tetramethyl-1 (octyloxy)-4-piperidinyl)ester, a reaction product of 1,1-dimethylethylhydroperoxide and octane, N,N',N",N"'-tetrakis-(4,6-bis-(butyl-(N-methyl-2,2,6,6-tetramethylpiperidine-4-yl)amino)-triazine-2-yl)-4,7-diazadecane-1,10-diamine, a polycondensate of dibutylamine/1,3,5-triazine/N,N'-bis(2,2,6,6-tetramethyl-4-piperidyl-1,6-hexamethylenediamine and N-(2,2,6,6-tetramethyl-4-piperidyl)butylamine, poly[[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]], a polymerized product of dimethyl succinate and 4-hydroxy-2,2,6,6-tetramethyl-1-piperidineethanol, 2,2,4,4-tetramethyl-20-(β-lauryloxycarbonyl)ethyl-7-oxa-3,20-diazadispiro[5.1.11.2]heneicosan-21-one, β-alanine, N,-(2,2,6,6-tetramethyl-4-piperidinyl)-dodecyl ester/tetradecyl ester, N-acetyl-3-dodecyl-1-(2,2,6,6-tetramethyl-4-piperidinyl)pyrrolidone-2,5-dione, 2,2,4,4-tetramethyl-7-oxa-3,20-diazadispiro[5.1.11.2]heneicosan-21-one, 2,2,4,4-tetramethyl-21-oxa-3,20-diazadicyclo-[5.1.11.2]-heneicosan-20-propanoic acid dodecyl ester/tetradecyl ester, propanedioic acid, [(4-methoxyphenyl)-methylene]-bis(1,2,2,6,6-pentamethyl-4-piperidinyl)ester, higher fatty acid ester of 2,2,6,6-tetramethyl-4-piperidinol, 1,3-benzenedicarboxyamide, and N,N'-bis(2,2,6,6-tetramethyl-4-piperidinyl). A commercially available hindered amine-based light stabilizer is not particularly limited, and examples thereof include TINUVIN 765, TINUVIN 770DF, TINUVIN 144, TINUVIN 622SF and TINUVIN 152, manufactured by BASF Japan Ltd., and ADK STAB LA-52, ADK STAB LA-57, ADK STAB LA-63P, ADK STAB LA-72, ADK STAB LA-77Y and ADK STAB LA-81, manufactured by Adeka Corporation.

Examples of the nonionic ethylenically unsaturated monomer include acrylate, methacrylate, and a copolymerizable monomer therewith.

In the present specification, acrylic acid and methacrylic acid may be collectively designated as (meth)acrylic acid.

The copolymerizable monomer with (meth)acrylate is not particularly limited, and examples thereof include a methacrylamide-based monomer, vinyl cyanide, and an ethylenically unsaturated monomer having an aldo group or a keto group.

Examples of the (meth)acrylate include, but not limited to, (meth)acrylic acid alkyl ester containing an alkyl moiety having 1 to 18 carbon atoms, (meth)acrylic acid hydroxyalkyl ester containing an alkyl moiety having 1 to 18 carbon atoms, (poly)oxyethylene (meth)acrylate having 1 to 100 oxyethylene groups, (poly)oxypropylene (meth)acrylate having 1 to 100 oxypropylene groups, and (poly)oxyethylene di(meth)acrylate having 1 to 100 oxyethylene groups.

Examples of the (meth)acrylic acid alkyl ester include, but not limited to, methyl (meth)acrylate, ethyl (meth)acrylate, n-butyl (meth)acrylate, tert-butyl (meth)acrylate, 2-ethylhexyl (meth)acrylate, cyclohexyl (meth)acrylate, methylcyclohexyl (meth)acrylate, dodecyl (meth)acrylate, isobornyl (meth)acrylate, stearyl (meth)acrylate, and adamantyl (meth)acrylate.

Examples of the (meth)acrylic acid hydroxyalkyl ester include, but not limited to, 2-hydroxyethyl (meth)acrylate, 2-hydroxypropyl (meth)acrylate, 2-hydroxycyclohexyl (meth)acrylate, and dodecyl (meth)acrylate.

Examples of a nonionic ethylenically unsaturated monomer having two or more ethylenic groups include, but not limited to, allyl (meth)acrylate, diallyl phthalate, dienes such as butadiene, and divinylbenzene, and further examples include di(meth)acrylates of polyhydric alcohols having 1 to 10 carbon atoms, such as ethylene glycol di(meth)acrylate, propylene glycol di(meth)acrylate, 1,3-butanediol di(meth)acrylate, 1,4-butanediol di(meth)acrylate, 1,6-hexanediol di(meth)acrylate, ethylene oxide-modified 1,6-hexanediol di(meth)acrylate, 1,9-nonanediol di(meth)acrylate, propylene oxide-modified neopentyl glycol di(meth)acrylate, and tripropylene glycol di(meth)acrylate; alkyl di(meth)acrylates where the addition molar number of an alkylene oxide group having 2 to 4 carbon atoms is 2 to 50, such as polyethylene glycol di(meth)acrylate where the addition molar number of ethylene oxide is 2 to 50, polypropylene glycol di(meth)acrylate where the addition molar number of propylene oxide is 2 to 50, and tripropylene glycol di(meth)acrylate; tri(meth)acrylates of polyhydric alcohols having 1 to 10 carbon atoms, such as ethoxylated glycerin tri(meth)acrylate, propylene oxide-modified glycerol tri(meth)acrylate, ethylene oxide-modified trimethylol propane tri(meth)acrylate, trimethylol propane tri(meth)acrylate, pentaerythritolmonohydroxy tri(meth)acrylate, and trimethylol propane triethoxy tri(meth)acrylate; tetra(meth)acrylates of polyhydric alcohols having 1 to 10 carbon atoms, such as pentaerythritol tetra(meth)acrylate, dipentaerythritol tetra(meth)acrylate, and ditrimethylol propane tetra(meth)acrylate; penta(meth)acrylates of polyhydric alcohols having 1 to 10 carbon atoms, such as pentaerythritol penta(meth)acrylate and dipentaerythritol (monohydroxy) penta(meth)acrylate; hexa(meth)acrylates of polyhydric alcohols having 1 to 10 carbon atoms, such as pentaerythritol hexa(meth)acrylate; epoxy group-containing (meth)acrylates such as bisphenol A di(meth)acrylate, 2-(2'-vinyloxyethoxyethyl) (meth)acrylate, and epoxy (meth)acrylate; and polyfunctional (meth)acrylates such as urethane (meth)acrylate.

These nonionic ethylenically unsaturated monomers having two or more ethylenic groups may be used singly or in combinations of two or more. In the present specification, a diethylenically unsaturated monomer having a phosphoric acid group is included in the ethylenically unsaturated monomer having a phosphoric acid group.

Examples of the (poly)oxypropylene (meth)acrylate include, but not limited to, propylene glycol (meth)acrylate, propylene glycol methoxy(meth)acrylate, dipropylene glycol (meth)acrylate, dipropylene glycol methoxy(meth)acrylate, tetrapropylene glycol (meth)acrylate, and tetrapropylene glycol methoxy(meth)acrylate.

Examples of the (poly)oxyethylene di(meth)acrylate include, but not limited to, ethylene glycol di(meth)acrylate, diethylene glycol di(meth)acrylate, diethylene glycol methoxy (meth)acrylate, and tetraethylene glycol di(meth)acrylate.

Examples of the (meth)acrylamide-based monomer compound include, but not limited to, (meth)acrylamide, N-methylol (meth)acrylamide, N-butoxymethyl (meth)acrylamide, dimethyl (meth)acrylamide, diethyl (meth)acrylamide, vinylpyrrolidone, and diacetone (meth)acrylamide.

Examples of the vinyl cyanide include, but not limited to, (meth)acrylonitrile and N,N'-methylenebisacrylamide.

Examples of the ethylenically unsaturated monomer having an aldo group or a keto group include, but not limited to, acrolein, diacetone acrylamide, diacetone methacrylamide, vinyl methyl ketone, vinyl ethyl ketone, acetoacetoxyethyl methacrylate, acetoacetoxyethyl acrylate, formylstyrol, and combinations thereof.

Examples of an ethylenically unsaturated monomer other than the above, which can be used for formation of the polymer layer (B), include, but not limited to, olefins such as ethylene, propylene and isobutylene; haloolefins such as vinyl chloride and vinylidene chloride; carboxylic acid vinyl esters such as vinyl acetate, vinyl propionate, vinyl n-butyrate, vinyl benzoate, vinyl p-t-butylbenzoate, vinyl pivalate, vinyl 2-ethylhexanoate, vinyl versatate and vinyl laurate; carboxylic acid isopropenyl esters such as isopropenyl acetate and isopropenyl propionate; vinyl ethers such as ethyl vinyl ether, isobutyl vinyl ether and cyclohexyl vinyl ether; aromatic vinyl compounds such as styrene and vinyl toluene; allyl esters such as allyl acetate and allyl benzoate; allyl ethyl ether; and allyl ethers such as allyl glycidyl ether and allyl phenyl ether.

Examples of still other ethylenically unsaturated monomer include, but not limited to, γ-(meth)acryloxypropyltrialkoxysilane, γ-(meth)acryloxypropylalkyldialkoxysilane, vinylmethyldiethoxysilane, vinylmethyldimethoxysilane, vinyldimethylethoxysilane, vinyldimethylmethoxysilane, vinyltrimethoxysilane, vinyltriethoxysilane, perfluoromethyl (meth)acrylate, perfluoropropyl (meth)acrylate, perfluoropropylmethyl (meth)acrylate, vinylpyrrolidone, 2,3-cyclohexene oxide (meth)acrylate, allyl (meth)acrylate, and combinations thereof.

<Composition of polymer layer (B)>

The polymer layer (B) contains a polymer having an ethylenically unsaturated monomer unit having an acidic group, and preferably contains a polymer (B-3) having 0.01 to 5.0% by mass of an ethylenically unsaturated monomer unit having an acidic group based on the amount of the entire monomer in the step of forming the polymer having an ethylenically unsaturated monomer unit having an acidic group, as the polymer having an ethylenically unsaturated monomer unit having an acidic group.

The polymer layer (B) more preferably contains a polymer having a weakly acidic monomer unit derived from an ethylenically unsaturated monomer having a weakly acidic group, further preferably contains a polymer (B-1) having a weakly acidic monomer unit derived from an ethylenically unsaturated monomer having a phosphoric acid group.

The polymer layer (B) also preferably contains a polymer having 0.01 to 5.0% by mass of a weakly acidic monomer unit derived from an ethylenically unsaturated monomer having a weakly acidic group, based on the amount of the entire monomer, and more preferably contains a polymer having 0.01 to 5.0% by mass, more preferably 0.1 to 4.0% by mass of a weakly acidic monomer unit derived from an ethylenically unsaturated monomer having a phosphoric acid group, based on the amount of the entire monomer in the step of forming the polymer (B-1), as the polymer (B-1) having a weakly acidic monomer unit derived from an ethylenically unsaturated monomer having a phosphoric acid group.

The polymer layer (B) preferably contains a polymer having 0.01 to 2.0% by mass of a weakly acidic monomer unit derived from an ethylenically unsaturated monomer having a weakly acidic group, preferably a phosphoric acid group, based on the amount of the entire monomer, and the polymer layer (B) further preferably contains a polymer having 0.05 to 2.0% by mass of a weakly acidic monomer unit derived from an ethylenically unsaturated monomer having a weakly acidic group, preferably a phosphoric acid group, based on the amount of the entire monomer.

Herein, the "amount of the entire monomer" means the amount of any monomer for use in the polymerization step during formation of the polymer layer (B), provided that the amount of the monomer forming the particle (A) is not included when the material of the particle (A) is a polymer.

When the step of forming the polymer (B-1) having a weakly acidic monomer unit derived from an ethylenically unsaturated monomer having a phosphoric acid group is separately performed from a formation step of a polymer (B-2) having a basic monomer unit derived from an ethylenically unsaturated monomer having a nitrogen functional group, described below, the "amount of the entire monomer" serving as the basis of the content of the weakly acidic monomer unit derived from an ethylenically unsaturated monomer having a phosphoric acid group means the amount of the entire monomer used in the step of forming the polymer (B-1).

The content of the weakly acidic monomer unit derived from an ethylenically unsaturated monomer having a phosphoric acid group can be controlled by adjusting the amount of the ethylenically unsaturated monomer having a phosphoric acid group, to be used, relative to the entire monomer used in the step of forming the polymer (B-1).

When the amount of an ethylenically unsaturated monomer having an acidic group, preferably a weakly acidic group, more preferably a phosphoric acid group, to be used, is 4.0% by mass or less relative to the entire monomer for use in the polymerization step during formation of the polymer layer (B), sufficient water resistance tends to be obtained in a coating film obtained, and when the amount is 0.01% by mass or more relative to the entire monomer used for the polymerization, favorable water dispersibility is obtained and coagulation of a water dispersion can be prevented.

The polymer layer (B) preferably contains a polymer (B-2) having a basic monomer unit derived from an ethylenically unsaturated monomer having a nitrogen functional group from the viewpoint that dispersing stability can be

18

maintained in a zwitterionic aqueous dispersion (emulsion) having properties such as absorption and desorption to other different particle, and an improvement in weather resistance, and particularly preferably contains a polymer having 0.05 to 50% by mass of a "basic monomer unit derived from an ethylenically unsaturated monomer having a nitrogen functional group" in the polymer layer (B), based on the amount of the entire monomer in the following polymer (B-2) formation step, as the polymer (B-2) having a basic monomer unit derived from an ethylenically unsaturated monomer having a nitrogen functional group.

The polymer layer (B) more preferably contains a polymer having 0.05 to 25% by mass of a "basic monomer unit derived from an ethylenically unsaturated monomer having a nitrogen functional group", based on the amount of the entire monomer in the polymer (B-2) formation step, further preferably contains a polymer having 0.1 to 15% by mass of a "basic monomer unit derived from an ethylenically unsaturated monomer having a nitrogen functional group", based on the amount of the entire monomer.

When the polymer layer (B) contains such a polymer (B-2) having a basic monomer unit derived from an ethylenically unsaturated monomer having a nitrogen functional group, an anionic or zwitterionic aqueous dispersion (emulsion) having properties such as absorption and desorption to other different particle and/or excellent light resistance is obtained, and the content can be determined within the range that enables the dispersing stability to be maintained at a pH of 7 or more.

In the step of forming the polymer (B-2) having a basic monomer unit derived from an ethylenically unsaturated monomer having a nitrogen functional group, the amount of the ethylenically unsaturated monomer having a nitrogen functional group, to be used, relative to the entire monomer used can be adjusted to thereby control the amount of the "basic monomer unit derived from an ethylenically unsaturated monomer having a nitrogen functional group".

Herein, the amount of the ethylenically unsaturated monomer having a nitrogen functional group, to be copolymerized, based on the total mass of the polymer in composite particles finally obtained (the solid content mass of the polymer in the component (C)) is preferably 0.01 to 20% by mass, more preferably 0.05 to 15% by mass.

That is, the ethylenically unsaturated monomer having a nitrogen functional group is preferably used in an amount of 0.01 to 20% by mass, more preferably 0.05 to 15% by mass, based on the total mass of the monomer for use in production of the composite particles, in production of the composite particles.

In the aqueous dispersion of composite particles (C) of the present embodiment, the polymer layer (B) preferably contains a nitrogen functional group-containing non-polymerizable monomer having 0.05 to 50% by mass, more preferably 0.1 to 25% by mass, further preferably 0.1 to 15% by mass of the basic monomer, based on the amount of the entire monomer in the step of forming the polymer (B-2).

The amount of the nitrogen functional group-containing non-polymerizable monomer is preferably 0.01 to 20% by mass, more preferably 0.05 to 15% by mass, based on the total mass of the polymer in composite particles finally obtained (the solid content mass of the polymer in the component (C)).

The nitrogen functional group-containing non-polymerizable monomer is as described above.

In the aqueous dispersion of composite particles (C) of the present embodiment, the polymer layer (B) contains a polymer (B-5) including a basic non-polymerizable monomer unit containing a non-polymerizable monomer having a nitrogen functional group, and the polymer layer (B) preferably contains a polymer including a nitrogen functional group-containing non-polymerizable monomer unit having 0.05 to 50% by mass of a basic non-polymerizable monomer unit based on the amount of the entire monomer in the step of forming the polymer (B-5) including a basic non-polymerizable monomer unit containing a non-polymerizable monomer having a nitrogen functional group, as the polymer (B-5).

Furthermore, in the aqueous dispersion of composite particles (C) of the present embodiment, preferably, the polymer layer (B) includes a polymer (B-2) having a basic monomer unit derived from an ethylenically unsaturated monomer having a nitrogen functional group and a polymer (B-5) including a basic non-polymerizable monomer unit containing a non-polymerizable monomer having a nitrogen functional group, a step of forming the polymer (B-2) having a basic monomer unit derived from an ethylenically unsaturated monomer having a nitrogen functional group and a step of forming the polymer (B-5) including a basic non-polymerizable monomer unit containing a non-polymerizable monomer having a nitrogen functional group are performed at the same time or at different stages, and

a polymer including a nitrogen functional group-containing non-polymerizable monomer unit having 0.02 to 30% by mass of a basic monomer unit derived from an ethylenically unsaturated monomer having a nitrogen functional group and 0.02 to 30% by mass of a basic non-polymerizable monomer unit based on the amount of the entire monomer in the step of forming the polymer (B-2) and the step of forming the polymer (B-5) is included as the polymer (B-2) and the polymer (B-5).

Herein, the polymer (B-5) can be produced according to emulsion polymerization by use of a predetermined monomer, as in the above polymers (B-1) and (B-2).

In the aqueous dispersion of composite particles (C) of the present embodiment, the mass ratio of the polymer (B-2)/the polymer (B-1) is preferably 0.01 to 50, more preferably 0.05 to 20, further preferably 0.1 to 10.

When the mass ratio of the polymer (B-2)/the polymer (B-1) is 50 or less, formation of an additional polymer particle can be suppressed, and when the ratio is 0.01 or more, water resistance of a coating film tends to be favorable.

When the mass ratio is more than 50, dispersing stability in production is inferior, or a particle is caused to be unstable in concentration during film formation even if stable production can be made, thereby causing deterioration in water resistance of the resulting coating film.

When the mass ratio is less than 0.01, a water-soluble oligomer derived from a monomer having a weakly acidic group dissociated is largely generated and serves as a nucleus to form an additional polymer particle, or such a water-soluble oligomer causes remarkable deterioration in water resistance of the resulting coating film.

As described above, the ethylenically unsaturated monomer having a weakly acidic group, for forming the polymer layer (B), is preferably an ethylenically unsaturated monomer having a phosphoric acid group. The ethylenically unsaturated monomer having a phosphoric acid group can be copolymerized to thereby favorably form the polymer layer (B) around the particle (A), resulting in control of absorption and desorption to other different particle.

<Mass ratio of polymer layer (B) to particle (A)>

The mass ratio of the polymer layer (B)/the particle (A) is preferably 0.01 to 100, more preferably 0.02 to 50, further preferably 0.05 to 20.

When the mass ratio is 100 or less, the formation efficiency of the polymer layer (B) is sufficient for practical use, and generation of an additional polymer particle can be suppressed. When the mass ratio is 0.01 or more, the polymer layer (B) can be sufficiently ensured in terms of the amount relative to that of the particle (A), and can be immobilized as the polymer layer.

When the component of the polymer layer (B) is excessive, an excess amount of the component B for the polymer layer (B) forms an additional particle with a polymer derived from a water-soluble monomer in the component B, as a seed, and is grown while coalescing with a particle where the particle (A) is coated with the polymer layer (B), thereby forming a coarse particle. Therefore, water resistance of the resulting coating film is inferior.

The mass ratio of the polymer layer (B)/the particle (A) can be controlled within the numerical value range by arbitrarily setting the amount of the monomer in emulsion polymerization.

(Characteristics of aqueous dispersion of composite particles (C))

In the aqueous dispersion of composite particles of the present embodiment, the zeta potential of the composite particles in the aqueous dispersion of composite particles at 60°C is -10 mV to -69 mV at any one of pH in the range of 7 to 11 of the aqueous dispersion of composite particles.

That is, the zeta potential of the composite particles in the aqueous dispersion of composite particles including an aqueous solvent containing water, and composite particles dispersed in the aqueous solvent, at 60°C, is -10 mV to -69 mV, preferably -20 mV to -65 mV, further preferably, -25 mV to -65 mV at any one of pH in the range of 7 to 11, from the viewpoint of admixture stability with an inorganic pigment particle.

The zeta potential is -10 mV to -69 mV at any one of pH in the range of 7 to 10, preferably -20 mV to -65 mV at any one of pH in the range of 8 to 10.5, more preferably -25 mV to -65 mV at any one of pH in the range of 8 to 10.5.

The composite particles included in the aqueous dispersion of composite particles of the present embodiment may be an anionic or zwitterionic particle.

The zeta potential of the composite particles can be controlled by selection of the type of a monomer having a weak acid group in emulsion polymerization and selection of the amount of the monomer, selection of the type of a surfactant in emulsion polymerization and the amount of the surfactant, selection of the pH in emulsion polymerization, selection of the type of a basic compound in emulsion polymerization and the amount of the basic compound, and furthermore the pH and the electrolyte concentration in measurement of the zeta potential.

In the aqueous dispersion of composite particles of the present embodiment, the zeta potential of the composite particles in the aqueous dispersion of composite particles at 25°C after dialysis is preferably -5 mV to -59 mV, more preferably -20 mV to -59 mV, -25 mV to -55 mV at any one of pH in the range of 7 to 11, from the viewpoint of admixture stability with an inorganic pigment particle.

The "dialysis" here refers to an operation where a surfactant component or a surfactant component adsorbing to a dispersing particle, a water-soluble oligomer component, and inorganic salts, in the aqueous phase in the aqueous dispersion of composite particles are substantially removed to take out only a dispersion particle in the form of a dispersion in water.

The zeta potential at 25°C after dialysis is preferably -10 mV to -59 mV at any one of pH in the range of 7 to 10, more preferably -20 mV to -59 mV at any one of pH in the range of 8 to 10.5, further preferably -25 mV to -55 mV at any one of pH in the range of 8 to 10.5.

The zeta potential of the composite particles in the aqueous dispersion of composite particles at 25°C after dialysis can be controlled by selection of the type of a monomer having a weak acid group in emulsion polymerization and selection of the amount of the monomer, selection of the type of a surfactant in emulsion polymerization and the amount of the surfactant, selection of the pH in emulsion polymerization, the type of a basic compound in emulsion polymerization, and the amount of the basic compound, and selection of the pH and the electrolyte concentration in measurement of the zeta potential.

With respect to the mass ratio of the ethylenically unsaturated monomer having a nitrogen functional group and the ethylenically unsaturated monomer having a phosphoric acid group in the polymer layer (B), the ethylenically unsaturated monomer having a nitrogen functional group/ethylenically unsaturated monomer having a phosphoric acid group is preferably 0 to 200, more preferably 0 to 100, further preferably 0 to 75. Thus, the aqueous dispersion of composite particles of the present embodiment can be kept in the stable dispersing state and is favorable in dispersing stability in production of the aqueous dispersion of composite particles in the pH range of 6 or more, preferably in the pH range of 7 or more, more preferably in the pH range of 8 or more.

The zeta potential in the aqueous dispersion of composite particles at 60°C is preferably a zeta potential calculated according to a method using the Smoluchowski equation, from the electrical mobility of a measurement dispersion obtained by dilution of an aqueous dispersion of composite particles having a pH of 7 to 11 so that the KCl concentration is 10 mM.

When the aqueous dispersion of composite particles has a pH of less than 7, the measurement dispersion is preferably prepared by adjustment of the pH within the range of 7 to 11 due to addition of an aqueous NaOH solution, and thereafter dilution of the aqueous dispersion of composite particles with the aqueous KCl solution.

The zeta potential can be certainly measured according to the above.

The zeta potential in the aqueous dispersion of composite particles at 25°C after dialysis is preferably a zeta potential calculated according to a method using the Smoluchowski equation, from the electrical mobility of a measurement dispersion obtained by dialysis of an aqueous dispersion of composite particles diluted with an aqueous 1 mM NaOH solution and dilution of the aqueous dispersion of composite particles having a pH of 7 to 11, after dialysis, so that a KCl concentration is 10 mM.

When the aqueous dispersion of composite particles after dialysis has a pH of less than 7, the measurement dispersion is preferably prepared by adjustment of the pH within the range of 7 to 11 due to addition of an aqueous NaOH solution, and thereafter dilution of the aqueous dispersion of composite particles with an aqueous KCl solution.

The zeta potential can be certainly measured according to the above.

(Other component(s) of aqueous dispersion of composite particles)

In order to keep long-term storage stability of the aqueous dispersion of composite particles of the present embodiment, the pH of the aqueous dispersion of composite particles is preferably adjusted within the range of 7 to 10 by use of ammonia, sodium hydroxide, potassium hydroxide, or amine such as dimethylaminoethanol.

The volume ratio (composite particles/aqueous medium) of the dispersed material (composite particles) and the dispersing medium (aqueous medium) in the aqueous dispersion of composite particles of the present embodiment is preferably 70/30 or less, more preferably 5/95 or more and 60/40 or less.

The aqueous medium can contain not only water, but also a hydrophilic solvent, for example, alcohol such as ethanol and isopropyl alcohol, ketone such as acetone, and ether such as dioxane and tetrahydrofuran.

The aqueous dispersion of composite particles of the present embodiment can be optionally compounded with a component usually added and compounded in an aqueous paint material or the like, such as, a film formation aid, a thickener, a defoamer, a pigment, a dispersant, a dye, a preservative, an ultraviolet absorber, a light stabilizer, and a colloidal inorganic particle.

In particular, a colloidal inorganic particle is effective for more enhancing contamination resistance. The content of the colloidal inorganic particle is preferably 1 to 50% by mass, more preferably 2 to 15% by mass based on the mass of the composite particles of the aqueous dispersion of composite particles. When the content of the colloidal inorganic particle is within the range, a coating film formed from the aqueous dispersion of composite particles is hardly whitened even if immersed in water.

The aqueous dispersion of composite particles may contain a polymer dispersion stabilizer such as a (partially saponified) polyvinyl alcohol, methylcellulose, hydroxyethylcellulose, or polyvinylpyrrolidone; a thickener such as a polyether-based thickener; a plasticizer, a film formation aid, or a combination thereof.

The aqueous dispersion of composite particles may be compounded with a component usually added and compounded in a paint material, various coating materials, and the like, such as, a viscosity modifier, a pH adjuster, a defoamer, a pigment, a filler, a dispersant, a dye, a preservative, a surfactant, a heat stabilizer, an ultraviolet absorber, an antioxidant, a light stabilizer, a flame retardant, an organic solvent, a wetting agent, a surfactant, a thickener, a plasticizer, a film formation aid, and a rust inhibitor. Such a component can be dispersed in the aqueous dispersion of composite particles by use of a grinding machine such as an attritor or a sand mill, and the aqueous dispersion of composite particles can be adjusted so as to have a predetermined viscosity.

[Method for producing aqueous dispersion of composite particles]

A method for producing an aqueous dispersion of composite particles of the present embodiment is a method for producing an aqueous dispersion of composite particles, including a step of forming a polymer layer (B) on at least a part of the surface of a particle (A), wherein
the aqueous dispersion of composite particles includes composite particles where a polymer layer (B) is formed on at least a part of the surface of a particle (A),
the particle (A) is an inorganic particle or a polymer particle,
the polymer layer (B) includes a polymer (B-3) having 0.01 to 5.0% by mass of an ethylenically unsaturated monomer unit having at least one acidic group, and
the step of forming a polymer layer (B) includes

a step of forming the polymer (B-3) by emulsion polymerization in a state where an ethylenically unsaturated monomer having an acidic group is at least partially neutralized, in a dispersion liquid of the particles (A) whose pH is adjusted to 6 or more, and
a step of, thereafter, forming a polymer (B-4) including 50 to 100% by mass of a nonionic ethylenically unsaturated monomer unit and 5.0% by mass or less of an ethylenically unsaturated monomer unit having an acidic group, by emulsion polymerization in an aqueous medium.

Composite particles included in an aqueous dispersion of composite particles obtained by the method for producing an aqueous dispersion of composite particles of the present embodiment has a particle (A) and a polymer layer (B) with which at least a part of the surface of the particle (A) is coated.
The method for producing an aqueous dispersion of composite particles of the present embodiment includes a step of forming the polymer layer (B) on at least a part of the surface of the particle (A), the particle (A) is an inorganic particle or a polymer particle, and the polymer layer (B) includes the polymer (B-3) having 0.01 to 5.0% by mass of an ethylenically unsaturated monomer unit having at least one acidic group.
The polymer layer (B) can be formed by performing emulsion polymerization in the presence of the particle (A) and a predetermined monomer.
The method for producing an aqueous dispersion of composite particles of the present embodiment includes, for example, a step of polymerizing a predetermined monomer (ethylenically unsaturated monomer) in a dispersion liquid including water, the particle (A) and a surfactant, to form the polymer layer (B) with which at least a part of the surface of the particle (A) is coated.
Preferably, a predetermined amount of the surfactant is mixed with a dispersion liquid including water and the particle (A), and thereafter a monomer is added to the dispersion liquid.
The method of introducing the monomer is not particularly limited, and preferably, the monomer, and water and the surfactant are formed into a monomer mixture in the form of an emulsified liquid, by a homogenizer, and the monomer or the monomer mixture is stepwise or continuously added to a reaction system and the introduction speed is determined so that heat of the reaction system can be removed.
The polymer layer (B) formed in the method for producing an aqueous dispersion of composite particles of the present embodiment includes the polymer (B-3) and the polymer (B-4), and the method for producing an aqueous dispersion of composite particles of the present embodiment includes a step of forming the polymer (B-3) on at least a part of the surface of the particle (A) and then forming the polymer (B-4) thereon.
In the method for producing an aqueous dispersion of composite particles of the present embodiment, an ethylenically unsaturated monomer having an acidic group is used as the monomer in the course of polymerization for formation of the polymer (B-3).
That is, the polymer (B-3) has an acidic monomer unit derived from an ethylenically unsaturated monomer unit having at least one acidic group. Specifically, the polymer layer (B) includes a polymer (B-3) having 0.01 to 5.0% by mass of an ethylenically unsaturated monomer unit having at least one acidic group, and preferably includes a polymer (B-3) having 0.05 to 4.0% by mass, more preferably 0.1 to 2.0% by mass of the monomer unit.
When the polymer layer (B) includes the polymer (B-3) having 0.01 to 5.0% by mass of an ethylenically unsaturated monomer unit having at least one acidic group, the dispersing state in production can be stabilized and the effect of stabilizing admixing with an inorganic pigment particle described below is obtained.
The polymer (B-3) can be controlled so as to be a polymer having an ethylenically unsaturated monomer unit within the above range, by adjustment of the amount of the ethylenically unsaturated monomer having an acidic group, to be used, in the polymerization step, and copolymerization with an ethylenically unsaturated monomer having an amide bond, or an ethylenically unsaturated monomer having a hydroxyl group or a PEG group (polyethylene oxide group).
In the method for producing an aqueous dispersion of composite particles of the present embodiment, a polymer layer is produced by formation of a polymer (B-4) having 50 to 100% by mass of a nonionic monomer unit and 5.0% by mass or less of an ethylenically unsaturated monomer unit having an acidic group, by emulsion polymerization in an aqueous medium, in order to control generation of an additional polymer particle other than the particle (A), in the course of polymerization for formation of the polymer (B-4) in the polymer layer (B).

The polymer layer is preferably produced by formation of a polymer (B-4) including 50 to 100% by mass of a nonionic monomer unit and 2.0% by mass or less of an ethylenically unsaturated monomer unit having an acidic group, by emulsion polymerization in an aqueous medium, further preferably produced by formation of a polymer (B-4) including 50 to 100% by mass of a nonionic monomer unit and 0.5% by mass or less of an ethylenically unsaturated monomer unit having an acidic group, by emulsion polymerization in an aqueous medium.

The polymer (B-4) can be controlled so as to be a polymer having each monomer unit within the above range, by adjustment of the amounts of a nonionic ethylenically unsaturated monomer and the ethylenically unsaturated monomer having an acidic group, to be used, in the polymerization step, and copolymerization with an acrylamide-based, ethylenically unsaturated monomer, or an ethylenically unsaturated monomer having a hydroxyl group or a PEG group.

In the method for producing an aqueous dispersion of composite particles of the present embodiment, the step of forming the polymer layer (B) is performed by formation of the polymer (B-3) by emulsion polymerization in an aqueous medium in a state where the ethylenically unsaturated monomer having an acidic group is at least partially neutralized, in the dispersion liquid of the particles (A) whose pH is adjusted to 6 or more, preferably 7 or more, more preferably 7.6 or more, further preferably 8 or more, and thereafter formation of the polymer (B-4) by emulsion polymerization in an aqueous medium.

Herein, adjustment of the combination with respect to the type of the surfactant and the amount of the surfactant to be used, adjustment of the type of an ionic ethylenically unsaturated monomer having an anionic terminal group and the amount of the monomer to be used, adjustment of the amount of a persulfate of a water-soluble initiator, to be used, and keeping of the pH of the dispersion liquid in polymerization to 6 or more can be each appropriately performed, and any combination thereof can be adopted. Thus, the pH is maintained to 6 or more, preferably 7 or more, more preferably 7.6 or more, further preferably 8 or more.

When the pH of the dispersion liquid of the particles (A) in the step of forming the polymer layer (B) is 6 or more, sufficient dispersing stability can be obtained and particle coagulation can be effectively prevented in the course of polymerization after monomer introduction.

(Aqueous medium)

The aqueous medium in formation of the polymer layer (B), which can be used, is the same as that described in the section [Aqueous dispersion of composite particles (C)].

(Composite particles)

Composite particles included in the aqueous dispersion of composite particles obtained by the production method of the present embodiment includes a particle (A), and a polymer layer (B) with which at least a part of the surface of the particle (A) is coated, and the particle (A) is an inorganic particle or a polymer particle (A).

The structure of the composite particles, which can be adopted, is the same as that described in the section [Aqueous dispersion of composite particles (C)].

The aqueous dispersion of composite particles obtained by the production method of the present embodiment may include not only the particle (A) coated with the polymer layer (B), but also a particle (A) disposed on the surface of a polymer particle forming the polymer layer (B). Such a configuration that can be adopted is the same as that described in the section [Aqueous dispersion of composite particles (C)].

The aqueous dispersion of composite particles obtained by the production method of the present embodiment may include not only the composite particles where the particle (A) is dispersed in the state of being individually coated with the polymer layer (B), but also a particle (A) not coated with the polymer layer (B). In this case, the zeta potential of the composite particles in the aqueous dispersion of composite particles obtained by the production method of the present embodiment can be easily exhibited at a low value. The coating state of the particle (A) with the polymer layer (B), which can be adopted, is the same as that described in the section [Aqueous dispersion of composite particles (C)].

<Particle (A)>

The particle size (average particle size) of the particle (A) for use in the method for producing an aqueous dispersion of composite particles of the present embodiment is preferably 1 nm to 5 μm, more preferably 1 nm to 500 nm, further preferably 3 nm to 250 nm from the viewpoint of transparency of a coating film formed from the composite particles.

[Inorganic particle]

The inorganic particle usable as the particle (A), which can be used, is the same as that described in the section [Aqueous dispersion of composite particles (C)].

[Polymer particle]

The polymer particle usable as the particle (A), which can be used, is the same as that described in the section [Aqueous dispersion of composite particles (C)].

[Particle coated with silica]

The particle (A) may include a particle coated with silica.
The particle coated with silica, which can be used, is also the same as that described in the section [Aqueous dispersion of composite particles (C)].

<Polymer layer (B)>

In the method for producing an aqueous dispersion of composite particles of the present embodiment, the polymer layer (B) is obtained by, as described above, formation of the "polymer (B-3) having 0.01 to 5.0% by mass of an ethylenically unsaturated monomer unit having at least one acidic group" in a state where the ethylenically unsaturated monomer having an acidic group is at least partially neutralized, by emulsion polymerization, in the dispersion liquid of the particles (A) whose pH is adjusted to 6 or more, and thereafter formation of the "polymer (B-4) including 50 to 100% by mass of a nonionic ethylenically unsaturated monomer unit and 5.0% by mass or less of an ethylenically unsaturated monomer unit having an acidic group", by emulsion polymerization in an aqueous medium.
While there may be a case where the polymer layer (B) contains the polymer (B-2) having a basic monomer unit derived from an ethylenically unsaturated monomer having a nitrogen functional group and the polymer (B-5) including a basic non-polymerizable monomer unit containing a non-polymerizable monomer having a nitrogen functional group in the aqueous dispersion of composite particles of the present embodiment, as described above, the polymer layer (B) is obtained in such a case by formation of the polymer (B-2) by emulsion polymerization by use of a predetermined monomer in the dispersion liquid of the particles (A) whose pH is adjusted to 6 or more, and formation of the polymer (B-5) by emulsion polymerization at the same time or at different stages, as described above.

[Ethylenically unsaturated monomer having acidic group]

An ethylenically unsaturated monomer having an acidic group, for example, at least one group selected from the group consisting of a carboxylic acid group, a phosphoric acid group and a sulfonic acid group, is used as the ethylenically unsaturated monomer having an acidic group.
Examples of the ethylenically unsaturated monomer having a carboxylic acid group include, but not limited to, itaconic acid, fumaric acid, maleic acid, maleic anhydride, maleic acid and monoesters thereof, and acrylic acid, methacrylic acid and crotonic acid.
Examples of the ethylenically unsaturated monomer having a phosphoric acid group include the following.
The phosphoric acid group (phosphonic acid group) here mentioned encompasses, but not limited to, a phosphorus acid group, and further encompasses a phosphoric acid ester group (phosphate group) and a phosphorous acid ester group (phosphonate group).
Examples thereof include dihydrogen phosphate esters of alcohols including a polymerizable vinyl group or an olefin group (allyl phosphate, and mono- or diphosphate of bis(hydroxymethyl)fumarate or itaconate), (meth)acrylate derivatives, phosphate of hydroxyalkyl (meth)acrylate, phosphate monoester of 2-hydroxyethyl (meth)acrylate, phosphate monoester of 2-hydroxypropyl (meth)acrylate, phosphate monoester of 3-hydroxypropyl (meth)acrylate, phosphate diester of 2-hydroxyethyl (meth)acrylate, phosphate diester of 2-hydroxypropyl (meth)acrylate, phosphate diester of 3-hydroxypropyl (meth)acrylate, (meth)acryloyloxyalkyl monophosphate, (meth)acryloyloxy polyoxyethylene glycol acid phosphate, and (meth)acryloyloxy polyoxypropylene glycol acid phosphate, and these may be used singly or in combinations of two or more. A commercially available ethylenically unsaturated monomer having a phosphoric acid group is not particularly limited, and examples thereof include Light Acrylate (registered trademark) P-1A(N), Light Ester (registered trademark) P-1M and Light Ester (registered trademark) P-2M that are available from Kyoeisha Chemical Co., Ltd., PPME, PMR12 and PPM-5P that are available from TOHO Chemical Industry Co., Ltd., SIPOMER (registered trademark) PAM-100, SIPOMER (registered trademark) PAM-200, SIPOMER (registered trademark) PAM-300 and SIPOMER (registered trademark) PAM-400 that are available from Rhodia, Inc., Phosmer (registered trademark) M, Phosmer (registered trademark) PE and Phosmer (registered trademark) PP that are available from Uni-Chemical Co., Ltd., and MR-200 and MR-260 that are available from Daihachi Chemical Industry Co., Ltd.

Examples of other monomer having a phosphoric acid group include, but not limited to, vinylphosphonic acid, allylphosphonic acid, 2-acrylamide-2-methylpropanephosphonic acid, $\alpha$-phosphonostyrene, 2-methylacrylamide-2-methylpropanephosphonic acid, and Phosmer CL that is available from Uni-Chemical Co., Ltd., and examples of a monomer having a phosphorous acid group include 2-phosphoethyl (meth)acrylate, 2-phosphopropyl (meth)acrylate and 3-phosphopropyl (meth)acrylate.

Examples of the ethylenically unsaturated monomer having a sulfonic acid group include, but not limited to, $\alpha$-olefin sulfonic acid including allylsulfonic acid, p-styrenesulfonic acid, 2-acrylamide-2-methylpropanesulfonic acid, and 3-allyloxy-2-hydroxy-1-propanesulfonic acid.

Salts of such acids (for example, an alkali metal salt and an ammonium salt) can also be included in the "ethylenically unsaturated monomer having a carboxyl group", "ethylenically unsaturated monomer having a phosphoric acid group", and "ethylenically unsaturated monomer having a sulfonic acid group".

Examples of the alkali metal salt or the ammonium salt include, but not limited to, a lithium salt, a sodium salt, a potassium salt, an ammonium salt, an alkanol ammonium salt, and an ammonium salt of basic amino acid.

That is, the method for producing an aqueous dispersion of composite particles of the present embodiment preferably includes a step of forming the polymer (B-3) by emulsion polymerization in a state where any ethylenically unsaturated monomer having an acidic group selected from the group consisting of an ethylenically unsaturated monomer having a carboxyl group, an ethylenically unsaturated monomer having a phosphoric acid group and an ethylenically unsaturated monomer having a sulfonic acid group is used and the acidic group is at least partially neutralized, in the dispersion liquid of the particles (A) made of the inorganic particle or the polymer particle, where the pH is adjusted to 6 or more, preferably 7 or more, more preferably 7.6 or more, further preferably 8 or more.

In the step of forming the polymer layer (B), the amount of at least one ethylenically unsaturated monomer unit having an acidic group selected from the group consisting of an ethylenically unsaturated monomer having a carboxyl group, an ethylenically unsaturated monomer having a phosphoric acid group, and an ethylenically unsaturated monomer having a sulfonic acid group, to be used, is preferably as small as 0.005 to 4.0% by mass, more preferably 0.01 to less than 1.0% by mass, further preferably 0.01 to less than 0.5% by mass, still more preferably 0.05 to 0.4% by mass based on the total mass (solid content mass of component (C)) of composite particles finally obtained, thereby resulting in a tendency to impart excellent dispersing stability with an inorganic pigment particle, to allow a coating film to achieve excellent water resistance.

According to the above method, the polymer layer (B) includes a polymer including 0.005 to 4.0% by mass of at least one ethylenically unsaturated monomer unit having an acidic group selected from the group consisting of an ethylenically unsaturated monomer having a carboxyl group, an ethylenically unsaturated monomer having a phosphoric acid group, and an ethylenically unsaturated monomer having a sulfonic acid group, based on the total mass (solid content mass of component (C)) of the composite particles.

In the step of forming the polymer layer (B), the amount of an ethylenically unsaturated monomer having an acidic group, consisting of an ethylenically unsaturated monomer having a phosphoric acid group, to be used, is preferably as small as 0.001 to less than 1.0% by mass, more preferably 0.05 to less than 0.5% by mass based on the total mass (solid content mass of component (C)) of composite particles finally obtained, thereby resulting in a tendency to impart excellent dispersing stability with an inorganic pigment particle, to allow a coating film to achieve excellent water resistance.

According to the method, the polymer layer (B) includes a polymer including 0.001 to less than 1.0% by mass of an ethylenically unsaturated monomer unit having an acidic group, including an ethylenically unsaturated monomer having a phosphoric acid group, based on the total mass of the composite particles.

When the amount of a predetermined monomer to be used exceeds the above range, an additional particle tends to be generated in a production process, causing formation of the polymer layer (B) relative to the particle (A) to be insufficient.

In the method for producing an aqueous dispersion of composite particles of the present embodiment, the pH of the dispersion liquid of the particles (A) can be adjusted to 6 or more, by adjustment of the combination with respect to the type of the surfactant and the amount thereof to be used, adjustment of the type of the ethylenically unsaturated monomer having an acidic group and the amount thereof to be used, and adjustment of the amount of a persulfate of a water-soluble initiator, to be used, and such adjustments may be used singly or in combinations of two or more.

The dispersion liquid of the particles (A) in the step of formation of the polymer layer (B) by polymerization is kept at a pH of 6 or more, preferably 7 or more, more preferably 7.6 or more, further preferably 8 or more.

When the pH of the dispersion liquid of the particles (A) is 6 or more, sufficient dispersing stability can be ensured and particle coagulation can be effectively prevented in the course of polymerization after monomer introduction.

The method for producing an aqueous dispersion of composite particles of the present embodiment preferably further includes a step of forming a polymer (B-4) including 50 to 99.95% by mass of a nonionic ethylenically unsaturated monomer unit, 5.0% by mass or less of an ethylenically unsaturated monomer unit having an acidic group and 0.05 to 50% by mass of an ethylenically unsaturated monomer unit having a nitrogen functional group, by emulsion polymerization in the step of forming the polymer (B) layer, for the purposes of controlling absorption and desorption of the dispersion particle of the aqueous dispersion of composite particles, to other different particle, and of improving light resistance.

Specifically, as the polymer (B-4), a polymer including 50 to 99.95% by mass of a nonionic ethylenically unsaturated monomer unit, 0.05 to 50% by mass of a monomer unit derived from an ethylenically unsaturated monomer having a nitrogen functional group, and 0 to 5% by mass of an ethylenically unsaturated monomer unit having an acidic group is preferably formed, a polymer including 0.1 to 25% by mass of a monomer unit derived from an ethylenically unsaturated monomer having a nitrogen functional group, 0 to 2% by mass of an ethylenically unsaturated monomer unit having an acidic group, and 75 to 99.9% by mass of a nonionic ethylenically unsaturated monomer unit is more preferably formed, and a polymer including 0.1 to 25% by mass of a monomer unit derived from an ethylenically unsaturated monomer having a nitrogen functional group, 0 to 0.5% by mass of an ethylenically unsaturated monomer unit having an acidic group, and 75 to 99.9% by mass of a nonionic ethylenically unsaturated monomer unit is further preferably formed.

A polymer having each monomer within the above range can be formed, thereby providing a zwitterionic latex (emulsion), and maintaining dispersing stability of the latex.

If the monomer unit derived from an ethylenically unsaturated monomer having a nitrogen functional group is included in an amount not falling within the numerical value range, water resistance of a coating film obtained from the latex may be remarkably deteriorated.

When the polymer layer (B) includes a polymer having a monomer unit derived from an ethylenically unsaturated monomer having a nitrogen functional group, as the polymer (B-4), an anionic or zwitterionic latex (emulsion) allowing for control of generation of an additional polymer particle other than the particle (A) and having excellent light resistance properties is obtained. Herein, the content of the ethylenically unsaturated monomer having a nitrogen functional group is determined within the range that enables the dispersing stability to be maintained at a pH of 7 or more.

Herein, emulsion polymerization of an ethylenically unsaturated monomer having an acidic group, used as the monomer for use in formation of the polymer (B-3), can be performed to introduce the acidic group, and thereafter emulsion polymerization of an ethylenically unsaturated monomer having a nitrogen functional group, used as the monomer for use in formation of the polymer (B-4), can be performed, thereby stably providing a polymer having the ethylenically unsaturated monomer unit having a nitrogen functional group on the same particle.

In the method for producing an aqueous composite particle latex of the present embodiment, preferably, a polymer (B-3) having 0.01 to 5.0% by mass of an acidic monomer unit derived from an ethylenically unsaturated monomer having at least one acidic group, in the dispersion liquid of the particles (A) whose pH is adjusted to 6 or more, preferably 7 or more, more preferably 7.6 or more, further preferably 8 or more, is formed on a particle by emulsion polymerization, and a polymer having a basic monomer unit derived from an ethylenically unsaturated monomer having a nitrogen functional group, as the polymer (B-4), is formed on the same particle by emulsion polymerization.

The polymer formation on the same particle means that a polymer layer with which at least a part of the surface of the particle (A) is coated is allowed to be present.

Examples of the nitrogen functional group include, but not limited to, an amino group, a monoalkylamino group, a dialkylamino group, and a quaternized amino group.

[Ethylenically unsaturated monomer having nitrogen functional group]

As the ethylenically unsaturated monomer having a nitrogen functional group, specifically, aminoalkyl (meth)acrylate, or a compound having a 5- or 6-membered heterocyclic ring with nitrogen as a hetero atom can be applied.

Specifically, there can be used the same as that recited as the ethylenically unsaturated monomer having a nitrogen functional group, which can be used in the polymerization step for formation of the polymer layer (B), in the section [Aqueous dispersion of composite particles (C)].

[Nonionic ethylenically unsaturated monomer]

Examples of the nonionic ethylenically unsaturated monomer include acrylate, methacrylate, and a copolymerizable monomer therewith. In the present specification, acrylic acid and methacrylic acid may be collectively designated as (meth)acrylic acid.

The copolymerizable monomer with (meth)acrylate is not particularly limited, and examples thereof include a (meth)acrylamide-based monomer, vinyl cyanide, an ethylenically unsaturated monomer having an amide group or a keto group, and an ethylenically unsaturated monomer having a hydroxyl group or a PEG group.

Examples of the (meth)acrylate include, but not limited to, (meth)acrylic acid alkyl ester containing an alkyl moiety having 1 to 18 carbon atoms, (meth)acrylic acid hydroxyalkyl ester containing an alkyl moiety having 1 to 18 carbon atoms, (poly)oxyethylene (meth)acrylate having 1 to 100 oxyethylene groups, (poly)oxypropylene (meth)acrylate having 1 to 100 oxypropylene groups, and (poly)oxyethylene di(meth)acrylate having 1 to 100 oxyethylene groups.

Examples of the (meth)acrylic acid alkyl ester include, but not limited to, methyl (meth)acrylate, ethyl (meth)acrylate, n-butyl (meth)acrylate, tert-butyl (meth)acrylate, 2-ethylhexyl (meth)acrylate, cyclohexyl (meth)acrylate, methylcyclohexyl (meth)acrylate, dodecyl (meth)acrylate, isobornyl (meth)acrylate, stearyl (meth)acrylate, and adamantyl (meth)acrylate.

Examples of the ethylenically unsaturated monomer having a hydroxyl group or a PEG group include, but not limited to, 2-hydroxyethyl (meth)acrylate, 2-hydroxypropyl (meth)acrylate, and 2-hydroxycyclohexyl (meth)acrylate, as (meth)acrylic acid hydroxyalkyl ester.

Examples of the (poly)oxyethylene (meth)acrylate include, but not limited to, ethylene glycol (meth)acrylate, ethylene glycol methoxy(meth)acrylate, diethylene glycol (meth)acrylate, diethylene glycol methoxy(meth)acrylate, tetraethylene glycol (meth)acrylate, and tetraethylene glycol methoxy(meth)acrylate.

Examples of the (poly)oxypropylene (meth)acrylate include, but not limited to, propylene glycol (meth)acrylate, propylene glycol methoxy(meth)acrylate, dipropylene glycol (meth)acrylate, dipropylene glycol methoxy(meth)acrylate, tetrapropylene glycol (meth)acrylate, and tetrapropylene glycol methoxy(meth)acrylate.

Examples of the (poly)oxyethylene di(meth)acrylate include, but not limited to, ethylene glycol di(meth)acrylate, diethylene glycol di(meth)acrylate, diethylene glycol methoxy(meth)acrylate, and tetraethylene glycol di(meth)acrylate.

Examples of the (meth)acrylamide-based ethylenically unsaturated monomer compound include, but not limited to, (meth)acrylamide, N-methylol (meth)acrylamide, N-butoxymethyl (meth)acrylamide, dimethyl (meth)acrylamide, diethyl (meth)acrylamide, vinylpyrrolidone, diacetone (meth)acrylamide, and (meth)acryloyl morpholine.

Examples of the vinyl cyanide include, but not limited to, (meth)acrylonitrile and N,N'-methylenebisacrylamide.

Examples of the ethylenically unsaturated monomer having an aldo group or a keto group include, but not limited to, acrolein, diacetone acrylamide, diacetone methacrylamide, vinyl methyl ketone, vinyl ethyl ketone, acetoacetoxyethyl methacrylate, acetoacetoxyethyl acrylate, formylstyrol, and combinations thereof.

Examples of the nonionic ethylenically unsaturated monomer having two or more ethylenic groups include, but not limited to, allyl (meth)acrylate, diallyl phthalate, dienes such as butadiene, and divinylbenzene, and further examples include di(meth)acrylates of polyhydric alcohols having 1 to 10 carbon atoms, such as ethylene glycol di(meth)acrylate, propylene glycol di(meth)acrylate, 1,3-butanediol di(meth)acrylate, 1,4-butanediol di(meth)acrylate, 1,6-hexanediol di(meth)acrylate, ethylene oxide-modified 1,6-hexanediol di(meth)acrylate, 1,9-nonanediol di(meth)acrylate, propylene oxide-modified neopentyl glycol di(meth)acrylate, and tripropylene glycol di(meth)acrylate; alkyl di(meth)acrylates where the addition molar number of an alkylene oxide group having 2 to 4 carbon atoms is 2 to 50, such as polyethylene glycol di(meth)acrylate where the addition molar number of ethylene oxide is 2 to 50, polypropylene glycol di(meth)acrylate where the addition molar number of propylene oxide is 2 to 50, and tripropylene glycol di(meth)acrylate; tri(meth)acrylates of polyhydric alcohols having 1 to 10 carbon atoms, such as ethoxylated glycerin tri(meth)acrylate, propylene oxide-modified glycerol tri(meth)acrylate, ethylene oxide-modified trimethylol propane tri(meth)acrylate, trimethylol propane tri(meth)acrylate, pentaerythritolmonohydroxy tri(meth)acrylate, and trimethylol propane triethoxy tri(meth)acrylate; tetra(meth)acrylates of polyhydric alcohols having 1 to 10 carbon atoms, such as pentaerythritol tetra(meth)acrylate, dipentaerythritol tetra(meth)acrylate, and ditrimethylol propane tetra(meth)acrylate; penta(meth)acrylates of polyhydric alcohols having 1 to 10 carbon atoms, such as pentaerythritol penta(meth)acrylate and dipentaerythritol (monohydroxy) penta(meth)acrylate; hexa(meth)acrylates of polyhydric alcohols having 1 to 10 carbon atoms, such as pentaerythritol hexa(meth)acrylate; epoxy group-containing (meth)acrylates such as bisphenol A di(meth)acrylate, 2-(2'-vinyloxyethoxyethyl) (meth)acrylate, and epoxy (meth)acrylate; and polyfunctional (meth)acrylates such as urethane (meth)acrylate.

These nonionic ethylenically unsaturated monomers having two or more ethylenic groups may be used singly or in combinations of two or more. In the present specification, a diethylenically unsaturated monomer having a phosphoric acid group is included in the ethylenically unsaturated monomer having a phosphoric acid group.

Examples of an ethylenically unsaturated monomer other than the above, which can be used for formation of the polymer layer (B), include, but not limited to, olefins such as ethylene, propylene and isobutylene; haloolefins such as vinyl chloride and vinylidene chloride; carboxylic acid vinyl esters such as vinyl acetate, vinyl propionate, vinyl n-butyrate, vinyl benzoate, vinyl p-t-butylbenzoate, vinyl pivalate, vinyl 2-ethylhexanoate, vinyl versatate and vinyl laurate; carboxylic acid isopropenyl esters such as isopropenyl acetate and isopropenyl propionate; vinyl ethers such as ethyl vinyl ether, isobutyl vinyl ether and cyclohexyl vinyl ether; aromatic vinyl compounds such as styrene and vinyl toluene; allyl esters such as allyl acetate and allyl benzoate; allylethyl ether; and allyl ethers such as allyl glycidyl ether and allyl phenyl ether.

Examples of still other ethylenically unsaturated monomer include, but not limited to, perfluoromethyl (meth)acrylate, perfluoropropyl (meth)acrylate, perfluoropropylmethyl (meth)acrylate, vinylpyrrolidone, 2,3-cyclohexene oxide (meth)acrylate, allyl (meth)acrylate, and combinations thereof.

In the method for producing an aqueous dispersion of composite particles of the present embodiment, the polymer layer (B) preferably includes a polymer obtained by emulsion polymerization of a monomer component having 2.0% by mass or less of an ethylenically unsaturated monomer having a hydrolyzable silane group and/or a monomer having a hydrolyzable silane group and a mercapto group, as the polymer (B-3).

More preferably, the polymer layer (B) includes a polymer obtained by emulsion polymerization of a monomer component having 1.0% by mass or less, further preferably 0.5% by mass or less of an ethylenically unsaturated monomer having a hydrolyzable silane group and/or a monomer having a hydrolyzable silane group and a mercapto group, as the polymer (B-3).

When the ethylenically unsaturated monomer unit having a hydrolyzable silane group and/or the monomer having a hydrolyzable silane group and a mercapto group is in an amount of 2.0% by mass or less, favorable dispersing stability can be obtained and coagulation during emulsion polymerization can be prevented.

Examples of the ethylenically unsaturated monomer having a hydrolyzable silane group include, but not limited to, γ-(meth)acryloxypropyltrialkoxysilane, γ-(meth)acryloxypropylalkyldialkoxysilane, vinylmethyldiethoxysilane, vinylmethyldimethoxysilane, vinyldimethylethoxysilane, vinyldimethylmethoxysilane, vinyltrimethoxysilane and vinyltriethoxysilane.

Examples of the monomer having a hydrolyzable silane group and a mercapto group include, but not limited to, 3-mercaptopropyltrimethoxysilane and 3-mercaptopropylmethyldimethoxysilane.

The constituent component of the monomer of the polymer (B-3), and the constituent component of the monomer of the polymer (B-4), forming the polymer layer (B), are preferably different from each other from the viewpoint that dispersing stability of a particle being subjected to emulsion polymerization is maintained to suppress generation of a water-soluble oligomer.

In the method for producing the aqueous dispersion of composite particles (C) of the present embodiment, it is preferable in the step of forming the polymer (B) layer, particularly, in the step of formation of the polymer (B-4) by polymerization to involve a non-copolymerizable ultraviolet absorber and/or a non-copolymerizable light stabilizer. Thus, high weather resistance can be imparted.

The amount(s) of the non-copolymerizable ultraviolet absorber and/or the non-copolymerizable light stabilizer, to be used, and specific material(s) therefor, which can be adopted, are the same as the condition(s) and material(s) described in the section [Aqueous dispersion of composite particles (C)].

[Mass ratio of polymer (B-4)/polymer (B-3)]

In the method for producing an aqueous dispersion of composite particles of the present embodiment, the composite particles are formed by formation of the polymer (B-3) and the polymer (B-4) by emulsion polymerization in the presence of the particle (A) and a predetermined monomer, as described above.

The polymer (B-3) is produced by emulsion polymerization in a state where the ethylenically unsaturated monomer having an acidic group is at least partially neutralized, in the presence of the particle (A) where the pH is adjusted to 6 or more, preferably 7 or more, more preferably 7.6 or more, further preferably 8 or more, in an aqueous medium, and the polymer (B-4) is produced by emulsion polymerization in the presence of the particle (A) and the polymer (B-3) after or during the production of the polymer (B-3).

The mass ratio of the polymer (B-4)/the polymer (B-3) is preferably 0.01 to 50, more preferably 0.05 to 20, further preferably 0.1 to 10.

When the mass ratio of the polymer (B-4)/the polymer (B-3) is 50 or less, formation of an additional polymer particle can be suppressed, and when the ratio is 0.01 or more, water resistance of a coating film tends to be favorable.

When the mass ratio is more than 50, dispersing stability in production is inferior, or a particle is caused to be unstable in concentration during film formation even if stable production can be made, thereby causing deterioration in water resistance of the resulting coating film.

When the mass ratio is less than 0.01, a water-soluble oligomer derived from a monomer having a weakly acidic group dissociated may be largely generated and serve as a nucleus to form an additional polymer particle, or such a water-soluble oligomer may cause remarkable deterioration in water resistance of the coating film.

The mass ratio of the polymer (B-4)/the polymer (B-3) can be controlled within the numerical value range by adjusting polymerization conditions, for example, the introduction speed of each monomer, the polymerization time, the polymerization temperature and the amount of a polymerization initiator, in the step of formation of each polymer by polymerization.

[Mass ratio of polymer layer (B) to particle (A)]

The mass ratio of the polymer layer (B)/the particle (A) is preferably 0.01 to 100, more preferably 0.02 to 50, further preferably 0.05 to 20.

When the mass ratio of the polymer layer (B)/the particle (A) is 100 or less, the formation efficiency of the polymer layer (B) is sufficient for practical use, and generation of an additional polymer particle can be suppressed.

When the mass ratio is 0.01 or more, the polymer layer (B) can be sufficiently ensured in terms of the amount relative to that of the particle (A), and can be immobilized as the polymer layer.

When the component of the polymer layer (B) is excessive, an excess amount of the component (B) for the polymer layer (B) may form an additional particle with a polymer derived from a water-soluble monomer in the component (B), as a seed, and may be grown while coalescing with a particle where the particle (A) is coated with the polymer layer (B), thereby forming a coarse particle, to result in a tendency to cause inferior water resistance of the coating film.

The mass ratio of polymer layer (B)/particle (A) can be controlled within the numerical value range by adjusting polymerization conditions, for example, the amount of the particle (A) to be used, the introduction speed of each monomer in the step of formation of the polymer (B) by polymerization, the polymerization time, the polymerization temperature, and the amount of a polymerization initiator.

[Surfactant in production of aqueous dispersion of composite particles]

In the method for producing an aqueous dispersion of composite particles of the present embodiment, a surfactant may be used in formation of the polymer layer (B). The surfactant preferably includes a surfactant described below.

The surfactant can be added at three stages: before the start of polymerization and/or in the initial production, during polymerization, and after the completion of polymerization.

For example, polymerization may be performed by using the ethylenically unsaturated monomer after a predetermined amount of the surfactant is mixed with the dispersion liquid including the particles (A), or polymerization may be performed by simultaneously feeding a predetermined amount of the surfactant and the ethylenically unsaturated monomer to the dispersion liquid including the particles (A), in the initial production.

An anionic surfactant can be used as a preferable surfactant.

Examples of the anionic surfactant include, but not limited to, fatty acid soap, alkyl sulfonate, alkenyl sulfonate, alkyl aryl sulfonate (for example, alkylbenzene sulfonate and alkyl diphenyl sulfonate), alkenyl aryl sulfonate, isethionate-type alkyl fatty acid ester, isethionate-type alkenyl fatty acid ester, alkyl diphenyl ether disulfonate (for example, Kao Corporation, product name: Pelex SS-L and Pelex SS-H), alkyl sulfate, alkenyl sulfate, alkyl aryl sulfate, ethoxylated alkyl phenol sulfate, alkyl allyl sulfosuccinate and dialkyl sulfosuccinate (for example, dioctyl sulfosuccinate, dihexyl sulfosuccinate, alkyl allyl sulfosuccinate (for example, Sanyo Chemical Industries, Ltd., product name: Eleminol JS-2 and JS-5), and alkyl or alkenyl 2-hydroxy(3-allyloxy)propiosulfosuccinate (for example, Kao Corporation, product name: Latemul S-120, S-180A and S-180).

The sulfonate and the sulfate refer to an alkali metal salt or an ammonium salt, and specific examples thereof include a lithium salt, a sodium salt, a potassium salt, an ammonium salt, an alkanol ammonium salt, and an ammonium salt of basic amino acid.

The surfactant preferably includes at least one selected from alkyl sulfonate, alkylbenzene sulfonate, alkyl diphenyl ether disulfonate, alkyl allyl sulfosuccinate and dialkyl sulfosuccinate.

As the anionic surfactant, a so-called reactive surfactant having a hydrophilic group and a lipophilic group, and having an ethylenically unsaturated bond group may be used in order to allow a coating film to exhibit high water resistance and warm water resistance. Examples of the anionic surfactant as the reactive surfactant include, but not limited to, an ethylenically unsaturated monomer having a sulfonic acid group, a sulfate group or a salt thereof. Specific examples thereof include a compound having a sulfonic acid group and a group that is an ammonium salt or alkali metal salt of a sulfonic acid group (ammonium sulfonate group or alkali metal sulfonate group).

Examples of the reactive surfactant include, but not limited to, a salt of polyoxyethylene alkyl propenyl phenyl ether sulfate (for example, DKS Co. Ltd., product name: Aqualon HS-10), a salt of $\alpha$-[1-[(allyloxy)methyl]-2-(phenylphenoxy)ethyl]-$\omega$-polyoxyethylene sulfate (for example, product name: Adeka Reasoap SE-1025A manufactured by Adeka Corporation), an ammonium salt of $\alpha$-sulfo-$\omega$-(1-(alkoxy)methyl)-2-(2-propenyloxy)ethoxy)-poly(oxy-1,2-ethanediyl) (for example, product name: Adeka Reasoap SR-1025 manufactured by Adeka Corporation), and ammonium=$\alpha$-sulfonato-$\omega$-1-(allyloxymethyl)alkyloxypolyoxyethylene (for example, DKS Co. Ltd., product name: Aqualon KH-10).

A nonionic surfactant or the like, other than the reactive surfactant having a hydrophilic group and a lipophilic group, and having an ethylenic double bond group, can also be used in the step of forming the polymer layer (B) in the method for producing an aqueous dispersion of composite particles of the present embodiment.

A so-called reactive surfactant having a hydrophilic group and a lipophilic group, and having an ethylenic double bond group may also be used as the nonionic surfactant in order to allow a coating film to exhibit high water resistance.

Examples of the nonionic surfactant as the reactive surfactant include, but not limited to, $\alpha$-[1-[(allyloxy)methyl]-2-(phenylphenoxy)ethyl]-$\omega$-hydroxy polyoxyethylene (for example, product name: Adeka Reasoap NE-20, NE-30 and NE-40 manufactured by Adeka Corporation), and polyoxyethylene alkyl propenyl phenyl ether (for example, DKS Co. Ltd., product name: Aqualon RN-10, RN-20, RN-30 and RN-50).

In the method for producing an aqueous dispersion of composite particles of the present embodiment, a usual surfactant, other than the reactive surfactant having a hydrophilic group and a lipophilic group, and having an ethylenic double bond group, can also be used as the surfactant. Examples of the usual surfactant include, but not limited to, non-reactive nonionic surfactants such as polyoxyethylene alkyl ether, polyoxyethylene alkyl aryl ether, polyoxyethylene sorbitan fatty acid ester and an oxyethylene-oxypropylene block copolymer.

The type of the surfactant that can be added to the aqueous composite particles latex after the completion of polymerization in the present embodiment is not particularly limited, and nonionic and/or anionic surfactant are/is preferable.

The amount of the surfactant to be added to the aqueous composite particles latex after the completion of polymerization, to be used, is preferably 10% by mass or less, more preferably 5% by mass or less based on the mass of the entire monomer. When the amount to be used is more than such a range, water resistance of a coating film obtained tends to be remarkably deteriorated.

[Polymerization initiator for production of aqueous dispersion of composite particles]

A radical polymerization initiator can be used in production of the aqueous dispersion of composite particles.

The radical polymerization initiator is a compound that is to be radically decomposed by heat or a reducible substance to result in the occurrence of radical polymerization of a monomer.

As a water-soluble polymerization initiator, there can be used water-soluble persulfate, peroxide, an azobis compound, or the like. Examples thereof include potassium persulfate, sodium persulfate, ammonium persulfate, hydrogen peroxide, t-butyl hydroperoxide and 2,2-azobis(2-diaminopropane)hydrochloride.

Examples of an oil-soluble polymerization initiator include, but not limited to, t-butylperoxybenzoate, 2,2-azobisisobutyronitrile and 2,2-azobis(2,4-dimethylvaleronitrile).

When emulsion polymerization is performed, it is preferable that the water-soluble initiator be used singly or the water-soluble initiator and the oil-soluble initiator be used in combination, and when mini-emulsion polymerization is performed, it is preferable that the oil-soluble initiator be used.

The amount of the water-soluble polymerization initiator is usually preferably 0.01 to 10% by mass, more preferably 0.01 to 1.0% by mass based on the mass of the entire monomer.

The amount of the oil-soluble polymerization initiator is usually 0.01 to 10% by mass, preferably 0.01 to 0.1% by mass based on the mass of the entire monomer.

When the polymerization speed is increased and furthermore polymerization is performed at a lower temperature, a reducing agent such as sodium bisulfite, ferrous chloride, ascorbate or Rongalite is preferably used in combination with the radical polymerization initiator.

The polymerization temperature is determined according to the decomposition temperature of the polymerization initiator, and emulsion polymerization is usually performed at a temperature equal to or less than the boiling point of water, 90°C or less.

While the polymerization time varies depending on the polymer concentration in an emulsion finally obtained in the case where emulsion polymerization or mini-emulsion polymerization is performed, the polymerization reaction time (aging time) after the monomer is fed to the dispersion liquid is preferably 10 minutes or more. A polymerization reaction time of less than that time can cause an unreacted monomer to remain.

When the monomer is polymerized, a chain transfer agent can also be added in the polymerization process in order to modulate the molecular weight after the polymerization, and such modulation can be achieved by a mixture including 0.1 to 5% by mass of a chain transfer agent.

When 0.1% by mass or less of a chain transfer agent is added, the viscosity of an aqueous solution or aqueous dispersion tends to be high to make handling difficult, and when 5% by mass or more of a chain transfer agent is added, water resistance of a coating film tends to be deteriorated.

Specific examples of the chain transfer agent include mercaptans such as butylmercaptan, n-dodecylmercaptan and t-dodecylmercaptan, alcohols such as methanol and isopropyl alcohol, an $\alpha$-methylstyrene dimer, and carbon tetrachloride.

Examples

Hereinafter, the present embodiment will be specifically described with reference to Examples and Comparative Examples, but the present embodiment is not intended to be limited to the following Examples at all.

[Examples 1 to 13] [Comparative Examples 1 to 3]

Hereinafter, measurement methods and raw materials applied in Examples and Comparative Examples are shown.

[Quantitative analysis method of phosphorus atom based on total mass of composite particles]

Quantitative determination of the amount of the phosphorus atom based on the total mass of the composite particles was performed by dialyzing a desired latex sample whose basicity was being kept, subsequently freeze-drying the sample, and subjecting the sample freeze-dried, to ICP emission spectrometry.

The detail procedure is shown below.

(1) Dialysis and drying of latex sample

A proper volume of an aqueous dispersion of composite particles diluted to 20-fold with 0.001 N NaOH (aqueous 1.0 mM NaOH solution) was metered on a plurality of ultrafiltration membranes (Vivaspin 6, molecular weight cut off: 100,000 (100 K), membrane material: PES, manufactured by Sartorius Stedim Biotech GmbH), and dialyzed by filtration at a rotation speed of 500 rpm with a centrifuge, to concentrate the aqueous dispersion of composite particles until the volume was reduced to 0.5 times.

The same amount of an aqueous 1.0 mM NaOH solution was added to the aqueous dispersion of composite particles (the filtration residue) after concentration, and the dialysis was again made with the same ultrafiltration membrane until the volume was reduced to 0.5 times.

Furthermore, the same amount of an aqueous 1.0 mM NaOH solution was added to the dispersion (filtrate) concentrated, the dialysis was again made with the same ultrafiltration membrane until the volume was reduced to 0.5 times, and the filtration residue was freeze-dried to provide an objective composite particles sample.

(2) ICP emission spectrometry by wet decomposition method

About 1 g of the sample was taken in a 300-mL tall beaker and precisely weighted, thereafter, 20 mL of nitric acid (60%) was added, and an organic substance was decomposed (about 5 hours) with gradual heating (maximum: 250°C) until no brown nitrous acid gas was generated.

The resultant was heated to decrease the amount of the liquid to the brink of dryness, 20 mL of nitric acid (60%) and 3 mL of perchloric acid (60%) were again added thereto, and decomposition (about 3 hours) with gradual heating (maximum: 250°C) was performed.

The liquid was filtered by a paper filter 5C (corresponding to No. 5C prescribed in JIS P3801 [paper filter (for chemical analysis)]) to remove an acid-insoluble fraction such as silica, and the filtrate was diluted with 1% nitric acid to provide a constant volume of 20 mL, thereby providing a test liquid for ICP emission spectrometry.

(3) The test liquid was used to perform analysis in an ICP emission spectrometry apparatus (VISTA-PRO, (manufactured by Agilent Technologies)).

[Measurement of zeta potential]

The zeta potential of the composite particles in the aqueous dispersion of composite particles at 60°C was measured by use of a dispersion prepared by diluting an aqueous dispersion of composite particles having a pH ranging from 7 to 11 with an aqueous 10 mM KCl solution.

When the pH of the aqueous dispersion of composite particles was less than 7, adjustment with an aqueous NaOH solution was made so that the pH was 7 to 11, and thereafter the aqueous dispersion of composite particles was diluted with an aqueous 10 mM KCl solution, thereby preparing a measurement dispersion.

The measurement conditions of the zeta potential are as follows.

Apparatus name: ELSZ-1000 manufactured by Otsuka Electronics Co., Ltd.
Measurement temperature: 60°C

Calculation of the zeta potential from the electrical mobility was performed according to a method using the Smoluchowski equation.

The value of the zeta potential measured was defined as the numerical value represented by processing the value output from the above apparatus by one peak fitting.

A specific method for preparing the measurement dispersion was a method where the measurement dispersion was prepared by diluting the aqueous dispersion of composite particles with an aqueous 10 mM KCl solution so that the concentration of the composite particles based on the mass of the dispersion was 10% by mass.

When measurement could not be made in a concentration of 10% by mass, an aqueous 10 mM KCl solution was appropriately added.

A specific dilution concentration was determined with reference to the upper limit concentration that could be determined according to the particle size of the composite particles, therefore the concentration of the composite particles after dilution with an aqueous 10 mM KCl solution was 0.001% by mass or more and 20% by mass or less based on the mass of the dispersion, and measurement was made within a measurable concentration range exhibited by the relevant instrument.

The measurement dispersion was placed in a standard cell of the apparatus, and measurement was performed.

[Measurement of zeta potential after dialysis]

A proper volume of a dispersion of composite particles diluted to 20-fold with 0.001 N NaOH (aqueous 1.0 mM NaOH solution) was metered on an ultrafiltration membrane (Vivaspin 6, molecular weight cut off: 100,000 (100K), membrane material: PES, manufactured by Sartorius Stedim Biotech Gmbh), and dialyzed by filtration at a rotation speed of 500 rpm with a centrifuge, to concentrate the aqueous dispersion of composite particles until the volume was reduced to 0.5 times.

The same amount of an aqueous 1.0 mM NaOH solution was added to the aqueous dispersion of composite particles (the filtration residue) after concentration, and the dialysis was again made with the same ultrafiltration membrane until the volume was reduced to 0.5 times.

Furthermore, the same amount of an aqueous 1.0 mM NaOH solution was added to the dispersion (filtrate) concentrated, and the dialysis was again made with the same ultrafiltration membrane until the volume was reduced to 0.5 times.

When the pH of the aqueous dispersion of composite particles concentrated was 7 to 11, the dispersion was diluted by addition of the same volume of an aqueous 20 mM KCl solution, to adjust the KCl concentration to about 10 mM.

When the pH of the aqueous dispersion of composite particles concentrated was less than 7, an aqueous NaOH solution was added to adjust the pH to 7 to 11. The dispersion for measurement after dialysis, thus obtained, was used to measure the zeta potential at 25°C in the same conditions as described above.

When measurement in the above concentration condition could not be made, an aqueous 1 mM KCl solution was appropriately added.

A specific dilution concentration was determined with reference to the upper limit concentration that could be determined according to the particle size of the composite particles, therefore the concentration of the composite particles after dilution with an aqueous KCl solution was 0.001% by mass or more and 20% by mass or less based on the mass of the dispersion, and measurement was made within a measurable concentration range exhibited by the relevant instrument.

The KCl concentration of the dispersion liquid for measurement was set to 1 to 10 mM.

[Warm water resistance test]

A coating liquid was prepared by adding 2 to 5% of Texanol CS-12 (manufactured by JNC Corporation) to the aqueous dispersion of composite particles and sufficiently stirring the resultant.

A glass plate was coated with the coating liquid, thereby forming a coating film having a thickness of about 80 $\mu$m.

The coating film was dried at 23°C for one week, and thereafter immersed in warm water at 50°C for 24 hours.

The appearance of the coating film after immersion was confirmed, and the warm water resistance was evaluated according to the following criteria.

A: the coating film maintained transparency with keeping its shape, or maintained transparency although was slightly whitened.

B: the coating film was whitened with keeping its shape.

C: the coating film, where the occurrence of blister is caused, could not keep its shape obtained before the test, and was whitened.

[Weather resistance]

A paint material was prepared according to the following paint material blending constitution, and the test was performed according to the following weather resistance test method.

(Paint material blending constitution)

<(1) Pigment dispersion>

| | |
|---|---|
| Water | 221 parts by mass |
| BYK190 [aqueous 20% dispersant solution: manufactured by BYK] | 35 parts by mass |
| Ti-Pure R-706 [rutile type titanium oxide: manufactured by DuPont] | 706 parts by mass |
| Propylene glycol | 45 parts by mass |
| Ammonia water | 1.0 part by mass |

<(2-1) Let down component>

Polytlon E780 (acrylic latex: manufactured by Asahi Kasei Corporation) was used as another aqueous dispersion of polymer particles (D) to prepare a paint material according to the following paint material blending constitution, and the test was performed according to the following weather resistance test method.

| | |
|---|---|
| Each aqueous dispersion of composite particles of Examples and Comparative Examples (in terms of the solid content) | 30 parts by mass |
| Polytlon E780 (acrylic latex: manufactured by Asahi Kasei Corporation, in terms of the solid content) | 70 parts by mass |
| Aqueous 5% Pluronic (registered trademark) F68 solution (surfactant: manufactured by Adeka Corporation) | 6 parts by mass |
| Texanol CS-12 | 4 to 10 parts by mass |
| Ion exchange water | 10 parts by mass |
| Pigment dispersion above | 101 parts by mass |

A sulfuric acid-anodized plate was coated with a paint material blended composition of the let down component (2-1) by use of a wire coater No.55, and dried at room temperature for 2 hours.

The resultant was further dried at 50°C for 2 days, to provide a test piece.

The test piece before the weather resistance test was used to measure the b value before exposure with a color difference meter (spectro-guide, manufactured by BYK-Gardner GmbH).

Subsequently, a sunshine weatherometer (WEL-SUN-DC manufactured by Suga Test Instruments Co., Ltd.) was used to perform an exposure test (rainfall cycle; 12 minutes/hour, black panel temperature: 60 to 66°C).

The b value after exposure for 1000 hours was measured, and the difference thereof from the b value before the exposure was defined as $\Delta b$ value.

$$[\text{Weather resistance modification value: } |\Delta b_0 - \Delta b|/(\Delta b_0 + \Delta b)]$$

Polytlon E780 (acrylic latex: manufactured by Asahi Kasei Corporation was used as another aqueous dispersion of polymer particles (D) to prepare a paint material according to the following paint material blending constitution, and the test was performed according to the following weather resistance test method.

(Paint material blending constitution)

<(1) Pigment dispersion>

| | |
|---|---|
| Water | 221 parts by mass |
| BYK190 [aqueous 20% dispersant solution: manufactured by BYK] | 35 parts by mass |
| Ti-Pure R-706 [rutile type titanium oxide: manufactured by DuPont] | 706 parts by mass |
| Propylene glycol | 45 parts by mass |
| Ammonia water | 1.0 part by mass |

<(2-2) Let down component>

| | |
|---|---|
| Polytlon E780 (acrylic latex: manufactured by Asahi Kasei Corporation, in terms of the solid content) | 100 parts by mass |
| Aqueous 5% Pluronic (registered trademark) F68 solution (surfactant: manufactured by Adeka Corporation) | 6 parts by mass |
| Texanol CS-12 6 parts by mass | 6 parts by mass |
| Ion exchange water | 10 parts by mass |
| The Pigment dispersion | 101 parts by mass |

A sulfuric acid-anodized plate was coated with a paint material blended composition of the let down component (2-2) by use of a wire coater No.55, and dried at room temperature for 2 hours.

The resultant was further dried at 50°C for 2 days, to provide a test piece.

The test piece before the weather resistance test was used to measure the b value before exposure with a color difference meter (spectro-guide, manufactured by BYK-Gardner GmbH).

Subsequently, a sunshine weatherometer (WEL-SUN-DC manufactured by Suga Test Instruments Co., Ltd.) was used to perform an exposure test (rainfall cycle; 12 minutes/hour, black panel temperature: 60 to 66°C).

The b value after exposure for 1000 hours of the test piece of the paint material blended composition of the let down component (2-2) was measured, and the difference thereof from the b value before the exposure was defined as $\Delta b_0$ value.

The weather resistance modification value: $|\Delta b_0 - \Delta b|/(\Delta b_0 + \Delta b)$ was calculated from the $\Delta b$ and $b_0$ values.

Herein, the $\Delta b_0$ value obtained from Polytlon E780 was 1.90.

In Table 1, the sign "-" means the inability of stable admixing due to coagulation in the paint material for the weather resistance test.

[Measurement of average particle size and evaluation of synthetic particle]

The average particle size of the composite particles in the aqueous dispersion of composite particles was determined as the cumulant average value by appropriately diluting the aqueous dispersion of composite particles with ion exchange water and using ELSZ-1000 manufactured by Otsuka Electronics Co., Ltd., at room temperature (23°C).

The average particle size of the composite particles was compared with its calculated value, thereby determining whether the particle (A) was allowed to serve as a seed to result in the growth to the composite particles, and evaluation was made as "Evaluation of synthetic particle" according to the following criteria.

A: the component (B) was almost formed on the same particle with the particle (A) serving as a seed, and generation of an additional particle and coagulation of a particle grown were almost suppressed.

B: the component (B) was almost formed on the same particle with the particle (A) serving as a seed, but an increase in the particle size was observed due to slight coagulation of a particle grown.

C: the component (B) was not almost formed on the same particle with the particle (A) serving as a seed, an additional particle was numerously generated, and the average particle size value exhibited was close to that of the particle (A).

[Dispersing stability in synthesis]

The aqueous dispersion of composite particles was used and the dispersing stability in synthesis was evaluated according to the following criteria.

G: no coagulate was observed in the aqueous dispersion of composite particles, or a white coagulate was slightly present, but could be subjected to filtration by a 100-mesh wire cloth.

B: a large amount of a coagulate was present in the aqueous dispersion of composite particles, and could not be subjected to filtration and caused clogging when subjected to filtration by a 100-mesh wire cloth. Alternatively, the entire dispersion was not in the form of a liquid due to coagulation.

[Solid content (% by mass)]

The solid content was calculated by placing 1 g of the aqueous dispersion of composite particles in an aluminum dish and precisely weighting it, then drying it at 105°C for 3 hours, precisely measuring the mass thereof after the drying, and determining the ratio of the masses before and after the drying.

[Materials used in Examples and Comparative Examples]

(Surfactant)

AEROSOL (registered trademark) OT-75 (aqueous sodium dioctylsulfosuccinate solution), manufactured by Nihon Cytec Industries Inc.)
AEROSOL (registered trademark) MA-80 (aqueous sodium dihexylsulfosuccinate solution, manufactured by Nihon Cytec Industries Inc.)
Eleminol (registered trademark) JS-2 (aqueous sodium alkylallylsulfosuccinate solution, manufactured by Sanyo Chemical Industries, Ltd.)
Neopelex (registered trademark) G-15 (aqueous sodium dodecylbenzenesulfonate solution, manufactured by Kao Corporation)

(Reactive surfactant and also anionic surfactant)

Aqualon (registered trademark) KH-10 ammonium (polyoxyethylene-1-(alkyloxymethyl)alkyl ether sulfate, manufactured by DKS Co. Ltd.)
Adeka Reasoap (registered trademark) SR-10 (ammonium salt of α-sulfo-ω-(1-(alkoxy)methyl)-2-(2-propenyloxy)ethoxy)-poly(oxy-1,2-ethanediyl), manufactured by Adeka Corporation)

(Ethylenically unsaturated monomer having phosphoric acid group)

PPME (mixture of 2-methacryloyloxyethyl phosphate with bis(2-methacryloyloxyethyl phosphate), (another name) mixture of phosphate monoester of 2-hydroxyethyl methacrylate with phosphate diester of 2-hydroxyethyl methacrylate, manufactured by TOHO Chemical Industry Co., Ltd.)

(Ethylenically unsaturated monomer having nitrogen functional group (copolymerizable light stabilizer))

ADK STAB (registered trademark) LA-82 (methacryloxy 1,2,2,6,6-pentamethyl-4-piperidine, manufactured by Adeka Corporation)
ADK STAB (registered trademark) LA-87 (2,2,6,6-tetramethyl-4-piperidyl methacrylate, manufactured by Adeka Corporation)

(Ethylenically unsaturated monomer having nitrogen functional group (ultraviolet absorbable ethylenically unsaturated monomer, copolymerizable ultraviolet absorber))

2-[2'-hydroxy-5'-(β-methacryloyloxyethoxy)-3'-tert-butylphenyl]-4-tert-butyl-2H-benzotriazole (product name: RUVA-93 manufactured by Otsuka Chemical Co., Ltd.)

(Non-copolymerizable ultraviolet absorber)

Tinuvin (registered trademark) 384-2 (manufactured by BASF Japan Ltd.)
Tinuvin (registered trademark) 400 (manufactured by BASF Japan Ltd.)

(Non-copolymerizable light stabilizer)

Tinuvin (registered trademark) 292 (manufactured by BASF Japan Ltd.)

(Colloidal silica)

Snowtex (registered trademark) ST-N-40 (ammonia-neutralized colloidal silica, manufactured by Nissan Chemical Corporation)
Adelite (registered trademark) AT-50 (sodium-neutralized colloidal silica, manufactured by Adeka Corporation)

(Film formation aid)

Texanol (registered trademark) CS-12 (manufactured by JNC Corporation)
Hereinafter, each particle (A) applied in Examples 1 to 13 and Comparative Examples 1 to 3 will be described.

[Synthesis Example 1 (Synthesis of polymer particle (A))]

A reaction vessel equipped with a stirrer, a reflux condenser, a dropping tank and a thermometer was charged with 500 g of water and 40 g of Aqualon (registered trademark) KH-10 ammonium (polyoxyethylene-1-(alkyloxymethyl)alkyl ether sulfate, manufactured by DKS Co. Ltd.) where the concentration thereof was adjusted to 15% by mass, the temperature in the reaction vessel was raised to 78°C under a nitrogen atmosphere, and then 15 g of an aqueous 2% ammonium persulfate solution was added thereto.
After 5 minutes, 185 g of methyl methacrylate, 300 g of cyclohexyl methacrylate, 200 g of butyl methacrylate, 250 g of 2-ethylhexyl acrylate, 50 g of 2-hydroxyethyl methacrylate, 10 g of methacrylic acid, 5 g of acrylic acid, 0.1 g of PPME (mixture of 2-methacryloyloxyethyl phosphate with bis(2-methacryloyloxyethyl phosphate), manufactured by TOHO Chemical Industry Co., Ltd.), 5 g of sodium p-styrenesulfonate, 66.7 g of Aqualon (registered trademark) KH-10 where the concentration thereof was adjusted to 15% by mass, and a mixture of 50 g of an aqueous 2% ammonium persulfate solution with 700 g of ion exchange water were allowed to flow into a reactor over 180 minutes.
The temperature in the reactor was kept at 80°C during the flowing.
After completion of the flowing, the dispersion liquid in the reactor was kept at 80°C for 60 minutes, and thereafter cooled to room temperature, and the hydrogen ion concentration was then measured and was found to be a pH of 2.1.
The solid content concentration in the aqueous dispersion, of the resulting polymer particle, was 43.0% by mass, and the average particle size thereof was 96 nm.

[Example 1]

A reactor provided with a reflux condenser, a dropping tank, a thermometer and a stirring apparatus was charged with 250.0 g of the aqueous dispersion of polymer particles (A) in aforementioned [Synthesis Example 1], where the pH was adjusted to 9.5 by ammonia and thereafter the concentration thereof was adjusted to 40.0% by mass by addition of water, and the temperature was raised to 60°C.
Thereto was slowly added 30 g of Aqualon (registered trademark) KH-10 where the concentration thereof was adjusted to 10% by mass.
After the dispersion liquid in the reactor was heated to 70°C under a nitrogen atmosphere, 45 g of ammonium persulfate (aqueous 2% solution) was added.
After 5 minutes, 3.2 g of methyl methacrylate, 4.8 g of cyclohexyl methacrylate, 7.76 g of butyl acrylate and 0.24 g of PPME (methacryloyloxyethyl phosphate, manufactured by TOHO Chemical Industry Co., Ltd.), and a mixture of 0.53 g of Neopelex (registered trademark) G-15 (aqueous sodium dodecylbenzenesulfonate solution, manufactured by Kao Corporation) where the concentration thereof was adjusted to 15.0% by mass, with 20 g of ion exchange water were allowed to flow into the reactor over 90 minutes.
After completion of the flowing, the dispersion liquid in the reactor was further stirred at 70°C for 30 minutes.
Furthermore, 2.67 g of Aqualon (registered trademark) KH-10 where the concentration thereof was adjusted to 15% by mass, 16.0 g of methyl methacrylate, 8.0 g of cyclohexyl methacrylate, 52.0 g of butyl acrylate, 0.8 g of acrylamide and 3.2 g of ADK STAB (registered trademark) LA-82 (methacryloxyl,2,2,6,6-pentamethyl-4-piperidine, manufactured by Adeka Corporation), and a mixture of 0.4 g of sodium p-styrenesulfonate with 0.4 g of Tinuvin (registered trademark) 384-2 (manufactured by BASF Japan Ltd.), 10 g of ammonium persulfate (aqueous 2% solution) and 70 g of ion exchange water were allowed to flow into the reactor over 120 minutes, thereby providing a dispersion liquid.
Thereafter, the dispersion liquid was cooled to room temperature and filtrated by a 100-mesh wire cloth, thereby providing an aqueous dispersion of composite particles including composite particles having an average particle size of 125 nm, having a pH of 8.9 and a solid content of 38.1% by mass. A coagulate was less generated and a deposit was also less attached to the reaction vessel.

The zeta potential in the resulting aqueous dispersion of composite particles at 60°C was -42 mV at a pH of 8.9.

The zeta potential in the aqueous dispersion of composite particles after dialysis was measured, and it was found that the zeta potential at 25°C and at a pH of 7.8 was -38 mV and the phosphorus atom content in the composite particles was 0.013% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Example 2]

A reactor provided with a reflux condenser, a dropping tank, a thermometer and a stirring apparatus was charged with 250.0 g of Snowtex (registered trademark) ST-N-40 (ammonia-neutralized colloidal silica, manufactured by Nissan Chemical Corporation) where the concentration thereof was adjusted to 40.0% by mass, and the temperature was raised to 60°C.

Thereto was slowly added 30 g of AEROSOL (registered trademark) OT-75 (aqueous sodium dioctylsulfosuccinate solution, manufactured by Nihon Cytec Industries Inc.) where the concentration thereof was adjusted to 10% by mass.

After the dispersion liquid in the reactor was heated to 70°C under a nitrogen atmosphere, 15 g of ammonium persulfate (aqueous 2% solution) was added. After 5 minutes, 7.2 g of methyl methacrylate, 16.56 g of butyl acrylate and 0.24 g of PPME, and a mixture of 0.80 g of Neopelex (registered trademark) G-15 (aqueous sodium dodecylbenzenesulfonate solution, manufactured by Kao Corporation) where the concentration thereof was adjusted to 15.0% by mass, with 25 g of ion exchange water were allowed to flow into the reactor over 20 minutes. After completion of the flowing, the dispersion liquid in the reactor was further stirred at 70°C for 30 minutes.

Furthermore, a mixture of 1.6 g of Aqualon (registered trademark) KH-10 where the concentration thereof was adjusted to 15% by mass and 1.6 g of Neopelex (registered trademark) G-15 where the concentration thereof was adjusted to 15% by mass, 28.8 g of methyl methacrylate, 64.32 g of butyl acrylate, 0.72 g of acrylamide, 0.24 g of PPME and 1.92 g of ADK STAB (registered trademark) LA-82, 0.48 g of Tinuvin (registered trademark) 384-2 (manufactured by BASF Japan Ltd.), and 100 g of ion exchange water were allowed to flow into the reactor over 150 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 65 nm, having a pH of 9.1 and a solid content of 41.1% by mass. A coagulate was less generated and a deposit was also less attached to the reaction vessel.

The zeta potential in the resulting aqueous dispersion of composite particles at 60°C was -40 mV at a pH of 9.1.

The zeta potential in the aqueous dispersion of composite particles after dialysis was measured, and it was found that the zeta potential at 25°C and at a pH of 7.9 was -36 mV and the phosphorus atom content in the composite particles was 0.024% by mass.

The aqueous dispersion of composite particles including the composite particle was subjected to the warm water resistance test and the weather resistance test. Stable admixing with titanium oxide for a pigment and acrylic latex without any coagulation could be made in blending of a paint material for the weather resistance test.

[Example 3]

A reactor provided with a reflux condenser, a dropping tank, a thermometer and a stirring apparatus was charged with 200.0 g of Snowtex (registered trademark) ST-N-40 where the concentration thereof was adjusted to 40.0% by mass, and the temperature was raised to 60°C.

Thereto was slowly added 25 g of Eleminol (registered trademark) JS-2 (aqueous sodium alkylallylsulfosuccinate solution, manufactured by Sanyo Chemical Industries, Ltd.) where the concentration thereof was adjusted to 10% by mass.

After the dispersion liquid in the reactor was heated to 70°C under a nitrogen atmosphere, 12.5 g of ammonium persulfate (aqueous 2% solution) was added.

After 5 minutes, 6.2 g of methyl methacrylate, 13.7 g of butyl acrylate and 0.10 g of PPME, and a mixture of 0.67 g of Neopelex (registered trademark) G-15 (aqueous sodium dodecylbenzenesulfonate solution, manufactured by Kao Corporation) where the concentration thereof was adjusted to 15.0% by mass, with 25 g of ion exchange water were allowed to flow into the reactor over 90 minutes.

After completion of the flowing, the dispersion liquid in the reactor was further stirred at 70°C for 30 minutes.

Furthermore, 1.34 g of Aqualon (registered trademark) KH-10 where the concentration thereof was adjusted to 15% by mass and 1.34 g of Neopelex (registered trademark) G-15 where the concentration thereof was adjusted to 15% by mass, 23.2 g of methyl methacrylate, 53.6 g of butyl acrylate, 0.01 g of PPME, 1.6 g of acrylamide and 1.6 g of ADK STAB (registered trademark) LA-82, 0.80 g of Tinuvin (registered trademark) 384-2, 10 g of ammonium persulfate (aqueous 2% solution), and a mixture with 70 g of ion exchange water were allowed to flow into the reactor over 120 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 62 nm, having a pH of 9.2 and a solid content of 41.0% by mass. A coagulate was less generated and a deposit was also less attached to the reaction vessel.

The zeta potential in the resulting aqueous dispersion of composite particles at 60°C was -42 mV at a pH of 9.2.

The zeta potential in the aqueous dispersion of composite particles after dialysis was measured, and it was found that the zeta potential at 25°C and at a pH of 8.0 was -34 mV and the phosphorus atom content in the composite particles was 0.006% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Example 4]

A reactor provided with a reflux condenser, a dropping tank, a thermometer and a stirring apparatus was charged with 250.0 g of the aqueous dispersion of polymer particles (A) in aforementioned [Synthesis Example 1], where the pH was adjusted to 9.5 by ammonia and thereafter the concentration thereof was adjusted to 40.0% by mass by addition of water, and the temperature was raised to 70°C.

Thereto was slowly added 30 g of Aqualon (registered trademark) KH-10 where the concentration thereof was adjusted to 10% by mass.

While the dispersion liquid in the reactor was kept at 70°C under a nitrogen atmosphere, 15 g of ammonium persulfate (aqueous 2% solution) was added.

After 5 minutes, 4.0 g of methyl methacrylate, 6.0 g of butyl methacrylate, 9.7 g of butyl acrylate, 0.10 g of methacrylic acid and 0.20 g of PPME, and a mixture of 0.67 g of Aqualon (registered trademark) KH-10 where the concentration thereof was adjusted to 15.0% by mass, with 20 g of ion exchange water were allowed to flow into the reactor over 30 minutes. After completion of the flowing, the dispersion liquid in the reactor was further stirred at 70°C for 30 minutes.

Aqualon (registered trademark) KH-10 (2.67 g) where the concentration thereof was adjusted to 15% by mass, 16.0 g of methyl methacrylate, 8.0 g of cyclohexyl methacrylate, 43.2 g of butyl acrylate, 0.8 g of acrylamide and 12.0 g of ADK STAB (registered trademark) LA-82, 0.8 g of Tinuvin (registered trademark) 400 (manufactured by BASF Japan Ltd.), and a mixture with 80 g of ion exchange water were allowed to flow into the reactor over 120 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 130 nm, having a pH of 9.2 and a solid content of 40.9% by mass. A coagulate was less generated and a deposit was also less attached to the reaction vessel.

The zeta potential in the resulting aqueous dispersion of composite particles at 60°C was -45 mV at a pH of 9.2.

The zeta potential in the aqueous dispersion of composite particles after dialysis was measured, and it was found that the zeta potential at 25°C and at a pH of 8.2 was -34 mV and the phosphorus atom content in the composite particles was 0.011% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Example 5]

A reactor provided with a reflux condenser, a dropping tank, a thermometer and a stirring apparatus was charged with 200.0 g of the aqueous dispersion of polymer particles (A) in aforementioned [Synthesis Example 1], where the pH was adjusted to 9.5 by ammonia and thereafter the concentration thereof was adjusted to 40.0% by mass by addition of water, and the temperature was raised to 70°C.

Thereto was slowly added 30 g of Adeka Reasoap (registered trademark) SR-10 (ammonium salt of $\alpha$-sulfo-$\omega$-(1-(alkoxy)methyl)-2-(2-propenyloxy)ethoxy)-poly(oxy-1,2-ethanediyl), manufactured by Adeka Corporation) where the concentration thereof was adjusted to 10% by mass.

While the dispersion liquid in the reactor was kept at 70°C under a nitrogen atmosphere, 15 g of ammonium persulfate (aqueous 2% solution) was added.

After 5 minutes, 10.0 g of methyl methacrylate, 9.7 g of butyl acrylate and 0.30 g of PPME, and a mixture of 0.67 g of Adeka Reasoap (registered trademark) SR-10 where the concentration thereof was adjusted to 15.0% by mass, with 20 g of ion exchange water were allowed to flow into the reactor over 30 minutes. After completion of the flowing, the dispersion liquid in the reactor was further stirred at 70°C for 30 minutes.

Adeka Reasoap (registered trademark) SR-10 (2.67 g) where the concentration thereof was adjusted to 15% by mass, 8.0 g of methyl methacrylate, 24.0 g of cyclohexyl methacrylate, 44.0 g of butyl acrylate, 0.8 g of acrylamide, 2.4 g of ADK STAB (registered trademark) LA-82 and 0.8 g of RUVA-93 (manufactured by Otsuka Chemical Co., Ltd., reactive ultraviolet absorber), and a mixture with 80 g of ion exchange water were allowed to flow into the reactor over 120 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 134 nm, having a pH of 9.2 and a solid content of 40.8% by mass. A coagulate was less generated and a deposit was also less attached to the reaction vessel.

The zeta potential in the resulting aqueous dispersion of composite particles at 60°C was -51 mV at a pH of 9.2.

The zeta potential in the aqueous dispersion of composite particles after dialysis was measured, and it was found that the zeta potential at 25°C and at a pH of 7.9 was -42 mV and the phosphorus atom content in the composite particles was 0.018% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Example 6]

A reactor provided with a reflux condenser, a dropping tank, a thermometer and a stirring apparatus was charged with 250.0 g of Snowtex (registered trademark) ST-N-40 (ammonia-neutralized colloidal silica, manufactured by Nissan Chemical Corporation) where the concentration thereof was adjusted to 40.0% by mass, and the temperature was raised to 60°C.

Thereto was slowly added 30 g of AEROSOL (registered trademark) MA-80 (aqueous sodium dihexylsulfosuccinate solution, manufactured by Nihon Cytec Industries Inc.) where the concentration thereof was adjusted to 10% by mass.

After the dispersion liquid in the reactor was heated to 70°C under a nitrogen atmosphere, 15.0 g of ammonium persulfate (aqueous 2% solution) was added.

After 10 minutes, 6.0 g of methyl methacrylate, 13.9 g of butyl acrylate, 0.10 g of PPME and 0.1 g of sodium p-styrenesulfonate, and a mixture of 0.67 g of Neopelex (registered trademark) G-15 where the concentration thereof was adjusted to 15.0% by mass, with 25 g of ion exchange water were allowed to flow into the reactor over 40 minutes.

After completion of the flowing, the dispersion liquid in the reactor was further stirred at 70°C for 30 minutes.

Furthermore, 2.67 of Aqualon (registered trademark) KH-10 where the concentration thereof was adjusted to 15% by mass, 9.2 g of methyl methacrylate, 24.0 g of cyclohexyl methacrylate, 44.0 g of 2-ethylhexyl acrylate, 0.01 g of PPME, 1.2 g of acrylamide, 0.8 g of diethylaminoethyl methacrylate and 0.8 g of ADK STAB (registered trademark) LA-82, 0.80 g of Tinuvin (registered trademark) 384-2 and 0.08 g of methacrylic acid, and a mixture with 80 g of ion exchange water were allowed to flow into the reactor over 120 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 69 nm, having a pH of 8.9 and a solid content of 40.9% by mass. A coagulate was less generated and a deposit was also less attached to the reaction vessel.

The zeta potential in the resulting aqueous dispersion of composite particles at 60°C was -47 mV at a pH of 8.9.

The zeta potential in the aqueous dispersion of composite particles after dialysis was measured, and it was found that the zeta potential at 25°C and at a pH of 7.8 was -44 mV and the phosphorus atom content in the composite particles was 0.006% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Example 7]

A reactor provided with a reflux condenser, a dropping tank, a thermometer and a stirring apparatus was charged with 250.0 g of Snowtex (registered trademark) ST-N-40 (ammonia-neutralized colloidal silica, manufactured by Nissan Chemical Corporation) where the concentration thereof was adjusted to 40.0% by mass, and the temperature was raised to 60°C.

Thereto was slowly added 30 g of AEROSOL (registered trademark) OT-75 where the concentration thereof was adjusted to 10% by mass.

After the dispersion liquid in the reactor was heated to 70°C under a nitrogen atmosphere, 15 g of ammonium persulfate (aqueous 2% solution) was added.

After 10 minutes, 6.2 g of methyl methacrylate, 13.64 g of butyl methacrylate, 0.16 g of PPME and 0.1 g of sodium p-styrenesulfonate, and a mixture of 0.67 g of Neopelex (registered trademark) G-15 where the concentration thereof was adjusted to 15.0% by mass, with 20 g of ion exchange water were allowed to flow into the reactor over 20 minutes.

After completion of the flowing, the dispersion liquid in the reactor was further stirred at 70°C for 30 minutes.

Furthermore, 3.33 of Aqualon (registered trademark) KH-10 where the concentration thereof was adjusted to 15% by mass, 29.5 g of cyclohexyl methacrylate, 55.0 g of butyl methacrylate, 10.0 g of butyl acrylate, 0.01 g of PPME, 1.50 g of acrylamide and 4.0 g of ADK STAB (registered trademark) LA87 (2,2,6,6-tetramethyl-4-piperidyl methacrylate, manufactured by Adeka Corporation), and a mixture of 0.50 g of Tinuvin (registered trademark) 384-2 (manufactured by BASF Japan Ltd.) with 100 g of ion exchange water were allowed to flow into the reactor over 150 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 70 nm, having a pH of 9.1 and a solid content of 41.1% by mass. A coagulate was less generated and a deposit was also less attached to the reaction vessel.

The zeta potential in the resulting aqueous dispersion of composite particles at 60°C was -36 mV at a pH of 9.1.

The zeta potential in the aqueous dispersion of composite particles after dialysis was measured, and it was found that the zeta potential at 25°C and at a pH of 8.0 was -36 mV and the phosphorus atom content in the composite particles was 0.008% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Example 8]

A reactor provided with a reflux condenser, a dropping tank, a thermometer and a stirring apparatus was charged with 250.0 g of Snowtex (registered trademark) ST-N-40 where the concentration thereof was adjusted to 40.0% by mass, and the temperature was raised to 60°C.

Thereto was slowly added 30 g of AEROSOL (registered trademark) OT-75 where the concentration thereof was adjusted to 10% by mass.

After the dispersion liquid in the reactor was heated to 70°C under a nitrogen atmosphere, 15 g of ammonium persulfate (aqueous 2% solution) was added.

After 10 minutes, 6.2 g of methyl methacrylate, 13.2 g of butyl acrylate and 0.60 g of PPME, and a mixture of 0.67 g of Neopelex (registered trademark) G-15 where the concentration thereof was adjusted to 15.0% by mass, with 20 g of ion exchange water were allowed to flow into the reactor over 20 minutes. After completion of the flowing, the dispersion liquid in the reactor was further stirred at 70°C for 30 minutes.

Furthermore, 3.33 of Aqualon (registered trademark) KH-10 where the concentration thereof was adjusted to 15% by mass, 36.0 g of cyclohexyl methacrylate, 48.0 g of butyl methacrylate, 10.0 g of butyl acrylate, 0.01 g of PPME, 6.0 g of ADK STAB (registered trademark) LA82 and 3.0 g of Tinuvin (registered trademark) 384-2, and a mixture with 100 g of ion exchange water were allowed to flow into the reactor over 150 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 68 nm, having a pH of 8.8 and a solid content of 41.8% by mass. A coagulate was less generated and a deposit was also less attached to the reaction vessel.

The zeta potential in the resulting aqueous dispersion of composite particles at 60°C was -53 mV at a pH of 8.8.

The zeta potential in the aqueous dispersion of composite particles after dialysis was measured, and it was found that the zeta potential at 25°C and at a pH of 8.0 was -42 mV and the phosphorus atom content in the composite particles was 0.030% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Example 9]

A reactor provided with a reflux condenser, a dropping tank, a thermometer and a stirring apparatus was charged with 275.0 g of the aqueous dispersion of polymer particles (A) in aforementioned [Synthesis Example 1], where the pH was adjusted to 9.5 by ammonia and thereafter the concentration thereof was adjusted to 40.0% by mass by addition of water, and the temperature was raised to 70°C.

Thereto was slowly added 30 g of Aqualon (registered trademark) KH-10 where the concentration thereof was adjusted to 10% by mass.

While the dispersion liquid in the reactor was kept at 70°C under a nitrogen atmosphere, 15 g of ammonium persulfate (aqueous 2% solution) was added.

After 5 minutes, 6.0 g of methyl methacrylate, 13.8 g of butyl acrylate and 0.20 g of PPME, and a mixture of 0.67 g of Neopelex (registered trademark) G-15 where the concentration thereof was adjusted to 15.0% by mass, with 20 g of ion exchange water were allowed to flow into the reactor over 30 minutes. After completion of the flowing, the dispersion liquid in the reactor was further stirred at 70°C for 30 minutes.

Aqualon (registered trademark) KH-10 (2.67 g) where the concentration thereof was adjusted to 15% by mass, 12.0 g of methyl methacrylate, 24.0 g of cyclohexyl methacrylate, 44.0 g of butyl acrylate, and a mixture with 80 g of ion exchange water were allowed to flow into the reactor over 120 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 132 nm, having a pH of 8.7 and a solid content of 40.8% by mass. A coagulate was less generated and a deposit was also less attached to the reaction vessel.

The zeta potential in the resulting aqueous dispersion of composite particles at 60°C was -58 mV at a pH of 8.7.

The zeta potential in the aqueous dispersion of composite particles after dialysis was measured, and it was found that the zeta potential at 25°C and at a pH of 8.1 was -48 mV and the phosphorus atom content in the composite particles was 0.010% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Example 10]

A reactor provided with a reflux condenser, a dropping tank, a thermometer and a stirring apparatus was charged with 250.0 g of the aqueous dispersion of polymer particles (A) in aforementioned [Synthesis Example 1], where the pH was adjusted to 9.5 by ammonia and thereafter the concentration thereof was adjusted to 40.0% by mass by addition of water, and the temperature was raised to 60°C.

Thereto was slowly added 30 g of Aqualon (registered trademark) KH-10 where the concentration thereof was adjusted to 10% by mass.

After the dispersion liquid in the reactor was heated to 70°C under a nitrogen atmosphere, 45 g of ammonium persulfate (aqueous 2% solution) was added.

After 5 minutes, 4.8 g of methyl methacrylate, 3.2 g of cyclohexyl methacrylate, 7.76 g of butyl acrylate and 0.24 g of PPME, and a mixture of 0.53 g of Neopelex (registered trademark) G-15 where the concentration thereof was adjusted to 15.0% by mass, with 20 g of ion exchange water were allowed to flow into the reactor over 90 minutes. After completion of the flowing, the dispersion liquid in the reactor was further stirred at 70°C for 30 minutes.

Furthermore, 2.13 g of Aqualon (registered trademark) KH-10 where the concentration thereof was adjusted to 15% by mass, 21.76 g of methyl methacrylate, 12.8 g of cyclohexyl methacrylate, 26.88 g of butyl acrylate, 0.64 g of acrylamide, 1.92 g of ADK STAB (registered trademark) LA82, and a mixture of 0.64 g of Tinuvin (registered trademark) 384-2 with 10 g of ammonium persulfate (aqueous 2% solution) and 45 g of ion exchange water were allowed to flow into the reactor over 120 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 127 nm, having a pH of 8.8 and a solid content of 38.1% by mass. A coagulate was less generated and a deposit was also less attached to the reaction vessel.

The zeta potential in the resulting aqueous dispersion of composite particles at 60°C was -61 mV at a pH of 8.8.

The zeta potential in the aqueous dispersion of composite particles after dialysis was measured, and it was found that the zeta potential at 25°C and at a pH of 8.1 was -35 mV and the phosphorus atom content in the composite particles was 0.014% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Example 11]

A reactor with a reflux condenser, a dropping tank, a thermometer and a stirring apparatus was charged with 250.0 g of Snowtex (registered trademark) ST-N-40 where the concentration thereof was adjusted to 40.0% by mass, and the temperature was raised to 60°C.

Thereto was slowly added 30 g of AEROSOL (registered trademark) OT-75 where the concentration thereof was adjusted to 10% by mass.

After the dispersion liquid in the reactor was heated to 70°C under a nitrogen atmosphere, 15 g of ammonium persulfate (aqueous 2% solution) was added.

After 5 minutes, 7.2 g of methyl methacrylate, 2.4 g of cyclohexyl methacrylate, 14.16 g of butyl acrylate and 0.24 g of PPME, and a mixture of 0.80 g of Neopelex (registered trademark) G-15 where the concentration thereof was adjusted to 15.0% by mass, with 25 g of ion exchange water were allowed to flow into the reactor over 30 minutes.

After completion of the flowing, the dispersion liquid in the reactor was further stirred at 70°C for 30 minutes.

Furthermore, 1.6 g of Aqualon (registered trademark) KH-10 where the concentration thereof was adjusted to 15% by mass, and 1.6 g of Neopelex (registered trademark) G-15 where the concentration thereof was adjusted to 15% by mass, 28.8 g of methyl methacrylate, 11.52 g of cyclohexyl methacrylate, 54.72 g of butyl acrylate, 0.01 g of PPME, 0.72 g of acrylamide, 0.24 g of PPME, and a mixture with 100 g of ion exchange water were allowed to flow into the reactor over 150 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 68 nm, having a pH of 9.1 and a solid content of 41.1% by mass. A coagulate was less generated and a deposit was also less attached to the reaction vessel.

The zeta potential in the resulting aqueous dispersion of composite particles at 60°C was -59 mV at a pH of 9.1.

The zeta potential in the aqueous dispersion of composite particles after dialysis was measured, and it was found that the zeta potential at 25°C and at a pH of 7.7 was -51 mV and the phosphorus atom content in the composite particles was 0.024% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Example 12]

A reactor provided with a reflux condenser, a dropping tank, a thermometer and a stirring apparatus was charged with 275.0 g of the aqueous dispersion of polymer particles (A) in aforementioned [Synthesis Example 1], where the pH was adjusted to 9.5 by ammonia and thereafter the concentration thereof was adjusted to 40.0% by mass by addition of water, and the temperature was raised to 70°C.

Thereto was slowly added 30 g of Aqualon (registered trademark) KH-10 where the concentration thereof was adjusted to 10% by mass.

While the dispersion liquid in the reactor was kept at 70°C under a nitrogen atmosphere, 12.5 g of ammonium persulfate (aqueous 2% solution) was added.

After 5 minutes, 5.2 g of cyclohexyl methacrylate, 13.8 g of butyl acrylate and 1.0 g of PPME, and a mixture of 0.67 g of Neopelex (registered trademark) G-15 where the concentration thereof was adjusted to 15.0% by mass, with 20 g of ion exchange water were allowed to flow into the reactor over 30 minutes.

After completion of the flowing, the dispersion liquid in the reactor was further stirred at 70°C for 30 minutes.

Aqualon (registered trademark) KH-10 (2.67 g) where the concentration thereof was adjusted to 15% by mass, 11.2 g of methyl methacrylate, 24.0 g of cyclohexyl methacrylate, 40.0 g of butyl acrylate, 4.80 g of ADK STAB (registered trademark) LA82, 2.40 g of Tinuvin (registered trademark) 384-2, and a mixture with 80 g of ion exchange water were allowed to flow into the reactor over 120 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 132 nm, having a pH of 8.7 and a solid content of 40.8% by mass. A coagulate was less generated and a deposit was also less attached to the reaction vessel.

The zeta potential in the resulting aqueous dispersion of composite particles at 60°C was -65 mV at a pH of 8.7.

The zeta potential in the aqueous dispersion of composite particles after dialysis was measured, and it was found that the zeta potential at 25°C and at a pH of 7.9 was -55 mV and the phosphorus atom content in the composite particles was 0.051% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Example 13]

A reactor provided with a reflux condenser, a dropping tank, a thermometer and a stirring apparatus was charged with 275.0 g of the aqueous dispersion of polymer particles (A) in aforementioned [Synthesis Example 1], where the pH was adjusted to 9.5 by ammonia and thereafter the concentration thereof was adjusted to 40.0% by mass by addition of water, and the temperature was raised to 70°C.

Thereto was slowly added 30 g of Aqualon (registered trademark) KH-10 where the concentration thereof was adjusted to 10% by mass.

While the dispersion liquid in the reactor was kept at 70°C under a nitrogen atmosphere, 15 g of ammonium persulfate (aqueous 2% solution) was added.

After 5 minutes, 6.0 g of methyl methacrylate, 13.8 g of butyl acrylate and 0.20 g of PPME, and a mixture of 0.67 g of Neopelex (registered trademark) G-15 where the concentration thereof was adjusted to 15.0% by mass, with 20 g of ion exchange water were allowed to flow into the reactor over 30 minutes. After completion of the flowing, the dispersion liquid in the reactor was further stirred at 70°C for 30 minutes.

Aqualon (registered trademark) KH-10 (2.67 g) where the concentration thereof was adjusted to 15% by mass, 4.0 g of methyl methacrylate, 24.0 g of cyclohexyl methacrylate, 44.0 g of butyl acrylate, 8.0 g of UMA25% (trade name: 25% methyl methacrylate solution of ureido methacrylate, manufactured by BASF) and a mixture with 80 g of ion exchange water were allowed to flow into the reactor over 120 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 130 nm, having a pH of 8.7 and a solid content of 40.8% by mass. A coagulate was less generated and a deposit was also less attached to the reaction vessel.

The zeta potential in the resulting aqueous dispersion of composite particles at 60°C was -59 mV at a pH of 8.7.

The zeta potential in the aqueous dispersion of composite particles after dialysis was measured, and it was found that the zeta potential at 25°C and at a pH of 8.0 was -50 mV and the phosphorus atom content in the composite particles was 0.010% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Comparative Example 1]

A reactor provided with a reflux condenser, a dropping tank, a thermometer and a stirring apparatus was charged with 250.0 g of the aqueous dispersion of polymer particles (A) in aforementioned [Synthesis Example 1], where the pH was adjusted to 9.5 by ammonia and thereafter the concentration thereof was adjusted to 40.0% by mass by addition of water, and the temperature was raised to 70°C.

Thereto was slowly added 30 g of Aqualon (registered trademark) KH-10 where the concentration thereof was adjusted to 10% by mass.

While the dispersion liquid in the reactor was kept at 70°C under a nitrogen atmosphere, 15 g of ammonium persulfate (aqueous 2% solution) was added.

After 5 minutes, 6.3 g of methyl methacrylate, 13.7 g of butyl acrylate, and a mixture of 0.67 g of Aqualon (registered trademark) KH-10 where the concentration thereof was adjusted to 15.0% by mass, with 20 g of ion exchange water were allowed to flow into the reactor over 30 minutes.

After completion of the flowing, the dispersion liquid in the reactor was further stirred at 70°C for 30 minutes.

Aqualon (registered trademark) KH-10 (2.67 g) where the concentration thereof was adjusted to 15% by mass, 16.0 g of methyl methacrylate, 8.0 g of cyclohexyl methacrylate, 52.0 g of butyl acrylate, 0.8 g of acrylamide and 3.2 g of ADK STAB (registered trademark) LA-82, and a mixture of Tinuvin (registered trademark) with 80 g of ion exchange water were allowed to flow into the reactor over 120 minutes, thereby providing a dispersion liquid.

Thereafter, the dispersion liquid was cooled to room temperature and filtrated by a 100-mesh wire cloth, thereby providing an aqueous dispersion of composite particles having a pH of 9.3, a solid content of 40.9% by mass, where the average particle size was 102 nm.

The zeta potential in the resulting aqueous dispersion of composite particles at 60°C was -45 mV at a pH of 9.3.

The zeta potential in the aqueous dispersion of composite particles after dialysis was measured, and it was found that the zeta potential at 25°C and at a pH of 7.8 was -42 mV and no phosphorus atom in the particle was detected.

The aqueous particle dispersion including the composite particles was subjected to the warm water resistance test and the weather resistance test. Stable admixing with titanium oxide for a pigment and acrylic latex without any coagulation could be made in formulation of a paint material for the weather resistance test.

[Comparative Example 2]

A reactor provided with a reflux condenser, a dropping tank, a thermometer and a stirring apparatus was charged with 250.0 g of an aqueous dispersion (pH: 2.1) of polymer particles (A) in aforementioned [Synthesis Example 1] where the concentration thereof was adjusted to 40.0% by mass, and the temperature was raised to 70°C.

Thereto was slowly added 30 g of Aqualon (registered trademark) KH-10 where the concentration thereof was adjusted to 10% by mass.

While the dispersion liquid in the reactor was kept at 70°C under a nitrogen atmosphere, 15 g of ammonium persulfate (aqueous 2% solution) was added.

After 5 minutes, 5.8 g of methyl methacrylate, 12.2 g of butyl acrylate, 2.0 g of PPME, and a mixture of 0.67 g of Aqualon (registered trademark) KH-10 where the concentration thereof was adjusted to 15.0% by mass, with 20 g of ion exchange water were allowed to flow into the reactor over 30 minutes.

After completion of the flowing, the dispersion liquid in the reactor was further stirred at 70°C for 60 minutes.

Subsequently, 15 g of ammonium persulfate (aqueous 2% solution), 2.67 g of Aqualon (registered trademark) KH-10 where the concentration thereof was adjusted to 15% by mass, 14.8 g of methyl methacrylate, 12.0 g of cyclohexyl methacrylate, 52.0 g of butyl acrylate, 0.8 g of acrylamide and 0.4 g of PPME, and a mixture with 80 g of ion exchange water were allowed to flow into the reactor over 120 minutes.

Thereafter, the dispersion liquid was cooled to room temperature and filtrated by a 100-mesh wire cloth, thereby providing an aqueous dispersion of composite particles having a pH of 8.8, a solid content of 40.4% by mass, where the average particle size was 121 nm.

The zeta potential in the resulting aqueous dispersion of composite particles at 60°C was -35 mV at a pH of 8.8.

The zeta potential in the aqueous dispersion of composite particles after dialysis was measured, and it was found that the zeta potential at 25°C and at a pH of 8.0 was -45 mV and the phosphorus atom in the particle was at a proportion of 0.131% by mass.

The aqueous dispersion of composite particles including the composite particles was subjected to the warm water resistance test and the weather resistance test. Stable admixing with titanium oxide for a pigment and acrylic latex without any coagulation could be made in formulation of a paint material for the weather resistance test.

[Comparative Example 3]

A reactor with a reflux condenser, a dropping tank, a thermometer and a stirring apparatus was charged with 200.0 g of Snowtex (registered trademark) ST-50 where the pH was adjusted to 10.0 by NaOH and the concentration thereof was adjusted to 50.0% by mass, and the temperature was raised to 60°C.

Thereto was slowly added 30 g of AEROSOL (registered trademark) OT-75 where the concentration thereof was adjusted to 10% by mass.

While the dispersion liquid in the reactor was kept at 70°C under a nitrogen atmosphere, 15 g of ammonium persulfate (aqueous 2% solution) was added.

After 5 minutes, 6.5 g of methyl methacrylate, 12.8 g of butyl acrylate, 0.3 g of PPME, and a mixture of 0.67 g of Neopelex (registered trademark) G-15 where the concentration thereof was adjusted to 15.0% by mass, with 20 g of ion exchange water were allowed to flow into the reactor over 30 minutes.

After completion of the flowing, the dispersion liquid in the reactor was further stirred at 70°C for 60 minutes.

Subsequently, 15 g of ammonium persulfate (aqueous 2% solution) was added, and, after 5 minutes, 3.33 g of Aqualon (registered trademark) KH-10 where the concentration thereof was adjusted to 15% by mass, 45.0 g of butyl methacrylate, 36.0 g of cyclohexyl methacrylate, 18.0 g of butyl acrylate and 1.0 g of PPME, and a mixture with 80 g of ion exchange water were allowed to flow into the reactor over 120 minutes, thereby providing a dispersion liquid.

Thereafter, the dispersion liquid was cooled to room temperature and filtrated by a 100-mesh wire cloth, thereby providing an aqueous dispersion of composite particles including composite particles having an average particle size of 78 nm, having a pH of 9.5 and a solid content of 47.7% by mass. A coagulate was less generated and a deposit was also less attached to the reaction vessel.

The zeta potential in the resulting aqueous dispersion of composite particles at 60°C was -78 mV at a pH of 9.5.

The zeta potential in the aqueous dispersion of composite particles after dialysis was measured, and it was found that the zeta potential at 25°C and at a pH of 8.3 was -41 mV and the phosphorus atom content in the composite particles was 0.065% by mass.

The aqueous dispersion of composite particles including the composite particles was subjected to the warm water resistance test and the weather resistance test. Stable admixing with titanium oxide for a pigment and acrylic latex could not be made in formation of a paint material for the weather resistance test because coagulation therewith was caused.

[Table 1] below shows "Phosphorus atom content (% by mass) based on total mass of composite particles", "Zeta potential of composite particles in aqueous dispersion of composite particles at 60°C", "Zeta potential of composite particles in aqueous dispersion of composite particles at 25°C", "Presence of polymer (B-1) having 0.1 to 5.0% by mass of weakly acidic monomer unit derived from ethylenically unsaturated monomer having phosphoric acid group, based on amount of entire monomer in formation step of polymer (B-1) having weakly acidic monomer unit derived from monomer having phosphoric acid group", "Presence of polymer (B-2) having 0.05 to 50% by mass of basic monomer unit derived from ethylenically unsaturated monomer having nitrogen functional group, based on amount of entire monomer in formation step of polymer (B-2) having basic monomer unit derived from ethylenically unsaturated monomer having nitrogen functional group", "Mass ratio of polymer (B-2)/polymer (B-1)" and "Mass ratio of polymer layer (B)/particle (A)" in each aqueous dispersion of composite particles of [Examples 1 to 13] and [Comparative Examples 1 to 3], and also shows evaluation of "Warm water resistance" and "Weather resistance$\Delta b$", and "Weather resistance modification value: $|\Delta b_0 - \Delta b|/(\Delta b_0 + \Delta b)$".

[Table 1]

| | Phosphorus atom content (% by mass) based on total mass of composite particles | Zeta potential of composite particles (60°C) (mV) | pH Value in measurement | Zeta potential of composite particles (25°C) (mV) after dialysis | pH Value in measurement | Presence of polymer (B-1) | Presence of polymer (B-2) | (B-2)/(B-1) | Polymer layer (B)/particle (A) | Warm water resistance | Weather resistance $\Delta b$ | $|\Delta b_0 - \Delta b| / (\Delta b_0 + \Delta b)$ |
|---|---|---|---|---|---|---|---|---|---|---|---|---|
| Example 1 | 0.013 | -42 | 8.9 | -38 | 7.8 | Presence | Presence | 5 | 0.96/1 | A | 0.32 | 0.71 |
| Example 2 | 0.024 | -40 | 9.1 | -36 | 7.9 | Presence | Presence | 4 | 1.2/1 | A | 0.41 | 0.65 |
| Example 3 | 0.006 | -42 | 9.2 | -34 | 8.0 | Presence | Presence | 4 | 1.25/1 | A | 0.35 | 0.69 |
| Example 4 | 0.011 | -45 | 9.2 | -34 | 8.2 | Presence | Presence | 4 | 1/1 | A | 0.32 | 0.71 |
| Example 5 | 0.018 | -51 | 9.2 | -42 | 7.9 | Presence | Presence | 4 | 1.25/1 | A | 0.44 | 0.62 |
| Example 6 | 0.006 | -47 | 8.9 | -44 | 7.8 | Presence | Presence | 4 | 1/1 | A | 0.34 | 0.70 |
| Example 7 | 0.008 | -36 | 9.1 | -36 | 8.0 | Presence | Presence | 5 | 1.2/1 | A | 0.37 | 0.67 |
| Example 8 | 0.030 | -53 | 8.8 | -42 | 8.0 | Presence | Presence | 5 | 1.2/1 | A | 0.34 | 0.70 |
| Example 9 | 0.010 | -58 | 8.7 | -48 | 8.1 | Presence | Presence | 4 | 1/1.1 | A | 1.04 | 0.29 |
| Example 10 | 0.014 | -61 | 8.8 | -35 | 8.1 | Presence | Presence | 4 | 0.8/1 | A | 0.42 | 0.64 |
| Example 11 | 0.024 | -59 | 9.1 | -51 | 7.7 | Presence | Presence | 4 | 1.2/1 | A | 1.02 | 0.30 |
| Example 12 | 0.051 | -65 | 8.7 | -55 | 7.9 | Presence | Presence | 4 | 1/1.1 | A | 0.42 | 0.64 |
| Example 13 | 0.010 | -59 | 8.7 | -50 | 8.0 | Presence | Presence | 4 | 1/1.1 | A | 1.36 | 0.18 |
| Comparative Example 1 | 0.000 | -45 | 9.3 | -42 | 7.8 | Presence | Presence | 4 | 1/1 | C | 1.57 | 0.10 |
| Comparative Example 2 | 0.131 | -35 | 8.8 | -45 | 8.0 | Presence | Presence | 4 | 1/1 | C | 1.41 | 0.148 |
| Comparative Example 3 | 0.065 | -78 | 9.5 | -41 | 8.3 | Presence | Presence | 5 | 1.2/1 | B | coagulation in formulation | - |

EP 3 708 625 A1

According to Examples 1 to 13, each coating film excellent in water resistance could be formed, and each aqueous dispersion of composite particles excellent in compatible stability with an inorganic pigment particle was obtained.

In particular, excellent weather resistance could be imparted to each coating film in Examples 1 to 8, 10 and 12 where the ethylenically unsaturated monomer having a nitrogen functional group was copolymerized.

[Examples 14 to 21] and [Comparative Examples 4 to 8]

Hereinafter, each particle (A) applied in Examples 14 to 21 and Comparative Examples 4 to 8 will be described.

[Synthesis Example 2 (Synthesis of polymer particle (A))]

A reaction vessel equipped with a stirrer, a reflux condenser, a dropping tank and a thermometer was charged with 500 g of water and 40 g of Aqualon (registered trademark) KH-10 ammonium (polyoxyethylene-1-(alkyloxymethyl)alkyl ether sulfate, manufactured by DKS Co. Ltd.) where the concentration thereof was adjusted to 15% by mass, the temperature in the reaction vessel was raised to 78°C under a nitrogen atmosphere, and then 15 g of an aqueous 2% ammonium persulfate solution was added.

After 5 minutes, a mixture of 185 g of methyl methacrylate, 300 g of cyclohexyl methacrylate, 209 g of butyl methacrylate, 250 g of 2-ethylhexyl acrylate, 50 g of 2-hydroxyethyl methacrylate, 4 g of methacrylic acid, 1.9 g of acrylic acid, 0.1 g of PPME, and 5 g of sodium p-styrenesulfonate, and, 66.7 g of Aqualon (registered trademark) KH-10 where the concentration thereof was adjusted to 15% by mass, with 50 g of an aqueous 2% ammonium persulfate solution and 700 g of ion exchange water was allowed to flow into a reactor over 180 minutes.

The temperature in the reactor was kept at 80°C during the flowing.

After completion of the flowing, the dispersion liquid in the reactor was kept at 80°C for 60 minutes, and thereafter cooled to room temperature, and the hydrogen ion concentration was then measured and was found to be a pH of 2.1.

The solid content concentration in the aqueous dispersion, of the resulting polymer particles, was 43.0% by mass, and the average particle size thereof was 96 nm.

[Other particle (A)]

Adelite (registered trademark) AT-50 (manufactured by Adeka Corporation) was adjusted to have a concentration of 50.0% by mass, by ion exchange water.

Snowtex (registered trademark) ST-N-40 (manufactured by Nissan Chemical Corporation) was adjusted to have a pH of 9.5 and a concentration of 40.0% by mass, by ammonia water.

Hereinafter, the mass rate of each raw material in Examples 14 to 21 and Comparative Example 4 to 8 will be described in Table 2 below.

[Examples 14 to 18]

A reactor provided with a reflux condenser, a dropping tank, a thermometer and a stirring apparatus was charged with particle (A) with metering, where the pH was adjusted to a predetermined basic pH (a pH of 9.5 in Examples 14, 15, 17 by ammonia water and 18 and a pH of 10.1 in Example 16) and the concentration thereof was adjusted to a predetermined concentration (40.0% by mass in Examples 14, 15, 17, 18, 20 and 21, and 50.0% by mass in Example 16), and the temperature was raised to 60°C.

Thereto was slowly added a predetermined amount of the surfactant initially added, where the concentration thereof was adjusted to 10% by mass.

After the mixture in the reactor was heated to 70°C under a nitrogen atmosphere, 15 g of ammonium persulfate (aqueous 2% solution) was added.

After 5 minutes, a monomer mixture forming polymer (B-3), a surfactant simultaneously introduced with the monomer of (B-3) where the concentration thereof was adjusted to 15% by mass, and 20 g of ion exchange water were emulsified and mixed in a homogenizer, and the mixture was allowed to flow into the reactor over 90 minutes.

After completion of the flowing, the latex in the reactor was further stirred at 70°C for 30 minutes.

Next, a monomer mixture forming polymer (B-4), an ultraviolet absorber, Aqualon (registered trademark) KH-10 where the concentration thereof was adjusted to 15% by mass, 8 g of ammonium persulfate (aqueous 2% solution) and 80 g of ion exchange water were emulsified and mixed in a homogenizer, and the mixture was allowed to flow into the reactor over 120 minutes, thereby providing a dispersion.

Thereafter, the dispersion was cooled to room temperature and filtrated by a 100-mesh wire cloth, the solid content and the average particle size were measured, and the state of attachment of a deposit to the reaction vessel was visually confirmed.

The zeta potential in the resulting aqueous dispersion of composite particles at 60°C and the zeta potential in the aqueous dispersion of composite particles at 25°C after dialysis were measured.

The aqueous dispersion of composite particles including the composite particles was subjected to the warm water resistance test and the weather resistance test.

The state of admixing with titanium oxide for a pigment and acrylic latex in formulation of a paint material for the weather resistance test was confirmed, and favorable admixing was confirmed in Examples 14 to 18.

[Example 19]

A reactor provided with a reflux condenser, a dropping tank, a thermometer and a stirring apparatus was charged with particle (A) with metering, where the pH was adjusted to a pH of 6.8 and the concentration thereof was adjusted to a concentration of 40.0% by mass, and the temperature was raised to 60°C.

Thereto was slowly added a predetermined amount of the surfactant initially added, where the concentration thereof was adjusted to 10% by mass.

After the mixture in the reactor was heated to 70°C under a nitrogen atmosphere, 15 g of ammonium persulfate (aqueous 2% solution) was added.

After 5 minutes, a monomer mixture forming polymer (B-3), a surfactant simultaneously introduced with the monomer of (B-3) where the concentration thereof was adjusted to 15% by mass, 18 g of ion exchange water, and 4.0 g of ammonia water (25% by mass) were emulsified and mixed in a homogenizer, and the mixture was allowed to flow into the reactor over 90 minutes.

After completion of the flowing, the latex in the reactor was further stirred at 70°C for 30 minutes.

Next, a monomer mixture forming polymer (B-4), an ultraviolet absorber, Aqualon (registered trademark) KH-10 where the concentration thereof was adjusted to 15% by mass, 8 g of ammonium persulfate (aqueous 2% solution), 4 g of ammonia water (25% by mass) and 80 g of ion exchange water were emulsified and mixed in a homogenizer, and the mixture was allowed to flow into the reactor over 120 minutes, thereby providing a dispersion.

Thereafter, the dispersion was cooled to room temperature and filtrated by a 100-mesh wire cloth, the solid content and the average particle size were measured, and the state of attachment of a deposit to the reaction vessel was visually confirmed.

The resulting aqueous dispersion of composite particles had a pH of 7.9, and the zeta potential at 60°C after the pH was adjusted to 8.5 by ammonia water and the zeta potential in the aqueous dispersion of composite particles at 25°C after dialysis were measured.

The aqueous dispersion of composite particles including the composite particles was subjected to the warm water resistance test and the weather resistance test.

The state of admixing with titanium oxide for a pigment and acrylic latex in formulation of a paint material for the weather resistance test was confirmed, and favorable admixing was confirmed in Example 19.

[Examples 20 and 21]

A reactor provided with a reflux condenser, a dropping tank, a thermometer and a stirring apparatus was charged with particle (A) with metering, where the pH was adjusted to a predetermined basic pH (a pH of 9.5 in Examples 20 and 21 by ammonia water) and the concentration thereof was adjusted to a predetermined concentration of 40.0% by mass, and the temperature was raised to 60°C.

Thereto was slowly added a predetermined amount of the surfactant initially added, where the concentration thereof was adjusted to 10% by mass.

After the mixture in the reactor was heated to 70°C under a nitrogen atmosphere, 15 g of ammonium persulfate (aqueous 2% solution) was added.

After 5 minutes, a monomer mixture forming polymer (B-3), a surfactant simultaneously introduced with the monomer of (B-3) where the concentration thereof was adjusted to 15% by mass, and 20 g of ion exchange water were emulsified and mixed in a homogenizer, and the mixture was allowed to flow into the reactor over 90 minutes.

After completion of the flowing, the latex in the reactor was further stirred at 70°C for 30 minutes.

Next, a monomer mixture forming polymer (B-5), a non-polymerizable light stabilizer, an ultraviolet absorber, Aqualon (registered trademark) KH-10 where the concentration thereof was adjusted to 15% by mass, 8 g of ammonium persulfate (aqueous 2% solution) and 80 g of ion exchange water were emulsified and mixed in a homogenizer, and the mixture was allowed to flow into the reactor over 120 minutes, thereby providing a dispersion.

Thereafter, the dispersion was cooled to room temperature and filtrated by a 100-mesh wire cloth, the solid content and the average particle size were measured, and the state of attachment of a deposit to the reaction vessel was visually confirmed.

The zeta potential in the resulting aqueous dispersion of composite particles at 60°C and the zeta potential in the aqueous dispersion of composite particles at 25°C after dialysis were measured.

The aqueous dispersion of composite particles including the composite particles was subjected to the warm water resistance test and the weather resistance test.

The state of admixing with titanium oxide for a pigment and acrylic latex in formulation of a paint material for the weather resistance test was confirmed, and favorable admixing was confirmed in Examples 20 and 21.

[Comparative Example 4] (Example where polymer (B-3) was synthesized under more acidic condition than pH of 6)

The mass rate of each raw material in Comparative Example 4 will be described in Table 2 below.

A reactor provided with a reflux condenser, a dropping tank, a thermometer and a stirring apparatus was charged with particle (A) with metering, where the concentration thereof was adjusted to 40% by mass with the pH being 2.1, and the temperature was raised to 60°C.

Thereto was slowly added a predetermined amount of the surfactant initially added, where the concentration thereof was adjusted to 10% by mass.

After the mixture in the reactor was heated to 70°C under a nitrogen atmosphere, 15 g of ammonium persulfate (aqueous 2% solution) was added.

After 5 minutes, a monomer mixture forming polymer (B-3), a surfactant simultaneously introduced with the monomer of (B-3) where the concentration thereof was adjusted to 15% by mass, and 20 g of ion exchange water were emulsified and mixed in a homogenizer, and the mixture was allowed to flow into the reactor over 90 minutes.

After completion of the flowing, the latex in the reactor was further stirred at 70°C for 30 minutes, and the pH thereof was adjusted to 9.0 by ammonia water.

Next, a monomer mixture forming polymer (B-4), an ultraviolet absorber, Aqualon (registered trademark) KH-10 where the concentration thereof was adjusted to 15% by mass, 8 g of ammonium persulfate (aqueous 2% solution) and 80 g of ion exchange water were emulsified and mixed in a homogenizer, and the mixture was allowed to flow into the reactor over 120 minutes, thereby providing a dispersion.

Thereafter, the dispersion was cooled to room temperature and filtrated by a 100-mesh wire cloth, the solid content and the average particle size were measured, and the state of attachment of a deposit to the reaction vessel was visually confirmed.

The zeta potential in the resulting aqueous dispersion of composite particles at 60°C and the zeta potential in the aqueous composite particle latex at 25°C after dialysis were measured.

The aqueous composite particle latex including the composite particles was subjected to the warm water resistance test and the weather resistance test.

The state of admixing with titanium oxide for a pigment and acrylic latex in formulation of a paint material for the weather resistance test was confirmed, and favorable admixing was confirmed.

[Comparative Example 5] (Example where no polymer (B-3) was synthesized and polymer (B-4) was synthesized)

The mass rate of each raw material in Comparative Example 5 will be described in Table 2 below.

A reactor provided with a reflux condenser, a dropping tank, a thermometer and a stirring apparatus was charged with particle (A) with metering, where the pH and the concentration thereof were adjusted to a predetermined basic pH and a predetermined concentration, and the temperature was raised to 60°C.

Thereto was slowly added a predetermined amount of the surfactant initially added, where the concentration thereof was adjusted to 10% by mass.

After the mixture in the reactor was heated to 70°C under a nitrogen atmosphere, 15 g of ammonium persulfate (aqueous 2% solution) was added.

After 5 minutes, a monomer mixture forming polymer (B-4), an ultraviolet absorber, Aqualon (registered trademark) KH-10 where the concentration thereof was adjusted to 15% by mass, 8 g of ammonium persulfate (aqueous 2% solution) and 80 g of ion exchange water were emulsified and mixed in a homogenizer, and the mixture was allowed to flow into the reactor over 150 minutes, thereby providing a dispersion.

Thereafter, the dispersion was cooled to room temperature and filtrated by a 100-mesh wire cloth, the solid content and the average particle size were measured, and the state of attachment of a deposit to the reaction vessel was visually confirmed.

The zeta potential in the resulting aqueous dispersion of composite particles at 60°C and the zeta potential in the aqueous dispersion of composite particles at 25°C after dialysis were measured.

The aqueous dispersion of composite particles including the composite particles was subjected to the warm water resistance test and the weather resistance test.

The state of admixing with titanium oxide for a pigment and acrylic latex in formulation of a paint material for the weather resistance test was confirmed and favorable admixing was confirmed, but the weather resistance test could not be performed because of inferior compatible stability of the dispersion with Texanol.

[Comparative Example 6] (Example where polymer (B-3) was synthesized under more acidic condition than pH 6, and amount of ethylenically unsaturated monomer having acidic group in (B-3) was not within the range)

The mass rate of each raw material in Comparative Example 6 will be described in Table 2 below.

A reactor provided with a reflux condenser, a dropping tank, a thermometer and a stirring apparatus was charged with particle (A) with metering, where the concentration thereof was adjusted to 40.0% by mass with the pH being 2.1, and the temperature was raised to 60°C.

Thereto was slowly added the surfactant initially added, where the concentration thereof was adjusted to 10% by mass, in an amount described in Table 2 below.

After the mixture in the reactor was heated to 70°C under a nitrogen atmosphere, 15 g of ammonium persulfate (aqueous 2% solution) was added.

After 5 minutes, a monomer mixture forming polymer (B-3), a surfactant simultaneously introduced with the monomer of (B-3) where the concentration thereof was adjusted to 15% by mass, and 20 g of ion exchange water were emulsified and mixed in a homogenizer, and the mixture was allowed to flow into the reactor over 90 minutes.

After completion of the flowing, the dispersion in the reactor was further stirred at 70°C for 30 minutes, and the pH thereof was adjusted to 9.0 by ammonia water.

Next, a monomer mixture forming polymer (B-4), an ultraviolet absorber, Aqualon (registered trademark) KH-10 where the concentration thereof was adjusted to 15% by mass, 8 g of ammonium persulfate (aqueous 2% solution) and 80 g of ion exchange water were emulsified and mixed in a homogenizer, and the mixture was allowed to flow into the reactor over 120 minutes, thereby providing a dispersion.

Thereafter, the dispersion was cooled to room temperature and filtrated by a 100-mesh wire cloth, the solid content and the average particle size were measured, and the state of attachment of a deposit to the reaction vessel was visually confirmed.

The zeta potential in the resulting aqueous dispersion of composite particles at 60°C and the zeta potential in the aqueous dispersion of composite particles at 25°C after dialysis were measured.

The aqueous dispersion of composite particles including the composite particles was subjected to the warm water resistance test and the weather resistance test.

The state of admixing with titanium oxide for a pigment and acrylic latex in formulation of a paint material for the weather resistance test was confirmed, and favorable admixing was confirmed.

[Comparative Example 7] (Example where ethylenically unsaturated monomer unit hydrolyzable silane group was used before synthesis of polymer (B-3) and during synthesis of polymer (B-4))

The mass rate of each raw material in Comparative Example 7 will be described in Table 2 below.

A reactor provided with a reflux condenser, a dropping tank, a thermometer and a stirring apparatus was charged with particle (A) with metering, where the pH was adjusted to a predetermined basic pH (pH: 10.1) and the concentration thereof was adjusted to a predetermined concentration (40.0% by mass), and the temperature was raised to 60°C.

Thereto were slowly added a predetermined amount of the surfactant initially added, where the concentration thereof was adjusted to 10% by mass, and 0.08 parts by mass of $\gamma$-methacryloxypropyltrimethoxysilane.

After the mixture in the reactor was heated to 70°C under a nitrogen atmosphere and kept for 1 hour, 15 g of ammonium persulfate (aqueous 2% solution) was added.

After 5 minutes, a monomer mixture forming polymer (B-3), a surfactant simultaneously introduced with the monomer of (B-3) where the concentration thereof was adjusted to 15% by mass, and 20 g of ion exchange water were emulsified and mixed in a homogenizer, and the mixture was allowed to flow into the reactor over 90 minutes.

After completion of the flowing, the latex in the reactor was further stirred at 70°C for 30 minutes.

Next, a monomer mixture forming polymer (B-4), an ultraviolet absorber, Aqualon (registered trademark) KH-10 where the concentration thereof was adjusted to 15% by mass, 8 g of ammonium persulfate (aqueous 2% solution) and 80 g of ion exchange water were emulsified and mixed in a homogenizer, and the mixture was allowed to flow into the reactor over 120 minutes, thereby providing a dispersion, and a large amount of a coagulate was generated.

Thereafter, the dispersion was cooled to room temperature and tried to be filtrated by a 100-mesh wire cloth, but could not be filtrated.

[Comparative Example 8] (Example where composition of (B-3) and composition of (B-4) were overlapped to result in substantial no effect of (B-4))

The mass rate of each raw material in Comparative Example 8 will be described in Table 2 below.

A reactor provided with a reflux condenser, a dropping tank, a thermometer and a stirring apparatus was charged with particle (A) with metering, where the pH and the concentration thereof were adjusted to a predetermined basic pH and a predetermined concentration (a pH of 9.5 by ammonia water and a concentration of 40.0% by mass), and the temperature was raised to, 60°C.

Thereto was slowly added a predetermined amount of the surfactant initially added, where the concentration thereof was adjusted to 10% by mass.

After the mixture in the reactor was heated to 70°C under a nitrogen atmosphere, 15 g of ammonium persulfate (aqueous 2% solution) was added.

After 5 minutes, a monomer mixture forming polymer (B-3), a surfactant simultaneously introduced with the monomer of (B-3) where the concentration thereof was adjusted to 15% by mass, and 20 g of ion exchange water were emulsified and mixed in a homogenizer, and the mixture was allowed to flow into the reactor over 90 minutes.

After completion of the flowing, the latex in the reactor was stirred at 70°C for 30 minutes.

Next, a monomer mixture forming polymer (B-4), an ultraviolet absorber, Aqualon (registered trademark) where the concentration thereof was adjusted to 15% by mass, 8 g of ammonium persulfate (aqueous 2% solution) and 80 g of ion exchange water were emulsified and mixed in a homogenizer, and the mixture was allowed to flow into the reactor over 120 minutes, thereby providing a dispersion.

Thereafter, the dispersion was cooled to room temperature and filtrated by a 100-mesh wire cloth, the solid content and the average particle size were measured, and the state of attachment of a deposit to the reaction vessel was visually confirmed.

The zeta potential in the resulting aqueous dispersion of composite particles at 60°C and the zeta potential in the aqueous dispersion of composite particles at 25°C after dialysis were measured.

The aqueous dispersion of composite particles including the composite particles was subjected to the warm water resistance test and the weather resistance test.

The state of admixing with titanium oxide for a pigment and acrylic latex in formulation of a paint material for the weather resistance test was confirmed, and favorable admixing was confirmed.

[Table 2]

| Unit: part(s) by mass | | Example 14 | Example 15 | Example 16 | Example 17 | Example 18 | Example 19 | Example 20 | Example 21 | Comparative Example 4 | Comparative Example 5 | Comparative Example 6 | Comparative Example 7 | Comparative Example 8 |
|---|---|---|---|---|---|---|---|---|---|---|---|---|---|---|
| Particle (A) | Polymer particle of Synthesis Example 2 *Note 1 | 250.0 | 250.0 | - | 250.0 | - | 250.0 | 250.0 | 250.0 | 250.0 | 250.0 | *Note 4 250.0 | - | - |
| | Adelite AT-50 * Note 2 | - | - | 200.0 | - | - | - | - | - | - | - | - | 200.0 | - |
| | Snowtex ST-N-40 *Note 3 | - | - | - | - | 250.0 | - | - | - | - | - | - | - | 250.0 |

| | Unit: part(s) by mass | Example 14 | Example 15 | Example 16 | Example 17 | Example 18 | Example 19 | Example 20 | Example 21 | Comparative Example 4 | Comparative Example 5 | Comparative Example 6 | Comparative Example 7 | Comparative Example 8 |
|---|---|---|---|---|---|---|---|---|---|---|---|---|---|---|
| Surfactant initially added | Aqualon (registered trademark) KH-10 with concentration adjusted to 10% by mass | 30.0 | - | - | 30.0 | - | 30.0 | - | 30.0 | 30.0 | - | 30.0 | - | - |
| | Adeka Reasoap (registered trademark) SR-10 with concentration adjusted to 10% by mass | - | 30.0 | - | - | - | - | 30.0 | - | - | - | - | - | - |
| | Aerosol (registered trademark) OT-75 with concentration adjusted to 10% by mass | - | - | 30.0 | - | 30.0 | - | - | - | - | - | - | 30.0 | 30.0 |

| | Unit: part(s) by mass | Example 14 | Example 15 | Example 16 | Example 17 | Example 18 | Example 19 | Example 20 | Example 21 | Comparative Example 4 | Comparative Example 5 | Comparative Example 6 | Comparative Example 7 | Comparative Example 8 |
|---|---|---|---|---|---|---|---|---|---|---|---|---|---|---|
| Composition of monomer mixture forming polymer (B-3) | Methyl methacrylate | 4.0 | 4.0 | 6.0 | 6.0 | 4.0 | 4.0 | 4.0 | 4.0 | 4.0 | - | 4.0 | 4.0 | 6.0 |
| | Butyl acrylate | 9.9 | 9.6 | 13.9 | 13.9 | 9.5 | 9.9 | 9.6 | 9.9 | 9.9 | - | 8.8 | 9.6 | 13.8 |
| | Butyl methacrylate | 6.0 | 6.0 | - | - | - | 6.0 | 6.0 | 6.0 | 6.0 | - | 6.0 | 6.0 | - |
| | Methacrylic acid | 0.1 | - | - | 0.1 | 0.1 | 0.1 | - | 0.1 | 0.1 | - | - | 0.4 | 0.2 |
| | PPME (× methacryloyloxyethyl phosphate) | - | 0.4 | 0.1 | - | - | - | 0.4 | - | - | - | 1.2 | - | - |
| | γ-Methacryloxypropyltrimethoxysilane | - | 0.02 | - | 0.02 | 0.02 | - | 0.02 | - | - | - | - | - | - |

| | Unit: part(s) by mass | Example 14 | Example 15 | Example 16 | Example 17 | Example 18 | Example 19 | Example 20 | Example 21 | Comparative Example 4 | Comparative Example 5 | Comparative Example 6 | Comparative Example 7 | Comparative Example 8 |
|---|---|---|---|---|---|---|---|---|---|---|---|---|---|---|
| Surfactant simultaneously introduced with monomer of (B-3) | Aqualon (registered trademark) KH-10 with concentration adjusted to 15% by mass | 0.7 | 0.7 | - | 0.7 | - | 0.7 | 0.7 | 0.7 | 0.7 | - | 0.7 | - | - |
| | Neopelex (registered trademark) G-15 with concentration adjusted to 15% by mass | - | - | 0.7 | - | 0.7 | - | - | - | - | - | - | 0.7 | 0.7 |

| Composition of monomer mixture forming polymer (B-4) or (B-5) | Unit: part(s) by mass | Example 14 | Example 15 | Example 16 | Example 17 | Example 18 | Example 19 | Example 20 | Example 21 | Comparative Example 4 | Comparative Example 5 | Comparative Example 6 | Comparative Example 7 | Comparative Example 8 |
|---|---|---|---|---|---|---|---|---|---|---|---|---|---|---|
| | Methyl methacrylate | 16.0 | 32.0 | 9.2 | 12.0 | 16.0 | 16.0 | 32.0 | 16.0 | 16.0 | 20.0 | 16.0 | 16.0 | 24.0 |
| | Cyclohexyl methacrylate | 16.0 | - | 24.0 | 24.0 | 16.0 | 16.0 | - | 16.0 | 16.0 | 20.0 | 16.0 | 16.0 | - |
| | Butyl acrylate | 43.2 | 43.2 | - | - | 43.2 | 43.2 | 43.2 | 43.2 | 43.2 | 55.0 | 44.0 | 43.1 | 55.2 |
| | 2-Ethylhexyl acrylate | - | - | 39.6 | 40.0 | - | - | - | - | - | - | - | - | - |
| | Acrylamide | 0.8 | 0.8 | 1.2 | - | 0.8 | 0.8 | 0.8 | 0.8 | 0.8 | 1.0 | - | 0.8 | - |
| | ADK STAB (registered trademark) LA-82 | 4.0 | 4.0 | 3.0 | - | 4.0 | 4.0 | - | - | 4.0 | 4.0 | 4.0 | 4.0 | - |
| | ADK STAB (registered trademark) LA-87 | - | - | 3.0 | 4.0 | - | - | - | - | - | - | - | - | - |
| | PPME | - | - | 0.01 | - | - | - | - | - | - | - | - | - | - |
| | Methacrylic acid | - | - | - | - | - | - | - | - | - | - | - | - | 0.8 |
| | $\gamma$-Methacryloxypropyltrimethoxysilane | - | - | - | - | - | - | - | - | - | - | - | 0.08 | - |

EP 3 708 625 A1

56

| | Unit: part(s) by mass | Example 14 | Example 15 | Example 16 | Example 17 | Example 18 | Example 19 | Example 20 | Example 21 | Comparative Example 4 | Comparative Example 5 | Comparative Example 6 | Comparative Example 7 | Comparative Example 8 |
|---|---|---|---|---|---|---|---|---|---|---|---|---|---|---|
| Ultraviolet absorber (B-4) | Tinuvin (registered trademark) 384-2 | 0.8 | 0.8 | 0.8 | - | 0.8 | 0.8 | 0.8 | 0.8 | - | 0.8 | - | 0.8 | - |
| | Tinuvin (registered trademark) 400 | - | - | - | 0.8 | - | - | - | - | - | - | - | - | - |
| Non-copolymerizable light stabilizer (B-4) | Tinuvin (registered trademark) 292 | - | - | - | - | - | - | 4.0 | 4.0 | - | - | - | - | - |

The description of (*Note) in Table 2 is shown in Table 3 below.

[Table 3]

*Note 1: Polymer particle: aqueous dispersion of polymer particles in [Synthesis Example 2], adjusted by ammonia so as to have pH of 9.5 and concentration of 40.0% by mass, in Examples 14, 15, 17, 20 and 21, and Comparative Examples 4 and 5, and aqueous dispersion of polymer particles in [Synthesis Example 2], adjusted by ammonia so as to have pH of 6.8 and concentration of 40.0% by mass, in Example 19

*Note 2: Adelite AT-50 for use in Example 16 and Comparative Example 7, adjusted by ion exchange water so as to have concentration 50.0% by mass

*Note 3: Snowtex N-40 adjusted by ammonia so as to have pH of 9.5 and concentration of 40.0% by mass

*Note 4: particle (A) adjusted so as to have concentration of 40.0% by mass with pH being 2.1

[Table 4]

| | Example 14 | Example 15 | Example 16 | Example 17 | Example 18 | Example 19 | Example 20 | Example 21 | Comparative Example 4 | Comparative Example 5 | Comparative Example 6 | Comparative Example 7 | Comparative Example 8 |
|---|---|---|---|---|---|---|---|---|---|---|---|---|---|
| Dispersing stability in synthesis | G | G | G | G | G | G | G | G | G | G | G | B | G |
| Average particle size (nm) | 121 | 123 | 65 | 131 | 60 | 118 | 123 | 121 | 101 | 103 | 132 | - | 49 |
| Evaluation of synthetic particle | A | A | A | A | A | A | A | A | C | C | C | - | C |
| Solid content (% by mass) | 40.3 | 40.4 | 44.6 | 40.2 | 40.3 | 40.3 | 40.4 | 40.3 | 40.3 | 44.0 | 40.3 | - | 40.2 |
| Zeta potential (mV) at 60°C | -42 | -45 | -69 | -52 | -58 | -45 | -40 | -45 | -53 | -57 | -48 | - | -59 |
| pH in measurement | 9.0 | 9.1 | 7.8 | 8.7 | 8.9 | 8.6 | 8.6 | 8.4 | 8.7 | 8.6 | 8.7 | - | 8.5 |
| Zeta potential (at 25°C) (mV) after dialysis | -35 | -34 | -65 | -44 | -42 | -37 | -39 | -40 | -41 | -42 | -41 | - | -43 |
| pH in measurement | 7.8 | 8.0 | 8.1 | 7.9 | 8.2 | 7.9 | 8.0 | 8.0 | 8.0 | 8.0 | 8.2 | - | 8.1 |
| Warm water resistance | A | A | A | A | A | A | A | A | C | C | C | - | C |
| Weather resistance $\Delta b$ | 0.39 | 0.42 | 0.72 | 0.29 | 0.35 | 0.42 | 0.75 | 0.78 | 1.42 | coagulation in formulation | 1.51 | - | 1.45 |
| $\lvert\Delta b0-\Delta b\rvert/(\Delta b0+\Delta b)$ | 0.66 | 0.64 | 0.45 | 0.74 | 0.69 | 0.64 | 0.43 | 0.42 | 0.14 | - | 0.11 | - | 0.13 |
| Analysis of phosphorus atom | 0.000% | 0.025% | 0.006% | 0.000% | 0.000% | 0.000% | 0.025% | 0.000% | 0.000% | 0.000% | 0.000% | - | 0.000% |

According to each of Examples 14 to 21 in the present invention, a coating film favorable in dispersing stability in production and excellent in water resistance could be formed, a aqueous dispersion of composite particles excellent in compatible stability was also obtained, and furthermore an aqueous dispersion of composite particles enabling weather resistance to be imparted to a coating film was obtained by copolymerization of an ethylenically unsaturated monomer having a nitrogen functional group.

The present application is based on Japanese Patent Application (Japanese Patent Application No. 2016-155812) filed with JPO on August 8, 2016 and Japanese Patent Application (Japanese Patent Application No. 2016-240189) filed with JPO on December 12, 2016, the contents of which are herein incorporated as reference.

Industrial Applicability

The aqueous dispersion of composite particles of the present invention is industrially applicable in a photonic crystal, a paint material, a coating material, a paper surface treatment agent, a paper-processing agent, a fiber treatment agent, an adhesive, a conductive material, a battery material, a thermoplastic resin composition, a fine structure, an optical material, an antireflective material, and an optical lens.

**Claims**

1.  A method for producing an aqueous dispersion of composite particles, comprising a step of forming a polymer layer (B) on at least a part of a surface of a particle (A),
    wherein

    the aqueous dispersion of composite particles comprises composite particles where a polymer layer (B) is formed on at least a part of a surface of a particle (A),
    the particle (A) is an inorganic particle or a polymer particle,
    the polymer layer (B) comprises a polymer (B-3) having 0.01 to 5.0% by mass of an ethylenically unsaturated monomer unit having at least one acidic group, and
    the step of forming a polymer layer (B) comprises

    a step of forming the polymer (B-3) by emulsion polymerization in a state where an ethylenically unsaturated monomer having an acidic group is at least partially neutralized, in a dispersion liquid of the particle (A) whose pH is adjusted to 6 or more, and
    a step of, thereafter, forming a polymer (B-4) comprising 50 to 100% by mass of a nonionic ethylenically unsaturated monomer unit and 5.0% by mass or less of an ethylenically unsaturated monomer unit having an acidic group or a polymer (B-5) including a basic non-polymerizable monomer unit containing a non-polymerizable monomer having a nitrogen functional group, by emulsion polymerization in an aqueous medium.

2.  The method for producing an aqueous dispersion of composite particles according to claim 1, wherein the step of forming a polymer layer (B) comprises
    a step of forming, as the polymer (B-4), a polymer comprising 50 to 99.95% by mass of a nonionic ethylenically unsaturated monomer unit, 5.0% by mass or less of an ethylenically unsaturated monomer unit having an acidic group and 0.05 to 50% by mass of an ethylenically unsaturated monomer unit having a nitrogen functional group, by emulsion polymerization.

3.  The method for producing an aqueous dispersion of composite particles according to claim 1 or 2, wherein
    the polymer layer (B) comprises, as the polymer (B-3), a polymer obtained by emulsion polymerization of a monomer component having 2.0% by mass or less of an ethylenically unsaturated monomer having a hydrolyzable silane group and/or a monomer having a hydrolyzable silane group and a mercapto group, and
    a constituent component of the monomer of the polymer (B-3) is different from a constituent component of the monomer of the polymer (B-4).

4.  The method for producing an aqueous dispersion of composite particles according to any one of claims 1 to 3, wherein the polymer layer (B) comprises
    a polymer comprising 0.005 to 4.0% by mass of at least one ethylenically unsaturated monomer unit having an acidic group selected from the group consisting of an ethylenically unsaturated monomer having a carboxyl group, an ethylenically unsaturated monomer having a phosphoric acid group, and an ethylenically unsaturated monomer having a sulfonic acid group, based on a total mass of the composite particles.

5. The method for producing an aqueous dispersion of composite particles according to any one of claims 1 to 4, wherein

the method comprises a step of forming a polymer layer (B) on at least a part of a surface of the particle (A), and the step of forming a polymer layer (B) comprises
a step of performing emulsion polymerization by use of a monomer having a phosphoric acid group in a state where the phosphoric acid group is at least partially neutralized, in the presence of the particle (A), in a dispersion liquid of the particle (A) whose pH is adjusted to 6 or more.

6. The method for producing an aqueous dispersion of composite particles according to any one of claims 1 to 5, wherein the polymer layer (B) comprises
a polymer comprising 0.001 to less than 1.0% by mass of the ethylenically unsaturated monomer unit having an acidic group consisting of an ethylenically unsaturated monomer having a phosphoric acid group, based on a total mass of the composite particles.

7. The method for producing an aqueous dispersion of composite particles according to any one of claims 1 to 6, wherein a mass ratio of the polymer (B-4)/the polymer (B-3) is 0.01 to 50.

8. The method for producing an aqueous dispersion of composite particles according to any one of claims 1 to 7, wherein a mass ratio of the polymer layer (B)/the particle (A) is 0.01 to 100.

Europäisches
Patentamt

European
Patent Office

Office européen
des brevets

# EUROPEAN SEARCH REPORT

Application Number

EP 20 16 4425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 031 837 A1 (DOW GLOBAL TECHNOLOGIES LLC [US]; ROHM & HAAS [US]) 15 June 2016 (2016-06-15) * paragraph [0004] - paragraph [0007] * * abstract; claims 1, 7-13; examples 1-5; tables 1-3 * | 1-8 | INV. C09D201/00 C08F2/22 C09D5/02 C09D133/00 C09D157/04 C09D157/06 |
| X | WO 2010/096867 A1 (UNIV SYDNEY [AU]; HAWKETT BRIAN STANLEY [AU] ET AL.) 2 September 2010 (2010-09-02) * page 3, line 24 - page 7, line 13 * * abstract; claims 1-3, 15-18; examples 1-8 * | 1-8 | |
| X | DE 10 2008 023444 A1 (BASF COATINGS AG [DE]) 19 November 2009 (2009-11-19) * paragraph [0010] - paragraph [0015] * * paragraph [0018] - paragraph [0023] * * abstract; claims 1-8, 11-15; examples 1-7; tables 1-5 * | 1-8 | |

TECHNICAL FIELDS
SEARCHED (IPC)

C09D

The present search report has been drawn up for all claims

| Place of search | Date of completion of the search | Examiner |
|---|---|---|
| Munich | 25 June 2020 | Glomm, Bernhard |

## ANNEX TO THE EUROPEAN SEARCH REPORT
## ON EUROPEAN PATENT APPLICATION NO.

EP 20 16 4425

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2020

| Patent document cited in search report | | Publication date | Patent family member(s) | | Publication date |
|---|---|---|---|---|---|
| EP 3031837 | A1 | 15-06-2016 | AU 2015258255 A1 | | 16-06-2016 |
| | | | BR 102015029008 A2 | | 27-09-2016 |
| | | | CA 2912294 A1 | | 01-06-2016 |
| | | | CN 105646759 A | | 08-06-2016 |
| | | | EP 3031837 A1 | | 15-06-2016 |
| | | | KR 20160065744 A | | 09-06-2016 |
| | | | US 2016152854 A1 | | 02-06-2016 |
| WO 2010096867 | A1 | 02-09-2010 | AU 2010217189 A1 | | 08-09-2011 |
| | | | CN 102439049 A | | 02-05-2012 |
| | | | EP 2401304 A1 | | 04-01-2012 |
| | | | US 2012128743 A1 | | 24-05-2012 |
| | | | WO 2010096867 A1 | | 02-09-2010 |
| | | | ZA 201106237 B | | 31-10-2012 |
| DE 102008023444 A1 | | 19-11-2009 | CN 102027076 A | | 20-04-2011 |
| | | | DE 102008023444 A1 | | 19-11-2009 |
| | | | EP 2283088 A1 | | 16-02-2011 |
| | | | JP 5661030 B2 | | 28-01-2015 |
| | | | JP 2011521031 A | | 21-07-2011 |
| | | | KR 20110018358 A | | 23-02-2011 |
| | | | US 2011266155 A1 | | 03-11-2011 |
| | | | WO 2009138222 A1 | | 19-11-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4792052 B
- JP 5837961 B
- JP 3215329 B
- JP 5919131 B
- JP 2007246800 A
- WO 2003506545 A
- JP 2998604 B
- JP 2016155812 A
- JP 2016240189 A